(19) Europäisches Patentamt
European Patent Office
Office européen des brevets

(11) EP 4 593 248 A1

(12) # EUROPEAN PATENT APPLICATION
published in accordance with Art. 153(4) EPC

(43) Date of publication:
**30.07.2025 Bulletin 2025/31**

(21) Application number: **23867896.5**

(22) Date of filing: **28.07.2023**

(51) International Patent Classification (IPC):
***H02J 50/10** (2016.01)* ***H02J 50/80** (2016.01)*

(52) Cooperative Patent Classification (CPC):
**H02J 50/10; H02J 50/80**

(86) International application number:
**PCT/JP2023/027832**

(87) International publication number:
**WO 2024/062770 (28.03.2024 Gazette 2024/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.09.2022 JP 2022150646**

(71) Applicant: **CANON KABUSHIKI KAISHA**
**Tokyo 146-8501 (JP)**

(72) Inventor: **SHIMURA, Hajime**
**Tokyo 146-8501 (JP)**

(74) Representative: **Canon Europe Limited**
**European Intellectual Property Group**
**4 Roundwood Avenue**
**Stockley Park**
**Uxbridge UB11 1AF (GB)**

(54) **POWER TRANSMISSION DEVICE, CONTROL METHOD FOR POWER TRANSMISSION DEVICE, AND STORAGE MEDIUM**

(57) A power transmission device 100, which wirelessly transmits power to a power reception device 200, detects an object by transmitting an analog ping. The power transmission device 100 transmits a digital ping and the power reception device 200 is activated to perform communication. The power transmission device 100 determines the strength of electromagnetic coupling between a power transmission antenna and a power reception antenna using a plurality of analog pings or digital pings having different conditions. When it is recognized that the electromagnetic coupling between the two antennas is weak, the power transmission device 100 performs control for suppressing noise leaking from the antenna to the surroundings, control for suppressing instability in communication between the power transmission device 100 and the power reception device 200; and control for suppressing deterioration in accuracy of detection of an object located between the power transmission device 100 and the power reception device 200.

FIG. 15A

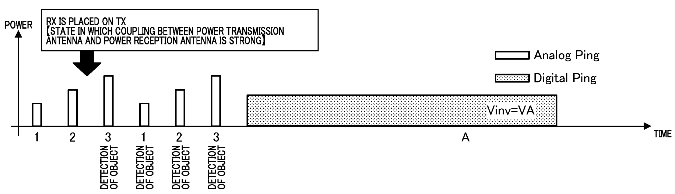


FIG. 15B

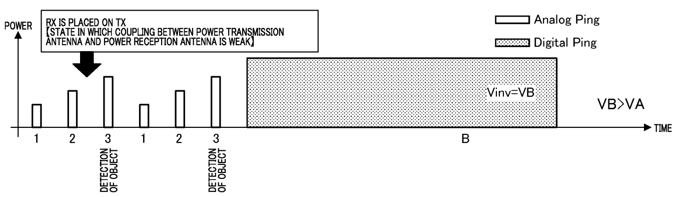


EP 4 593 248 A1

## Description

[Technical Field]

The present disclosure relates to a power transmission device for wireless power transmission, a control method for the power transmission device, a storage medium, and the like.

[Background Art]

In a wireless power transmission system, a power transmission device transmits power to a power reception device placed on a charging base or the like. In general, wireless power transmission is performed in a state in which a power transmission antenna provided in the power transmission device and the power reception antenna provided in the power reception device are directly facing each other. Patent Literature 1 discloses a process for detecting a foreign substance that has intruded between a power transmission coil and a power reception coil and a process for detecting a position shift between the power transmission coil and the power reception coil.

[Citation List]

[Patent Literature]

[Patent Literature 1] Japanese Unexamined Patent Publication No. 2017-38509

[Summary of Invention]

[Technical Problem]

**In** conventional technology, a method of performing appropriate control when electromagnetic coupling between a power transmission antenna and a power reception antenna is weak during wireless power transmission from a power transmission device to a power reception device is not established. Cases where the electromagnetic coupling between the power transmission antenna and the power reception antenna (hereinafter simply referred to as coupling) is weak include a case where the power reception antenna and the power transmission antenna are not directly facing each other, a case where a distance between the power reception antenna and the power transmission antenna is greater than or equal to a predetermined distance, and the like.

An objective of the present disclosure is to provide technology for enabling control corresponding to an electromagnetic coupling state between a power transmission antenna and a power reception antenna in wireless power transmission.

Solution to Problem

According to the present disclosure, there is provided a power transmission device including: a power transmission means configured to wirelessly transmit power to a power reception device via a power transmission antenna; a detection means configured to detect an object by outputting signals under a plurality of different conditions with the power transmission means; and a control means configured to control the power transmission means, wherein the control means changes a process of controlling the power transmission means when the detection means detects the power reception device and electromagnetic coupling between the power transmission antenna and a power reception antenna of the power reception device is weaker than electromagnetic coupling in a predetermined state.

[Advantageous Effects of Invention][

According to the present disclosure, technology for enabling control corresponding to an electromagnetic coupling state between a power transmission antenna and a power reception antenna in wireless power transmission can be provided.

Brief Description of Drawings]

FIG. 1 is a diagram showing an example of a configuration of a wireless power transmission system.
FIG. 2 is a diagram showing an example of a configuration of a power transmission device.
FIG. 3 is a diagram showing an example of a configuration of a power reception device.
FIG. 4 is an explanatory diagram of a threshold setting method for state detection by a power loss method.
FIGS. 5(A) and 5(B) are explanatory diagrams of a Q-value measurement method.
FIG. 6 is a block diagram showing an example of a functional configuration of a control unit of the power transmission device.
FIG. 7 is an explanatory flowchart of a process of the power transmission device.
FIG. 8 is an explanatory flowchart of a process of the power reception device.
FIG. 9 is an explanatory diagram of state detection based on a waveform attenuation method.
FIG. 10 is a diagram showing an example of a process for performing wireless power transmission.
FIG. 11 is an explanatory diagram of a threshold setting method for the state detection based on the waveform attenuation method.
FIGS. 12(A) and 12(B) are explanatory diagrams of a coupling state index measurement method of a power transmission antenna and a power reception antenna.

FIG. 13 is an explanatory diagram of a threshold setting method for state detection based on the coupling state index measurement method.

FIGS. 14(A) to 14(D) are explanatory diagrams of coupling states of the power transmission antenna and the power reception antenna.

FIGS. 15(A) and 15(B) are explanatory diagrams of an example of ping transmission in a first embodiment.

FIG. 16 is an explanatory sequence diagram of an example of an operation according to the first embodiment.

FIG. 17 is an explanatory flowchart of a process of the power transmission device in the first embodiment.

FIGS. 18(A) and 18(B) are explanatory diagrams of another example of ping transmission in the first embodiment.

FIGS. 19(A) and 19(B) are explanatory diagrams of another example of ping transmission in the first embodiment.

FIG. 20 is an explanatory sequence diagram of an example of an operation in the first embodiment.

FIG. 21 is an explanatory flowchart of a process of the power transmission device in the first embodiment.

FIGS. 22(A) to 22(C) are explanatory diagrams of another example of ping transmission in the first embodiment.

FIG. 23 is an explanatory sequence diagram of an example of an operation in the first embodiment.

FIG. 24 is an explanatory flowchart of a process of the power transmission device in the first embodiment.

FIG. 25 is an explanatory flowchart of a process following FIG. 24.

FIG. 26 is an explanatory flowchart of a process in a first method of a second embodiment.

FIG. 27 is an explanatory flowchart of a process in a second method of the second embodiment.

FIG. 28 is an explanatory flowchart of a process in a third method of the second embodiment.

FIG. 29 is an explanatory flowchart of another example of the process in the third method of the second embodiment.

[Description of Embodiments]

Hereinafter, embodiments of the present disclosure will be described in detail with reference to the accompanying drawings. In the embodiment, a wireless charging system to which a wireless power transmission system is applied will be described. As an example, wireless power transmission based on a standard formulated by a wireless charging standardization organization called Wireless Power Consortium (hereinafter referred to as a WPC standard) will be described.

[First Embodiment]

The present embodiment will be described with reference to FIGS. 1 to 25. FIG. 1 is a diagram showing an example of a configuration of a wireless charging system.

The system includes a power transmission device 100, a power reception device 200, and a charging base 300. Hereinafter, for the sake of brevity, the power reception device 200 may be referred to as an RX, and the power transmission device 100 may be referred to as a TX. Detailed configurations of the TX and the RX will be described below with reference to FIGS. 2 and 3.

The RX is an electronic device that receives power from the TX and charges a built-in battery in a state in which the RX is placed on the charging base 300. The TX is an electronic device that wirelessly transmits power to the RX placed on the charging base 300.

Because the charging base 300 constitutes a part of the TX, a state in which the RX is "placed on the charging base 300" may be a state in which the RX is "placed on the TX" hereinafter. A spatial range in which the RX can receive power from the TX is schematically shown in a range of a dotted line frame 400 in FIG. 1.

The RX and the TX may have a function of executing an application other than a wireless charging function. For example, the RX is a smartphone and the TX is an accessory device for charging the battery of the RX. However, the present disclosure is not limited to this example.

Next, an example of a configuration of the power transmission device 100 will be described with reference to FIG. 2. FIG. 2 is a functional block diagram showing an example of a configuration of the power transmission device 100 (the TX). The TX includes a control unit 101, a power supply unit 102, a power transmission unit 103, a first communication unit 104, a power transmission antenna (a power transmission coil) 105, a memory 106, a resonant capacitor 107, a switch unit 108, a second communication unit 109, and a user interface unit 110.

Hereinafter, a user interface is referred to as a UI. Although each functional block element is referred to as a separate entity in FIG. 2, any plurality of functional block elements may be implemented in the same chip.

The control unit 101 controls the entire TX by executing a control program stored in the memory 106. Moreover, the control unit 101 performs power transmission control including communication for device authentication in the TX.

Moreover, the control unit 101 can perform control for executing an application other than wireless power transmission. The control unit 101 is configured to include one or more processors such as a central processing unit (CPU) and a micro-processor unit (MPU).

Alternatively, the control unit 101 may include hardware such as an application-specific integrated circuit (ASIC).

Moreover, the control unit 101 may be configured to include an array circuit such as a field programmable gate array (FPGA) compiled to execute a predetermined process. The control unit 101 can execute a process of storing information to be stored in the memory 106 during the execution of various types of processes, or a time measurement process using a timer (not shown).

The power supply unit 102 supplies power to each functional block element. The power supply unit 102 includes, for example, a power supply connection circuit to a commercial power supply and a battery. The battery is charged with power supplied from a commercial power supply.

The power transmission unit 103 converts DC power or AC power input from the power supply unit 102 into AC power in a frequency band for use in wireless power transmission and inputs the AC power to the power transmission antenna 105, thereby generating electromagnetic waves for causing the RX to receive the power.

For example, the power transmission unit 103 includes an inverter and converts the DC voltage supplied by the power supply unit 102 into an AC voltage in a switching circuit having a half-bridge configuration or a full-bridge configuration. The power transmission unit 103 includes a plurality of field effect transistors (FETs) constituting a bridge and a gate driver configured to control ON/OFF of the plurality of FETs.

The power transmission unit 103 controls the strength of the electromagnetic waves to be output (transmission power) by adjusting a voltage (a power transmission voltage) or a current (a power transmission current) input to the power transmission antenna 105 or both. The strength of the electromagnetic waves (the strength of the transmission power) is controlled by a magnitude of the power transmission voltage or the power transmission current.

Alternatively, the power transmission unit 103 controls the strength (transmission power) of the electromagnetic waves to be output by adjusting a voltage or a current input to the inverter having the power transmission unit 103, or both.

A voltage input to this inverter is hereinafter referred to as an inverter input voltage. The current input to the inverter is hereinafter referred to as the inverter input current. The strength of the electromagnetic waves (the strength of the transmission power) is controlled by the magnitude of the inverter input voltage or the inverter input current.

Alternatively, the power transmission unit 103 controls the strength (transmission power) of the electromagnetic waves to be output by adjusting the voltage or current output from the inverter of the power transmission unit 103, or both. A voltage output from this inverter is hereinafter referred to as an inverter output voltage.

Moreover, a current output from the inverter is hereinafter referred to as an inverter output current. The strength of electromagnetic waves (the strength of transmission power) is controlled by the magnitude of the inverter output voltage or inverter output current.

**In** the power transmission unit 103, on the basis of an instruction signal from the control unit 101, the power transmission unit 103 starts or stops power transmission by the power transmission antenna 105 or controls the output of the power of the electromagnetic waves of an AC frequency so that the strength of the electromagnetic waves to be output is controlled. Moreover, it is assumed that the power transmission unit 103 has power supply capability sufficient to output a power of 15 watts (W) to the charging unit (FIG. 3: 206) of the power reception device 200 corresponding to the WPC standard.

The first communication unit 104 is connected to the control unit 101 and the power transmission unit 103, and communicates with the RX for power transmission control based on the WPC standard. The first communication unit 104 performs frequency-shift modulation of the electromagnetic waves output from the power transmission antenna 105, transmits information to the RX, and performs communication.

Moreover, the first communication unit 104 demodulates the electromagnetic waves transmitted from the power transmission antenna 105 modulated by the RX and acquires information transmitted by the RX. Communication by the first communication unit 104 is performed by superimposing a communication signal on electromagnetic waves transmitted from the power transmission antenna 105.

In addition to the control program, the memory 106 can store information about states of the TX and the RX. Information about the states of the TX and the RX includes transmission power values, reception power values, and the like. Information about the state of the TX is acquired by the control unit 101. Information about the state of the RX can be acquired by the control unit of the RX (FIG. 3: 201) and received by the first communication unit 104 or the second communication unit 109 to be described below.

The switch unit 108 is connected in parallel to a series circuit of the resonant capacitor 107 and the power transmission antenna 105. The control unit 101 transmits a control signal to the switch unit 108 so that its ON/OFF control is performed.

The power transmission antenna 105 is connected to the resonant capacitor 107. When the switch unit 108 is turned on and short-circuited due to a control signal from the control unit 101, the power transmission antenna 105 and the resonant capacitor 107 form a series resonant circuit and resonate at a specific frequency fA.

At this time, a current flows through a closed circuit formed by the power transmission antenna 105, the resonant capacitor 107, and the switch unit 108. On the other hand, when the switch unit 108 is turned off by a control signal from the control unit 101 and the relevant circuit is open, power is supplied from the power transmission unit 103 to the power transmission antenna 105 and the resonant capacitor 107.

The second communication unit 109 is connected to the control unit 101 and communicates with the RX using a standard different from the WPC standard. For example, the second communication unit 109 communicates with the RX (the second communication unit 212 in FIG. 3) using an antenna different from the power transmission antenna 105.

Examples include a wireless local area network (LAN), Bluetooth (registered trademark) low energy (BLE), and near field communication (NFC). The frequency band for use in transmitting power from the power transmission antenna 105 is different from the frequency band for use in communication by the second communication unit 109.

In relation to communication between the TX and the RX, the TX may selectively use any of a plurality of communication standards to communicate with the RX. A communication form that selectively uses a plurality of types of communication to be described below is possible.

- Communication based on a first standard (the WPC standard) that is performed between the first communication unit 104 of the TX and the first communication unit 204 of the RX (FIG. 3).
- Communication based on a second standard (a standard other than the WPC standard) that is performed between the second communication unit 109 of the TX and the second communication unit 212 of the RX (FIG. 3).

The UI unit 110 is connected to the control unit 101 and performs various types of outputs to the user. The various types of outputs include operations such as screen display, flashing and color changes of light emitting diodes (LEDs), audio outputs from speakers, and vibrations of a TX body. The UI unit 110 is implemented by a liquid crystal panel, a speaker, a vibration motor, and the like.

Next, an example of a configuration of the power reception device 200 will be described with reference to FIG. 3. FIG. 3 is a block diagram showing an example of a configuration of the power reception device 200 (the RX). The RX includes a control unit 201, a UI unit 202, a power reception unit 203, a first communication unit 204, a power reception antenna 205, a charging unit 206, a battery 207, and a memory 208.

The RX further includes a first switch unit 209, a second switch unit 210, a resonant capacitor 211, a second communication unit 212, and a third switch unit 213. Although an example in which the functional block elements of FIG. 3 are individual elements is shown in the present embodiment, a plurality of functional block elements may be implemented as one hardware module.

The control unit 201 controls each functional block element of the RX by executing a control program stored in the memory 208. Furthermore, the control unit 201 can perform control for executing an application other than wireless power transmission. The control unit 201 is configured to include one or more processors such as a CPU and an MPU.

Moreover, the entire RX (e.g., the entire smartphone) can be controlled in cooperation with an operating system (OS) executed by the control unit 201. Alternatively, the control unit 201 is configured to include hardware such as an ASIC or include an array circuit such as an FPGA compiled to execute a predetermined process.

The control unit 201 stores information to be stored in the memory 208 during the execution of various types of processes, and can execute a time measurement process using a timer (not shown).

The UI unit 202 is connected to the control unit 201 and performs various types of outputs to the user. Various types of outputs include operations such as screen display, flashing and color changes of light emitting diodes (LEDs), audio outputs from speakers, and vibrations of an RX body. The UI unit 202 is implemented by a liquid crystal panel, a speaker, a vibration motor, and the like.

The power reception unit 203 receives AC power (an AC voltage and an AC current) generated by electromagnetic induction based on electromagnetic waves emitted from the power transmission antenna 105 of the TX via the power reception antenna (the power reception coil) 205. Also, the power reception unit 203 converts AC power into DC power or AC power having a predetermined frequency and supplies the power to the charging unit 206.

The charging unit 206 charges the battery 207. The power reception unit 203 includes a rectification unit (a rectifier or a rectification circuit) and a voltage control unit necessary for supplying power to the load in the RX. The rectification unit converts the AC voltage and the AC current from the power transmission antenna received via the power reception antenna 205 into a DC voltage and a DC current.

This DC voltage is hereinafter referred to as a rectification-unit-specific output voltage. Moreover, this DC current is hereinafter referred to as a rectification-unit-specific output current. The voltage control unit converts a level of the DC voltage (the rectification-unit-specific output voltage) output by the rectification unit into a predetermined level.

The predetermined level is a level of the DC voltage at which the control unit 201, the charging unit 206, and the like can be operated. The power reception unit 203 supplies power for charging from the charging unit 206 to the battery 207. It is assumed that the power reception unit 203 has power supply capability sufficient to output a power of 15 watts to the charging unit 206.

The first communication unit 204 performs communication with the first communication unit 104 provided in the TX for power reception control based on the WPC standard. The first communication unit 204 is connected to the power reception antenna 205 and the control unit 201. The first communication unit 204 acquires information transmitted from the TX by demodulating the electromagnetic waves input from the power reception antenna 205.

The first communication unit 204 performs load modulation or amplitude modulation on the input electromagnetic waves and communicates with the TX by superimposing a signal related to the information to be transmitted to the TX on the electromagnetic waves.

In addition to a control program, the memory 208 stores information about the states of the TX and the RX. Information about the state of the RX is acquired by the control unit 201. Moreover, information about the state of the TX can be acquired by the control unit 101 of the TX and received by the first communication unit 204 or the second communication unit 212 to be described below.

The second communication unit 212 is connected to the control unit 201 and communicates with the TX according to a standard different from the WPC standard. For example, the second communication unit 212 communicates with the TX (the second communication unit 109 in FIG. 2) using an antenna different from the power reception antenna 205.

Examples include a wireless local area network (LAN), Bluetooth (registered trademark) low energy (BLE), and near field communication (NFC). The frequency band for use in receiving power in the power reception antenna 205 is different from the frequency band for use in communication by the second communication unit 212.

In relation to communication between the TX and the RX, the RX may selectively use any of the plurality of communication standards to communicate with the TX. A communication form that selectively uses a plurality of types of communication to be described below is possible.

- Communication based on the first standard (the WPC standard) that is performed between the first communication unit 104 of the TX and the first communication unit 204 of the RX.
- Communication based on the second standard (a standard other than the WPC standard) that is performed between the second communication unit 109 of the TX and the second communication unit 212 of the RX.

The first switch unit 209 is provided between the charging unit 206 and the battery 207 and is controlled by the control unit 201. The first switch unit 209 has a function of controlling whether or not to supply the power received by the power reception unit 203 to the battery 207 and a function of controlling a magnitude of the load.

When the first switch unit 209 is turned off and opened by the control unit 201, the power received by the power reception unit 203 is not supplied to the battery 207. When the first switch unit 209 is turned on and short-circuited by the control unit 201, the power received by the power reception unit 203 is supplied to the battery 207.

Although the first switch unit 209 is arranged between the charging unit 206 and the battery 207 in the example of FIG. 3, the first switch unit 209 may be arranged between the power reception unit 203 and the charging unit 206.

Alternatively, the first switch unit 209 may be arranged between the closed circuit formed by the power reception antenna 205, the resonant capacitor 211, and the second switch unit 210, and the power reception unit 203. **In** this case, the first switch unit 209 has a function of controlling whether or not to supply the power received by the power reception antenna 205 to the power reception unit 203.

Although the first switch unit 209 is described as one functional block element in the example of FIG. 3, the first switch unit 209 can be implemented as a part of the charging unit 206 or the power reception unit 203.

Moreover, the first switch unit 209 is not limited to a configuration inserted in series between the charging unit 206 and the battery 207, and the first switch unit 209 may be inserted in parallel between the charging unit 206 and the battery 207.

**In** this case, when the first switch unit 209 is turned off and opened by the control unit 201, the power received by the power reception unit 203 is supplied to the battery 207. When the first switch unit 209 is turned on and short-circuited by the control unit 201, the power received by the power reception unit 203 is not supplied to the battery 207.

On an input side of the power reception unit 203, the second switch unit 210 is connected in parallel to the resonant capacitor 211. The resonant capacitor 211 is connected to the power reception antenna 205 via the third switch unit 213.

The second switch unit 210 and the third switch unit 213 are controlled by the control unit 201. The third switch unit 213 has a function of controlling whether or not to open the terminals of the power reception antenna 205.

When the third switch unit 213 is turned off by the control unit 201, the terminals of the power reception antenna 205 are in an open state. When the third switch unit 213 is turned on by the control unit 201, the power reception antenna 205 is connected to the power reception unit 203 via the resonant capacitor 211.

When the third switch unit 213 is turned on by the control unit 201 and the second switch unit 210 is turned on and short-circuited, the power reception antenna 205 and the resonant capacitor 211 form a series resonant circuit and resonate at a specific frequency fB.

A current flows through a closed circuit formed by the power reception antenna 205, the resonant capacitor 211, and the second switch unit 210 and no current flows through the power reception unit 203. Also, when the second switch unit 210 is turned off and the relevant circuit is open, the power received by the power reception antenna 205 and the resonant capacitor 211 is supplied to the power reception unit 203.

Without limiting to the example of FIG. 3, the second switch unit 210 may be arranged between the power reception antenna 205 and the resonant capacitor 211. When the third switch unit 213 is in the ON state and the second switch unit 210 is in the ON state, the terminals of the power reception antenna 205 are short-circuited. Moreover, the third switch unit 213 may be arranged between the resonant capacitor 211 and the power reception unit 203.

In this system, the TX and the RX perform wireless power transmission based on the WPC standard between the power transmission antenna 105 and the power reception antenna 205. In the WPC standard, a magnitude of power guaranteed when the power reception device 200 receives power from the power transmission device 100 is specified by a value called guaranteed load power (hereinafter referred to as "GP").

For example, the GP indicates a power value at which the output for the load of the power reception device 200 is guaranteed even if the coupling between the power reception antenna 205 and the power transmission antenna 105 is weakened due to fluctuations in the positional relationship between the power reception device 200 and the power transmission device 100, and the power transmission efficiency is reduced.

The load of the power reception device 200 is the charging unit 206, the battery 207, and the like in FIG. 3, and the value of the GP corresponds to the amount of power guaranteed to be output from the power reception unit 203. Alternatively, the value of the GP corresponds to the amount of power guaranteed to be output from the rectification unit provided in the power reception unit 203.

For example, it is assumed that the value of the GP is 5 (watts) and a positional relationship between the power reception antenna 205 and the power transmission antenna 105 is varied. In this case, even if the power transmission efficiency is reduced, the power transmission device 100 performs power transmission control so that 5 watts can be output to the load of the power reception device 200.

Moreover, the GP is decided by negotiations conducted by the power transmission device 100 and the power reception device 200. In addition, the present disclosure is not limited to the GP and the present embodiment can be applied to a configuration in which power transmission and reception are performed with power decided by mutual negotiation conducted between the power transmission device and the power reception device.

Moreover, when power is transmitted from the power transmission device 100 to the power reception device 200, a case where an object is located near the power transmission device 100 is assumed. The object in this case is an object that can affect the power transmission from the power transmission device 100 to the power reception device 200, and is an object (a foreign substance) different from the power reception device 200.

Electromagnetic waves for power transmission may affect the foreign substance and may be likely to increase a temperature of the foreign substance and destruct the foreign substance. The foreign substance in the present disclosure is, for example, a clip or an IC card. Among objects of integral parts of the power reception device and a product in which the power reception device is incorporated or the power transmission device and a product in which the power transmission device is incorporated, objects that may unintentionally generate heat when exposed to wireless power transmitted by the power transmission antenna do not correspond to foreign substances.

In the WPC standard, a method of suppressing the temperature rise or destruction of the foreign substance by stopping power transmission when the foreign substance is present is specified. Specifically, the power transmission device 100 can detect the presence of a foreign substance on the charging base 300.

The power loss method is a method of detecting a foreign substance from a difference between the transmission power in the power transmission device 100 and the reception power in the power reception device 200. A Q-value measurement method is a method of detecting a foreign substance according to a change in a quality factor (a Q-value) of the power transmission antenna 105 (the power transmission coil) in the power transmission device 100.

However, the foreign substance detected by the power transmission device 100 is not limited to an object located on the charging base 300. The power transmission device 100 can detect a foreign substance located near the power transmission device 100. For example, the power transmission device 100 can detect a foreign substance located in a power transmission range.

Foreign substance detection based on the power loss method specified in the WPC standard will be described with reference to FIG. 4. In FIG. 4, the horizontal axis represents transmission power of the power transmission device 100 and the vertical axis represents reception power of the power reception device 200.

On a graph line indicated by a linear line segment 1002, a point 1000 corresponds to a first transmission power value Pt1 and a first reception power value Pr1 and a point 1001 corresponds to a second transmission power value Pt2 and a second reception power value Pr2. On the graph line, a point 1003 corresponds to a third transmission power value Pt3 and a third reception power value Pr3. The foreign substance that is a detection target is a metallic piece having conductivity or the like.

First, the power transmission device 100 transmits power to the power reception device 200 with the first transmission power value Pt1, and the power reception device 200 receives power with the first reception power value Pr1. Hereinafter, this state is referred to as a light load state. Also, the power transmission device 100 stores the first transmission power value Pt1.

At this time, the power reception device 200 performs load control so that the power to be received is the minimum power. Alternatively, the power reception device 200 performs load control so that the power to be received is power within a prescribed predetermined range or power that is less than or equal to a predetermined threshold.

Here, in the "power within the prescribed predetermined range" or the "power less than or equal to the predetermined threshold," the "power" is a value of power that is about 10% of the reference power to be described below.

Moreover, the power reception device 200 may disconnect the load from the power reception antenna 205 so that the received power is not supplied to the load (the charging unit 206, the battery 207, or the like of FIG. 3). Alternatively, the power reception device 200 may control the load so that predetermined power is supplied to the load.

These can be implemented by controlling the first switch unit 209. Subsequently, the power reception device 200 notifies the power transmission device 100 of the first reception power value Pr1. The power transmission device 100 receiving a signal related to the first reception power value Pr1 from the power reception device 200 calculates the power loss between the power transmission device 100 and the power reception device 200.

The power loss at this time is Pt1-Pr1 (= Ploss1). A calibration point (hereinafter abbreviated as CP) 1000 indicating the correspondence between Pt1 and Pr1 can be generated.

Subsequently, the power transmission device 100 changes the transmission power value to the second transmission power value Pt2 and transmits power to the power reception device 200, and the power reception device 200 receives power with the second reception power value Pr2. Hereinafter, this state is referred to as a connected load state.

Also, the power transmission device 100 stores the second transmission power value Pt2. At this time, the power reception device 200 performs load control so that the power to be received is the maximum power. Here, the "maximum power" is power of a value close to the reference power to be described below.

Alternatively, the power reception device 200 performs load control so that the power to be received is power within a prescribed predetermined range or power greater than or equal to a predetermined threshold. For example, the power reception device 200 connects the power reception antenna 205 to the load so that the received power is supplied to the load.

These can be implemented by controlling the first switch unit 209. Subsequently, the power reception device 200 notifies the power transmission device 100 of the second reception power value Pr2. The power transmission device 100, which has received a signal related to the second reception power value Pr2 from the power reception device 200, calculates power loss between the power transmission device 100 and the power reception device 200. The power loss at this time is Pt2-Pr2 (= Ploss2). A CP 1001 indicating the correspondence between Pt2 and Pr2 can be generated.

The power transmission device 100 performs a linear interpolation process between the CP 1000 and the CP 1001 to generate a line segment 1002. The line segment 1002 indicates a relationship between the transmission power and the reception power in a state in which it is detected that there is not a foreign substance near the power transmission device 100 and the power reception device 200 (hereinafter referred to as a first detection state).

On the basis of the line segment 1002, the power transmission device 100 can estimate the power value received by the power reception device 200 when power transmission is performed with predetermined transmission power in the first detection state. For example, it is assumed that the power transmission device 100 transmits power with the third transmission power value Pt3.

In this case, the power transmission device 100 can estimate the third reception power value Pr3 received by the power reception device 200 from a point 1003 corresponding to Pt3 on the line segment 1002.

As described above, on the basis of a plurality of combinations of the transmission power value of the power transmission device 100 and the reception power value of the power reception device 200 measured while the load is changed, the power loss between the power transmission device 100 and the power reception device 200 corresponding to the load can be obtained. Moreover, the power loss between the power transmission device 100 and the power reception device 200 corresponding to all loads can be estimated according to an interpolation process from a plurality of combinations of transmission power values and reception power values.

Thus, a calibration process, which is performed by the power transmission device 100 and the power reception device 200 so that the power transmission device 100 acquires a combination of the transmission power value and the reception power value, is referred to as a "calibration process of the power loss method." Moreover, the calibration process is abbreviated as a CAL process.

A case where, after the CAL process of the power loss method, the power transmission device 100 actually transmits power with a third transmission power value Pt3 to the power reception device 200, and the power transmission device 100 receives a signal related to a reception power value Pr3 * from the power reception device 200 is considered.

The signal related to the reception power value Pr3* is a received power data packet (mode 0) specified in the WPC standard, but other messages may be used.

Hereinafter, a received power data packet (mode 0) is referred to as RP0. RP0 includes, for example, a value of the reception power value Pr3*. The power transmission device 100 calculates Pr3-Pr3* (= Ploss_FO) by subtracting the reception power value Pr3* actually received from the power reception device 200 from the reception power value Pr3 in the first detection state.

When a foreign substance is located near the power transmission device 100 and the power reception device 200, Ploss_FO can be estimated as power consumed by the foreign substance, i.e., power loss. Hereinafter, a state in which a foreign substance is detected near the power transmission device 100 and the power reception device 200 is referred to as a second detection state.

In the second detection state, the power transmission device 100 compares the power loss Ploss_FO, which would have been consumed by the foreign substance, with a predetermined threshold. When a value of the power loss Ploss_FO exceeds a threshold, the power transmission device 100 can determine that there is a foreign substance.

Alternatively, the power transmission device 100 acquires the third reception power value Pr3 in the first detection state from the power reception device 200, and power loss Pt3-Pr3 (= Ploss3) between the power transmission device 100 and the power reception device 200 is obtained in advance.

Next, the power transmission device 100 acquires the reception power value Pr3* from the power reception device 200 in the second detection state and calculates the power loss Pt3-Pr3* (= Ploss3*) between the power transmission device 100 and the power reception device 200 in the second detection state. Also, the power transmission device 100 can estimate power loss Ploss_FO using Ploss3 *-Ploss3.

As described above, there are two methods for calculating the Ploss_FO in the second detection state.

- A first method of calculating Ploss_FO from Pr3-Pr3 *.
- A second method of calculating Ploss_FO from Ploss3 *-Ploss3.

Although the second method is basically described in the present embodiment, the content of the present embodiment can also be applied to the first method.

Next, foreign substance detection based on the Q-value measurement method specified in the WPC standard will be described with reference to FIGS. 5(A) and 5(B). FIG. 5(A) is an explanatory schematic circuit diagram of a method of measuring a quality factor (a Q-factor or a Q-value) based on the Q-value measurement method.

An AC power supply 901 is a power supply that outputs AC power generated by the power transmission unit 103 of the TX. A power transmission antenna 902 corresponds to the power transmission antenna 105 and a capacitor 903 corresponds to the resonant capacitor 107. The power transmission antenna 902 and the capacitor 903 are connected in series.

A voltage value V8 is a voltage value of a predetermined frequency for operating a wireless power transmission system generated by the power transmission unit 103. A voltage value V9 is a voltage value applied to the power transmission antenna 902. Here, it is assumed that the TX can change the frequency related to the voltage value.

Moreover, the voltage values V8 and V9 are the voltage values measured by the TX when the TX transmits an analog ping or a digital ping to the RX. Because the voltage values V8 and V9 are AC voltage values, their effective values (RMS) may be used.

FIG. 5(B) shows a characteristic having a peak at 100 kHz as an example of a measurement result of V9/V8 for a frequency. The horizontal axis is a frequency axis and the vertical axis represents a voltage ratio "V9/V8." Because V9/V8 denotes a quality factor related to the power transmission antenna 902, the value changes when an object is placed near the power transmission antenna 902.

A change in the quality factor differs according to a case where no object is placed on the TX, a case where the RX is placed on the TX, a case where a foreign substance (a metallic piece or the like) is placed on the TX, and a case where the RX and the foreign substance are placed on the TX.

In the negotiation phase, the TX receives an FOD status data packet signal from the RX. The FOD status data packet includes a reference quality factor value and a reference resonance frequency value.

The reference quality factor value is a quality factor capable of being measured by the terminal of the power transmission antenna of a test TX when the RX is placed on the test TX and there is no foreign substance nearby.

Moreover, a reference resonance frequency value is a resonance frequency capable of being measured by the terminal of the power transmission antenna of the test TX when the RX is placed on the test TX and there is no foreign substance nearby.

In the Q-value measurement method, a threshold is set on the basis of the reference quality factor value. Foreign substance detection is performed by comparing this threshold with the quality factor obtained from the actually measured V9/V8.

Alternatively, the threshold is set on the basis of the reference resonance frequency value. Foreign substance detection is performed by comparing this threshold with the resonance frequency obtained by actually measuring V9/V8.

The RX and the TX of the present embodiment perform communication for power transmission and reception control based on the WPC standard. In the WPC standard, a plurality of phases including a power transfer phase in which power transmission is performed and one or more phases before actual power transmission are specified.

In each phase, communication for the necessary power transmission and reception control is performed. For example, foreign substance detection by the power loss method is performed in a power transfer phase on the basis of a data group obtained by a calibration phase.

Moreover, foreign substance detection by the Q-value measurement method is performed before power transmission (before digital ping transmission and in the negotiation phase or renegotiation phase).

Pre-power-transmission phases in the WPC standard are a selection phase, a ping phase, and an identification and configuration phase (a configuration phase).

Moreover, there are a negotiation phase and a calibration phase. Hereinafter, the identification and configuration phase is referred to as an I&C phase. Hereinafter, a process of each phase will be described.

**In** the selection phase, the TX intermittently transmits an analog ping to detect that an object has been placed on the charging base of the TX. For example, it is detected that an RX, a conductor piece, or the like is placed on the charging base. The TX detects one or both of the voltage value and the current value of the power transmission antenna 105 when the analog ping is transmitted.

When the voltage value is below a threshold or the current value exceeds a threshold, the TX determines that there is an object and transitions to the ping phase. Alternatively, when the quality factor obtained from the voltage value or the current value satisfies a predetermined condition, the TX determines that there is an object and transitions to the ping phase.

**In** the ping phase, the TX transmits a digital ping that has higher power than the analog ping. A magnitude of the power of the digital ping is sufficiently high to activate the control unit of the RX placed on the TX.

The RX notifies the TX of the power reception voltage value. Thus, when a response is received from the RX that has received a digital ping, the TX recognizes that the object detected in the selection phase is the RX.

When the TX receives a notification of the power reception voltage value from the RX, it transitions to the I&C phase. Moreover, before transmitting the digital ping, the TX measures the quality factor related to the power transmission antenna 105 using, for example, an analog ping.

This measurement result is used when a foreign substance detection process using the Q-value measurement method is executed. In addition, according to the version of the WPC standard, the above-described selection phase may be included as a part of the ping phase described above and may be referred to as the ping phase.

In the I&C phase, the TX identifies the RX and acquires device configuration information (capability information) from the RX. The RX transmits signals of an ID data packet and a configuration data packet. The ID data packet includes identifier information about the RX and the configuration data packet includes device configuration information (capability information) of the RX.

The TX, which has received the signals of the ID data packet and the configuration data packet, responds with an acknowledgment (a positive response ACK). Also, the I&C phase ends. In addition, the I&C phase may be referred to as the configuration phase according to the version of the WPC standard.

In the negotiation phase, the GP value is decided on the basis of the GP value required by the RX, the power transmission capability of the TX, and the like. Moreover, the TX receives an FOD status data packet including the reference quality factor value and the reference resonance frequency value from the RX.

In the Q-value measurement method, the presence or absence of a foreign substance is determined on the basis of a threshold based on the reference quality factor value and the reference resonance frequency value. The TX executes a foreign substance detection process using the Q-value measurement method in accordance with a request from the RX.

Moreover, in the WPC standard, a method of performing a process similar to that of the negotiation phase is performed again according to the request of the RX once it transitions to the power transfer phase. The phase in which these processes are performed after transitioning from the power transfer phase is referred to as the renegotiation phase.

In the calibration phase, a CAL process of the power loss method is performed on the basis of the WPC standard. Moreover, the RX notifies the TX of the predetermined reception power value and makes adjustments for the TX to efficiently transmit the power.

The predetermined reception power value is, for example, a reception power value in a light load state or a maximum load state (the connected load state). The reception power value provided by a notification for the TX is used for the foreign substance detection process by the power loss method.

In the power transfer phase, the TX and the RX perform a control process for the start and continuation of power transmission, error handling, power transmission stop due to full charge, and the like. The TX and the RX perform a communication process for the power transmission and reception control.

For example, communication is performed by superimposing a signal on the electromagnetic waves transmitted from the power transmission antenna 105 or the power reception antenna 205 with the power transmission antenna 105 and the power reception antenna 205 that are used when wireless power transmission is performed on the basis of the WPC standard.

In addition, a range in which communication based on the WPC standard can be performed between the TX and the RX is similar to a range in which the power transmission of the TX is possible. In addition, according to the version of the WPC standard, the above-described calibration phase may also be referred to as a power transfer phase as a part of the above-described power transfer phase.

Next, the function of the control unit of the TX will be described with reference to FIG. 6. FIG. 6 is a block diagram showing an example of a functional configuration of the control unit 101 of the power transmission device 100 (the TX). The control unit 101 includes a communication control unit 301, a power transmission control unit 302, a measurement unit 303, a setting unit 304, and a state detection unit 305.

The communication control unit 301 controls communication with the RX based on the WPC standard via the first communication unit 104 or controls communication with the RX via the second communication unit 109. The power transmission control unit 302 controls the power transmission for the RX by controlling the power transmission unit 103.

The measurement unit 303 measures a waveform attenuation index to be described below. Moreover, the measurement unit 303 measures power transmitted to the RX via the power transmission unit 103 and measures average transmission power every unit time. Moreover, the measurement unit 303 measures a quality factor related to the power transmission antenna 105.

Moreover, the measurement unit 303 measures a temperature with temperature sensors arranged at a plurality of locations of the power transmission device 100. Moreover, the measurement unit 303 measures a quantity (e.g., a coupling coefficient) indicating an electromagnetic coupling state between the power transmission antenna 105 and the power reception antenna 205.

The setting unit 304 calculates and sets a threshold for detecting a foreign substance in the Q-value measurement method and a threshold for detecting a foreign substance in the power loss method in the above-described method. Moreover, the setting unit 304 sets a threshold for foreign substance detection in a waveform attenuation method in a method to be described below.

Moreover, the setting unit 304 calculates and sets a threshold for detecting a foreign substance or a threshold for detecting a position shift between the TX and the RX on the basis of, for example, the coupling coefficient between the power transmission antenna 105 and the power reception antenna 205 measured by the measurement unit 303. Moreover, the setting unit 304 calculates and sets a threshold for detecting a foreign substance or a threshold for detecting a position shift between the TX and the RX on the basis of, for example, the temperature of the power transmission device measured by the measurement unit 303.

The state detection unit 305 detects the states of the TX and the RX. For example, the state detection unit 305 detects a foreign substance located between the TX and the RX and detects a position shift between the power transmission antenna 105 and the power reception antenna 205.

More specifically, a state detection process based on a power loss method, a Q-value measurement method, a waveform attenuation method, a temperature measured in the power transmission device 100, and an electromagnetic coupling state (e.g., the coupling coefficient) between the power transmission antenna 105 and the power reception antenna 205 is possible.

The state detection unit 305 can perform foreign substance detection and a process of detecting a position shift between the power transmission antenna 105 and the power reception antenna 205 in other methods. For example, in the TX having an NFC communication function, the state detection unit 305 performs a state detection process using a counterpart detection function according to the NFC standard.

Moreover, the state detection unit 305 can detect a change in a state on the TX in addition to the detection of the presence or absence of a foreign substance and the detection the electromagnetic coupling state between the power transmission antenna and the power reception antenna. For example, the state detection unit 305 can detect an increase or decrease in the number of power reception devices 200 on the TX.

The setting unit 304 sets a threshold serving as a reference for determining the presence or absence of a foreign substance after the TX performs state detection. The state detection is, for example, state detection based on a power loss method, a Q-value measurement method, or a waveform attenuation method, state detection based on the temperature measured in the power transmission device 100, or state detection based on the coupling coefficient between the power transmission antenna 105 and the power reception antenna 205.

In addition, the setting unit 304 can set a determination threshold required for the state detection process using other methods. On the basis of the threshold set by the setting unit 304 and the measurement result of the measurement unit 303, the state detection unit 305 can perform a foreign substance detection process and a process of detecting a position shift between the power transmission antenna 105 and the power reception antenna 205.

For example, the state detection unit 305 can acquire data such as a waveform attenuation index, transmission power, a quality factor, a temperature measured in the power transmission device 100, and a coupling coefficient between the power transmission antenna 105 and the power reception antenna 205 as the measurement result of the measurement unit 303.

The process executed by the communication control unit 301, the power transmission control unit 302, the measurement unit 303, the setting unit 304, and the state detection unit 305 shown in FIG. 6 can be implemented using a program executed by a CPU or the like provided in the control unit 101.

Processes are executed in parallel while achieving synchronization between programs by an event process or the like according to an independent program. However, two or more of these processes may be incorporated into a process of one program.

Subsequently, an example of a flow of a process related to power transmission and reception control executed by the TX and the RX will be described. FIG. 7 is a flowchart showing an example of a power transmission control process executed by the TX. This process is implemented, for example, by executing a program read from the memory 106 by the control unit 101 of the TX.

Moreover, this process can be executed in accordance with a case where a power supply of the TX is turned on, a case where a user of the TX inputs an instruction for starting a wireless power transmission application, or a case where the TX is connected to a commercial power supply and receives supplied power. Moreover, this process may be started by other triggers.

In S1201 of FIG. 7, the TX executes a process specified as the selection phase and the ping phase of the WPC standard and waits for the RX to be placed. The TX iteratively intermittently transmits an analog ping of the WPC standard to detect an object located within a power transmission range.

For example, the TX can detect that the RX, a conductor piece, or the like is placed on the charging base 300. When it is detected that there is an object within its power range, the TX transmits a digital ping. The power of the digital ping is greater than the power of the analog ping and is sufficient to activate the control unit 201 of the RX placed on the TX.

When there is a predetermined response to the digital ping, the TX determines that the detected object is the RX and that the RX is placed on the charging base 300. Here, the "predetermined response" is a signal strength (SIG) data packet transmitted by the RX.

This packet includes a signal strength value indicating the signal strength of the signal received by the RX. The signal strength value is calculated from a voltage (a rectification-unit-specific output voltage) output by the rectification unit (the rectifier) of the power reception unit 203 measured by the RX or a voltage of an open circuit (an open circuit voltage) including the power reception antenna 205 measured by the RX.

Alternatively, the signal strength value is calculated from the reception power value measured by the RX or the like. Moreover, the TX measures a quality factor of the power transmission antenna 105 before the digital ping is transmitted. This measurement result is used when a foreign substance detection process using the Q-value measurement method is executed.

After the placement of the RX is detected, the TX acquires identification information from the RX according to communication in the I&C phase specified in the WPC standard in S1202. In the I&C phase, the RX transmits an identification packet (ID packet) to the TX.

In addition to a manufacturer code and a basic device ID, which are the identification information for each individual of the RX, an information element for identifying the version of the WPC standard that is supported is stored in the ID packet.

Moreover, the RX transmits a configuration data packet to the TX. The configuration data packet includes the following RX capability information.

- Information for identifying the version of the WPC standard that the RX supports.
- Maximum power value or reference power, which is a value for identifying the maximum power that the RX can supply to the load.
- Information indicating whether or not the RX has the negotiation function of the WPC standard.
- Parameters used in frequency-shift modulation, which is a communication modulation scheme used when the TX transmits information to the RX.

When the above-described packet is received from the RX, the TX transmits a positive response ACK to the RX and the I&C phase ends. In addition, the TX may acquire the RX identification information by a method other than communication in the I&C phase of the WPC standard.

Moreover, the identification information for each individual of the RX may be a wireless power ID. Alternatively, the identification information may be any other identification information for identifying an individual of the RX, such as a Bluetooth address (hereinafter referred to as "BD_ADDR") unique to the second communication unit 212 of the RX.

In addition, BD_ADDR is an 8-byte address used in BLE. BD_ADDR is, for example, a public address specified in the BLE standard indicating individual identification information about the manufacturer of the RX and a BLE communication function (the second communication unit 212). BD_ADDR may be a random address.

Subsequently, in S 1203, the TX decides the GP by negotiating with the RX on the basis of a request from the RX and the power transmission capability of its own device. In S1203, communication in the negotiation phase of the WPC standard is performed.

First, the RX provides a notification of a value of the requested GP by transmitting a specific request to the TX. The TX determines whether or not to accept the request on the basis of the power transmission capability of its own device or another condition.

When the request is accepted, the TX transmits a positive response ACK to the RX. When the request is not accepted, the TX transmits a negative response NACK or NAK to the RX. The decided GP value is a value requested by the RX when the TX accepts the request from the RX.

When the TX does not accept the request from the RX, the value is a predetermined value (e.g., 5 watts) determined by the WPC standard. Alternatively, when the TX acquires information indicating that the RX does not correspond to the negotiation phase (e.g., S1302 to be described below), the TX does not perform communication in the negotiation phase and decides the GP value as a predetermined value. The predetermined value is, for example, a value (e.g., 5 watts) specified in advance in the WPC standard.

Moreover, the TX executes a foreign substance detection process using the Q-value measurement method according to the request from the RX. The TX receives an FOD status data packet from the RX. This packet includes the reference quality factor value and the reference resonance frequency value described above.

Also, the TX performs foreign substance detection based on the Q-value measurement method. This foreign substance detection is performed on the basis of the following information.

- A quality factor and resonance frequency of the power transmission antenna 105 measured by the TX before a digital ping is transmitted.
- A threshold based on the reference quality factor value and reference resonance frequency value received by the TX from the RX.

Subsequently, in S 1204, the TX and the RX perform a process in the calibration phase of the WPC standard (a CAL process). In the calibration phase, the TX executes the CAL process of the power loss method on the basis of the reference power value or GP value that has been decided.

First, the RX transmits a signal having information about the reception power in the light load state (hereinafter referred to as first reference reception power information) to the TX. The light load state is, for example, a disconnected load state, a load state in which the reception power value of the RX is less than or equal to a first threshold, or a load state in which the reception power value of the RX is within a prescribed predetermined range (hereinafter referred to as a "first range").

In the present embodiment, the first reference reception power information is assumed to be 500 milliwatts. The first reference reception power information is information included in a received power data packet (mode 1) specified in the WPC standard, but other messages may be used.

Hereinafter, the received power data packet (mode 1) is denoted by RP1. The TX determines whether or not to accept first reference reception power information on the basis of a control error value included in a control error (CE) data packet received from the RX.

When the first reference reception power information has been received, the TX transmits a positive response ACK to the RX. Moreover, when the first reference reception power information has not been received, the TX transmits a negative response NAK to the RX.

Next, the RX performs a process for transmitting a signal having information about the reception power in the connected load state (hereinafter referred to as second reference reception power information) to the TX. The connected load state is, for example, a maximum load state, a load state in which the transmission power value is greater than or equal to a second threshold, or a load state in which the power received by the RX is the maximum power.

Here, the "maximum power" is power with a value close to the reference power. Alternatively, the connected load state is a load state in which the reception power value of the RX is within a prescribed predetermined range (hereinafter referred to as a "second range"). Here, the second range is a range of power values greater than the first range.

In the present embodiment, the second reference reception power information is assumed to be 15 watts. The second reference reception power information is information included in the received power data packet (mode 2) specified in the WPC standard, but other messages may be used.

Hereinafter, the received power data packet (mode2) is denoted by RP2. The TX determines whether or not to receive the second reference reception power information on the basis of the control error value included in the control error (CE) data packet received from the RX.

When the second reference reception power information has been received, the TX transmits a positive response ACK to the RX. Moreover, when the second reference reception power information has not been received, the TX transmits a negative response NAK to the RX. The TX transmits a positive response ACK for the second reference reception power information from the RX and completes the CAL process.

According to the above CAL process, the TX can calculate an amount of power loss between the TX and the RX in the light load state and the connected load state on the basis of the transmission power value of the TX and the reception power value included in the first and second reference reception power information.

Moreover, when interpolation processes between two or more amounts of power loss are performed, the TX can calculate an amount of power loss between the TX and the RX in all of transmission power capable of being taken by the TX. All of the transmission power capable of being taken by the TX is, for example, any power in a range in which the reception power received by the RX in the present embodiment is 500 milliwatts to 15 watts.

Subsequently, in S1205, the TX transmits power until the battery 207 of the RX is fully charged. In S1205, communication in the power transfer phase of the WPC standard is performed.

The RX iteratively transmits control error (CE) data packets (hereinafter referred to as "CE packets") to the TX at time intervals of t_interval. t_interval is a value defined in the WPC standard, for example, 250 milliseconds.

The CE packet includes a request for a degree to which the transmission power is increased or decreased. The TX adjusts the transmission power by controlling the current or voltage of the power transmission antenna 105 on the basis of the received CE packet.

That is, the CE packet includes data of a parameter for adjusting the power transmission. By iterating this process, power transmission with appropriate power corresponding to a request of the RX is performed in substantially real time.

When the battery 207 is fully charged, the RX transmits an end power transfer data packet (hereinafter referred to as an "EPT packet") to end the power transfer phase. The RX can transmit EPT packets for reasons other than full charge.

Moreover, when the power transfer phase ends, the TX stops transmitting power to charge the RX. Moreover, if the next CE packet cannot be received when the time of t_timeout has elapsed from the reception of the last CE packet, the TX determines that the RX has been removed from the charging base 300.

In this case, the power transfer phase ends. t_timeout is a value defined in the WPC standard, for example, 1500 milliseconds.

The RX may transmit a packet other than a CE packet to the TX during the power transfer phase. For example, there is a charge status data packet for notifying the TX of the state of the battery 207 of the RX.

In this packet, a charge status value indicating the percentage to which the battery 207 has been charged is stored. When the TX receives the charge status data packet, the TX notifies the user of the charge status by displaying the charge status in characters or diagrams on the basis of the charge status value, for example, with the UI unit 110.

In relation to the charge status data packet, the TX may receive it at any time or provide a notification to the user at any timing. In the power transfer phase, the TX transmits power to the RX and performs a foreign substance detection process based on the power loss method.

For example, according to the CAL process, the amount of power loss between the TX and the RX in the first detection state during a power transmission process is calculated from a difference between the transmission power value and the reception power value. The calculated amount of power loss corresponds to a reference amount of power loss in the absence of the foreign substance.

Also, when it is determined that a difference between the reference amount of power loss and the amount of power loss between the TX and the RX measured during power transmission after the CAL process is greater than or equal to the threshold, the TX determines that the state is the second detection state.

An example of a flow of a process related to power reception control executed by the RX will be described with reference to FIG. 8. This process is implemented, for example, by the control unit 201 of the RX executing a program read from the memory 208.

In S1301, the RX executes a process specified in the selection phase and the ping phase of the WPC standard and waits for its own device to be placed on the TX. The RX detects placement on the TX, for example, by detecting a digital ping from the TX.

When the RX detects that its own device has been placed on the TX, a signal including the identification information about the device is transmitted to the TX by the ID packet and the configuration data packet in S1302.

In addition, the RX identification information may be transmitted by a method other than the communication in the I&C phase of the WPC standard. Moreover, as long as the information can be used to identify each individual of the RX, other identification information such as BD_ADDR may be used. Moreover, the RX can transmit information other than identification information to the TX in S1302.

Subsequently, in S1303, the RX transmits a signal including information about the requested GP value to the TX and waits for a response from the TX to decide GP. In S1303, communication in the negotiation phase of the WPC standard is performed.

The RX transmits an FOD status data packet to the TX. This packet includes a reference quality factor value and a reference resonance frequency value.

Subsequently, in S1304, the RX and the TX perform a process in the calibration phase of the WPC standard (the CAL process). The process performed by the RX in the phase is as described above.

Subsequently, in S1305, the RX receives power until the battery 207 is fully charged. The process performed by the RX in the phase is as described above. In the power transfer phase, the RX and the TX perform a foreign substance detection process based on the power loss method.

In S1305, the RX iteratively transmits CE packets at intervals of t_interval and finally transmits EPT packets to the TX to end the process.

As described above, the power loss method is a method of detecting a foreign substance on the basis of a result of measuring the amount of power loss during power transmission from the TX to the RX. This method has the disadvantage that the accuracy of foreign substance detection decreases when the TX is transmitting a large amount of power, but has the advantage that high power transmission efficiency can be maintained because the foreign substance detection process can be performed while power transmission is continued.

Meanwhile, only for the foreign substance detection based on the power loss method during the power transfer phase, there is a possibility that the false detection of a foreign substance may occur or a possibility that the false detection in which it is determined that there is no foreign substance regardless of the presence of a foreign substance may occur.

For example, it is assumed that there is a foreign substance near the TX and the RX during power transmission in the power transfer phase. In this case, because there is a possibility that heat generation from the foreign substance or the like may increase, it is necessary to improve the accuracy of detection of the foreign substance in the power transfer phase.

Therefore, a foreign substance detection method using a waveform attenuation method will be described. In this method, the TX can detect a foreign substance on the basis of an attenuation state of a transmission power waveform (a voltage waveform or a current waveform) related to power transmission performed for the RX. That is, foreign substance detection is possible without using a newly specified foreign substance detection signal or the like.

FIG. 9 is an explanatory diagram of a foreign substance detection principle based on the waveform attenuation method. An example of foreign substance detection using a transmission power waveform related to power transmission from the power transmission device 100 (the TX) to the power reception device 200 (the RX) will be described. In FIG. 9, the horizontal axis is the time axis, and the vertical axis represents a voltage value or a current value.

A waveform 600 shown in FIG. 9 shows, for example, a change in a voltage value of a high-frequency voltage applied to the power transmission antenna 105 of the TX over time. The TX transmitting power to the RX via the power transmission antenna 105 stops power transmission at time T0.

At time T0, the power supply for power transmission from the power supply unit 102 is stopped and the power supply for power transmission to the power transmission antenna 105 is stopped. A frequency f1 of a transmission power waveform before the power transmission is stopped at time T0 is, for example, a fixed frequency between 87 kHz and 205 kHz used in the WPC standard.

A point 601 on the waveform 600 is a point on the envelope of the high-frequency voltage and corresponds to a voltage value A1 at time T1. At the point 601, (T1, A1) indicates that a voltage value at time T1 is A1.

A point 602 on the waveform 600 is a point on the envelope of the high-frequency voltage and corresponds to a voltage value A2 at time T2. At point 602, (T2, A2) indicates that a voltage value at time T2 is A2.

The quality factor (the Q-factor or the Q-value) that is the quality factor of the power transmission antenna 105 can be obtained on the basis of a change over time in the voltage value after time T0. For example, the TX calculates the quality factor by Eq. (1) on the basis of the times at the points 601 and 602 on the envelope of the high-frequency voltage, the voltage value, and the frequency f2 of the high-frequency voltage after the stopping of the power transmission at time T0.

$$Q = \pi \cdot f2 \cdot (T2 - T1)/\ln(A1/A2) \quad \text{(Eq. (1))}$$

In Eq. (1), ln denotes a natural logarithmic function. In addition, the frequency of the transmission power waveform (f1) when the TX transmits power to the RX may be different from the frequency of the transmission power waveform (f2) when the TX stops transmitting power to the RX.

A value of the quality factor decreases when there is a foreign substance near the TX and the RX, because the foreign substance causes energy loss. Therefore, when attention is paid to the slope of the attenuation of the voltage value, the slope of the straight line connecting the point 601 and the point 602 is larger when the foreign substance is present than when the foreign substance is absent.

When energy loss occurs due to the foreign substance, the attenuation rate of the amplitude of the waveform 600 increases. For example, in the waveform attenuation method, the presence or absence of a foreign substance can be determined on the basis of the attenuation state of the voltage value between the points 601 and 602.

In actually determining the presence or absence of a foreign substance, it is possible to make the determination by comparing some numerical values indicating the attenuation state. For example, when the determination is made using a quality factor, a case where the value of the quality factor is smaller than the reference value indicates that a waveform attenuation rate (a degree of reduction in the amplitude of the waveform per unit time) is higher.

As another example, there is a method of making the determination using the slope of the straight line connecting the points 601 and 602 calculated by (A1-A2)/(T2-T1). Moreover, when the times (T1 and T2) for measuring the attenuation state of the voltage value is fixed, the difference (A1-A2) between the voltage values and the ratio (A1/A2) of the voltage values can be used to determine the presence or absence of the foreign substance.

Alternatively, if the voltage value A1 immediately after the stopping of the power transmission is constant, the presence or absence of a foreign substance can be determined using the voltage value A2 when a predetermined time has elapsed. Alternatively, the presence or absence of a foreign substance can be determined using the elapsed time (T2-T1) until the voltage value A1 becomes a predetermined voltage value A2.

In the waveform attenuation method, it is possible to determine the presence or absence of a foreign substance by the attenuation state of the waveform during a power transmission stop period. Indices of a quality factor and the like indicating the attenuation state are collectively referred to as a "waveform attenuation index" in the present embodiment.

Although the vertical axis of FIG. 9 has been described as the axis of the voltage value of the high-frequency voltage applied to the power transmission antenna 105 of the TX, the vertical axis of FIG. 9 may be used as a value of a current flowing through the power transmission antenna 105. As in the case of the voltage value, the attenuation state of the current value during the transmission stop period changes with the presence or absence of the foreign substance.

When there is a foreign substance, the waveform attenuation rate is higher than when there is no foreign substance. Therefore, in relation to a change over time in the value of the current flowing through the power transmission antenna 105, a method similar to the above-described method can be applied to detect a foreign substance.

That is, a quality factor calculated from a current waveform, a slope of attenuation of a current value, a difference between current values, a ratio of the current values, an absolute value of the current value, the time until the current value becomes a predetermined value, and the like are used as waveform attenuation indices to determine the presence or absence of a foreign substance and foreign substance detection can be performed.

Moreover, there is a method based on both the attenuation state of the voltage value and the attenuation state of the current value. In this method, the presence or absence of a foreign substance can be determined using an evaluation value calculated from a waveform attenuation index of a voltage value and a waveform attenuation index of a current value.

In addition, the present invention is not limited to an example in which the waveform attenuation index is measured during a period when the TX temporarily stops power transmission. The waveform attenuation index may be measured during a period when the TX temporarily reduces the power supplied from the power supply unit 102 from a predetermined power level to a lower power level.

That is, the waveform attenuation index may be measured during the period when the power supply for transmission to the power transmission antenna 105 is temporarily reduced from a predetermined power level to a lower power level. Moreover, the power transmission unit 103 may limit or stop the power supply for power transmission for the power transmission antenna 105 described above on the basis of an instruction signal of the control unit 101.

Although a configuration in which voltage values or current values at two time points during the period when the TX limits power transmission are measured is adopted in the above-described example, voltage values or current values at three or more time points may be measured.

A foreign substance detection method based on the transmission power waveform according to the waveform attenuation method will be described with reference to FIG. 10. The transmission power waveform shown in FIG. 10 is a transmission power waveform when a foreign substance is detected by the waveform attenuation method, the horizontal axis represents time, and the vertical axis represents a voltage value or a current value of the power transmission antenna 105.

During a transient response period immediately after the TX starts power transmission, the transmission power waveform is not stable. Therefore, during this transient response period, control is performed so that the RX does not perform communication with the TX (communication based on amplitude modulation or load modulation).

Moreover, control is performed so that the TX does not perform communication with the RX (communication based on frequency-shift modulation). Hereinafter, this period is referred to as a communication prohibition period. However, during the communication prohibition period, the TX transmits power to the RX. Also, when the communication prohibition period has elapsed, the TX transmits power to the RX.

Hereinafter, this period is referred to as a power transmission period. When the TX has received a foreign substance detection execution request (packet or command) from the RX, the TX temporarily stops the power transmission or temporarily reduces the transmission power after the elapse of a predetermined period. Hereinafter, this predetermined period is referred to as a preparation period.

The foreign substance detection execution request (packet or command) may be RP0, RP1, or RP2. Because the power transmission unit 103 of the TX, which has received the foreign substance detection execution request, temporarily stops the power transmission or temporarily reduces the transmission power, the amplitude of the transmission power waveform is attenuated. A period from the time when power transmission is temporarily stopped or the time when the transmission power is temporarily reduced to the time when power transmission is resumed or the time when transmission power begins to be restored is referred to as a transmission power control period.

The TX calculates a waveform attenuation index based on the attenuation waveform and compares the calculated waveform attenuation index with a predetermined threshold to determine the presence or absence of a foreign substance or the possibility of the presence of a foreign substance (presence probability) (hereinafter also referred to as foreign substance determination). The foreign substance determination can be made during the transmission power control period, the communication prohibition period, or the power transmission period.

After the elapse of the transmission power control period, when no foreign substance is detected, the TX controls the resumption of power transmission or the restoration of power transmission. During the transient response period immediately after the control is started, because the transmission power waveform is not stable, the period becomes a communication prohibition period. Subsequently, the period shifts to a power transmission period in which power is stably transmitted from the TX to the RX.

As described above, the TX iteratively controls the power transmission start, the communication prohibition period, the power transmission period, the preparation period, and the transmission power control period. The TX calculates a waveform attenuation index based on the attenuation waveform at a predetermined timing and determines the foreign substance from a result of comparing the calculated waveform attenuation index with a predetermined threshold. That is, foreign substance determination can be made on the basis of the voltage values or current values at two or more time points during a predetermined period when a restriction on power transmission (including the stopping of power transmission) is made.

Meanwhile, during the transmission power control period, when elements such as the power reception unit 203, the charging unit 206, and the battery 207 are connected to the power reception antenna 205 and the resonant capacitor 211 of the power reception device 200, the waveform attenuation index is affected by the load of these elements.

That is, the value of the waveform attenuation index changes with the states of the power reception unit 203, the charging unit 206, and the battery 207. As a result, for example, even if the value of the waveform attenuation index is large, it is difficult to distinguish whether it is due to the influence of a foreign substance or a change in the state of each of the power reception unit 203, the charging unit 206, the battery 207, and the like.

Therefore, when a foreign substance is detected by measuring the waveform attenuation index, the control unit 201 of the RX turns off the first switch unit 209 during the preparation period. Thereby, it is possible to suppress the influence of the battery 207.

Moreover, a similar effect can be obtained by setting the state of the first switch unit 209 to a light load state instead of a disconnected state. Moreover, a similar effect can also be obtained even if the RX controls the load so that the power to be received becomes the minimum power instead of the state in which the first switch unit 209 is disconnected.

Alternatively, a similar effect can also be obtained even if the RX controls the load so that the power to be received becomes power within a prescribed predetermined range or power less than or equal to a predetermined threshold instead of a state in which the first switch unit 209 is disconnected.

Here, in the "power within the prescribed predetermined range" or the "power less than or equal to the predetermined threshold," the "power" is a value of power that is about 10% of the reference power. Alternatively, the RX may control the load so that predetermined power is supplied to the load instead of a state in which the first switch unit 209 is disconnected.

These can be implemented by controlling the first switch unit 209. Alternatively, the control unit 201 turns on the second switch unit 210, the second switch unit 210 is short-circuited, and a current flows through a closed loop formed by the power reception antenna 205, the resonant capacitor 211, and the second switch unit 210.

Thereby, it is possible to suppress the influences of the power reception unit 203, the charging unit 206, and the battery 207. The RX transmits a foreign substance detection execution request (command) to the TX and the above-described process is executed during the preparation period.

More accurate foreign substance detection is possible by acquiring a waveform attenuation index based on the transmission power waveform measured in a state in which the first switch unit 209 is disconnected or the second switch unit 210 is turned on and short-circuited (connected). Alternatively, when both the disconnection of the first switch unit 209 and the short circuit (connection) of the second switch unit 210 are performed, more accurate foreign substance detection is possible.

Alternatively, during the preparation period, control may be performed so that the RX shifts the mode to a low power consumption mode or power consumption is uniform in a state in which the first switch unit 209 is turned on and short-circuited and the second switch unit 210 is turned off and disconnected.

When the power consumption in the RX is not uniform or a large amount of power is consumed, the value of the waveform attenuation index based on the attenuation waveform is affected by the fluctuation of power consumption. To suppress the relevant influence, it is effective to limit or stop the operation of the software application operating in the RX or to set the mode of a hardware function block of the RX to a low power consumption mode or an operation stop mode.

It is possible to detect a foreign substance with a higher degree of accuracy by detecting a foreign substance using a waveform attenuation index based on the transmission power waveform measured in a state in which the power consumption of the RX is suppressed.

Likewise, even in the TX, when the waveform attenuation index is measured, if elements such as the power transmission unit 103, the first communication unit 104, and the power supply unit 102 are connected to the power transmission antenna 105 and the resonant capacitor 107 of the power transmission device 100, the waveform attenuation rate is affected by these elements.

That is, the value of the waveform attenuation index changes with the state of each of the power transmission unit 103, the first communication unit 104, and the power supply unit 102. As a result, for example, even if the value of the waveform attenuation index is large, it is difficult to distinguish whether it is due to an influence of a foreign substance or influences of the power transmission unit 103, the first communication unit 104, and the power supply unit 102.

Therefore, when the TX has received a foreign substance detection execution request (command) from the RX, the control unit 101 turns on the switch unit 108 during the preparation period and a current flows through a closed-loop circuit formed by the power transmission antenna 105, the resonant capacitor 107, and the switch unit 108. Thereby, when the waveform attenuation index is measured in the TX, it is possible to suppress the influences of the power transmission unit 103, the first communication unit 104, and the power supply unit 102.

Alternatively, a switch (not shown) is provided between the power transmission antenna 105 and the power transmission unit 103, and the switch is disconnected during the preparation period, such that it is possible to suppress an influence of the power supply unit 102, the power transmission unit 103, and the first communication unit 104.

Alternatively, a switch may be provided between the power transmission unit 103 and the closed-loop circuit formed by the power transmission antenna 105, the resonant capacitor 107, and the switch unit 108. When the TX measures a waveform attenuation index and detects a foreign substance, it is possible to suppress the above-described influence by disconnecting the closed-loop circuit and the power transmission unit according to the control of the switch.

As described above, at least one or more states among a short-circuit (connected) state in which the switch unit 108 is turned on, a disconnected state of a switch related to the power transmission antenna 105 and the power transmission unit 103, and a disconnected state of a switch related to the closed-loop circuit and the power transmission unit 103 are implemented. Thereby, it is possible to detect the foreign substance with higher accuracy.

Next, a method of setting thresholds for waveform attenuation indices for state detection of the TX and the RX based on the waveform attenuation method and foreign substance determination will be described. It is possible to compare a measurement value of the waveform attenuation index with a predetermined threshold and to determine a foreign substance on the basis of a comparison result.

A first threshold setting method is a method in which the TX holds a predetermined value that is a common value that does not depend on the RX serving as a power transmission target. This threshold is a fixed value or a variable value decided by the TX in accordance with a situation.

A waveform attenuation rate of the transmission power waveform during the transmission power control period increases when there is a foreign substance. Therefore, the value of the waveform attenuation index acquired in the absence of the foreign substance is held and this value is set as a threshold. By comparing the measurement value of the waveform attenuation index with the threshold, it can be determined that "there is a foreign substance" or "there is a high possibility of a foreign substance being present."

For example, when a Q-value is adopted as the waveform attenuation index, the TX compares the measurement value of the Q-value with a predetermined threshold. The threshold is set on the basis of a measurement value in the first detection state or a value obtained by adding a measurement error to the measurement value.

When the measurement value of the Q-value is smaller than the threshold, it is determined that "there is a foreign substance" or "there is a high possibility of a foreign substance being present." When the measurement value of the Q-value is greater than or equal to the threshold, it is determined that "there is no foreign substance" or "there is a low possibility of a foreign substance being present."

A second threshold setting method is a method in which the TX adjusts and decides the threshold on the basis of information transmitted from the RX. It should be noted that a difference from the first threshold setting method is that the value of the waveform attenuation index may differ according to the RX of a power transmission target placed on the TX.

The reason is that the electrical characteristics of the RX coupled via the power transmission antenna of the TX affect the value of the waveform attenuation index. For example, when the Q-value is employed as the waveform attenuation index, the Q-value measured by the TX when there is no foreign substance may be likely to differ according to the RX placed on the TX.

Therefore, the RX holds the Q-value information for each TX when placed on the TX in a state in which there is no foreign substance and notifies the TX of Q-value information. The TX adjusts and decides the threshold for each RX on the basis of the Q-value information received from the RX.

More specifically, in the negotiation phase, the TX receives an FOD status packet having reference quality factor value information and adjusts and decides the threshold in the Q-value measurement method.

The reference quality factor value is a quality factor capable of being measured by the terminal of the power transmission antenna of the test TX when the RX is placed on the test TX and there is no foreign substance nearby.

The TX considers that this reference quality factor value corresponds to "Q-value information when the RX is placed on the TX in the absence of the foreign substance" and uses this reference quality factor value to decide the threshold. That is, the TX can adjust and decide a foreign-substance determination threshold based on the waveform attenuation method on the basis of the reference quality factor value.

In addition, the reference quality factor value transmitted from the RX to the TX in the negotiation phase is information used for foreign substance detection in a Q-value measurement method of originally measuring the Q-value in a frequency domain.

However, when the Q-value is used as the waveform attenuation index, a method of deriving the Q-value is different, but the Q-value can also be obtained according to (Eq. (1)), for example, from the waveform of FIG. 9, by the waveform attenuation method of measuring a Q-value in a time domain.

Therefore, it is possible to set a threshold of the Q-value of the waveform attenuation method on the basis of the reference quality factor value. In addition, a value of the waveform attenuation index obtained by adding a predetermined value (a value corresponding to the measurement error) to the reference quality factor value may be set as the foreign substance determination threshold.

Thus, because the TX sets the threshold of the Q-value of the waveform attenuation method on the basis of information already transmitted from the RX to the TX in the negotiation phase, it is not necessary to perform a process such as a new measurement process for setting the threshold. As a result, it is possible to set the threshold in a shorter time.

A third threshold setting method is a method in which the TX measures the waveform attenuation index in the absence of a foreign substance and the TX adjusts and decides the threshold on the basis of the information about the measurement result. Hereinafter, a timing for measuring the waveform attenuation rate in advance in the absence of the foreign substance will be described.

When it is determined that there is no foreign substance as a result of performing foreign substance detection by the Q-value measurement method in the negotiation phase of the WPC standard, it transitions to the calibration phase and the power transfer phase.

In other words, the fact that the phase transitions to a phase subsequent to the negotiation phase indicates that it is determined that there is no foreign substance as a result of foreign substance detection by the Q-value measurement method. In any of the negotiation phase, the calibration phase, and the power transfer phase, there is a high possibility that the waveform attenuation index can be measured in the absence of the foreign substance.

Therefore, the timing for measuring the waveform attenuation index in the absence of the foreign substance may be any of the negotiation phase, the calibration phase, and the power transfer phase.

For example, a case where the waveform attenuation index is measured in the power transfer phase is assumed. The timing for measuring the waveform attenuation index in the absence of the foreign substance is set at the first stage of the power transfer phase.

The reason is that the probability that the foreign substance enters a nearby area of the TX and the RX increases as the more time elapses from the time when it is determined that there is no foreign substance by the Q-value measurement method. The RX or the TX designates the timing and the TX measures the waveform attenuation index at that time and sets the value of the waveform attenuation index as a threshold.

When the RX designates the timing, the RX notifies the TX of the timing by transmitting a predetermined packet. Moreover, when the TX designates the timing, the TX notifies the RX of the timing by transmitting a predetermined packet. In addition, a value obtained by adding a predetermined value (a value corresponding to the measurement error) to the waveform attenuation index may be set as a foreign substance determination threshold.

A fourth threshold setting method is a method in which the TX adjusts and decides the threshold according to transmission power. The value of the waveform attenuation index is likely to differ according to the transmission power of the TX. The reason is that an amount of generated heat, the characteristics of an electric circuit of the TX, and the like change with a magnitude of the transmission power of the TX, and they affect the value of the waveform attenuation index.

The TX can make more accurate foreign substance determination by measuring the waveform attenuation index for transmission power and adjusting and deciding the threshold on the basis of a measurement result.

FIG. 11 is an explanatory diagram of a threshold setting method for determining a foreign substance for transmission power of the TX in the waveform attenuation method. In FIG. 11, the horizontal axis represents transmission power of the power transmission device 100 and the vertical axis represents a waveform attenuation index (a waveform attenuation rate) of a voltage waveform or a current waveform.

On a graph line indicated by a linear line segment 1102, a point 1100 corresponds to a transmission power value Pt1 and a waveform attenuation index δ1 and a point 1101 corresponds to a transmission power value Pt2 and a waveform attenuation index δ2. On the graph line, a point 1103 corresponds to a transmission power value Pt3 and a waveform attenuation index δ3.

First, the RX performs a control process so that the RX is in the light load state when power is transmitted from the TX. In the light load state, power is not supplied to the load of the RX, only power below the threshold is supplied, or power within a predetermined range (hereinafter referred to as a "third range") is supplied.

The transmission power value of the TX in this state is assumed to be Pt1. Also, the RX transmits a packet indicating a request for measuring the waveform attenuation index to the TX. When the packet is received, the TX stops the power transmission or reduces the transmission power while the load of the RX is controlled in the light load state and measures the waveform attenuation index δ1.

At this time, the TX recognizes the transmission power value Pt1, and stores the calibration point CP 1100 at which the transmission power value Pt1 and the waveform attenuation index δ1 are associated in the memory. Next, the RX controls the connected load state.

The connected load state is a state in which the maximum power is supplied to the load of the RX when power is transmitted from the TX, or power greater than or equal to a predetermined threshold is supplied, or power within a predetermined range (hereinafter referred to as a "fourth range") is supplied.

Here, the "fourth range" is a power range wider than the "third range." The transmission power value of the TX in this state is assumed to be Pt2. Also, the RX transmits a packet indicating a request for measuring the waveform attenuation index to the TX.

When the packet is received, the TX stops the power transmission or reduces the transmission power while the load of the RX is controlled in the connected load state, and measures the waveform attenuation index $\delta2$. At this time, the TX stores the CP 1101 at which the transmission power value Pt2 and the waveform attenuation index $\delta2$ are associated in the memory.

Subsequently, the TX generates a line segment 1102 by performing linear interpolation between the CP 1100 and the CP 1101. The line segment 1102 indicates a relationship between the transmission power in the first detection state in which there is no foreign substance near the TX and the RX and the waveform attenuation index of the waveform observed by the power transmission antenna 105.

Therefore, the TX can estimate the waveform attenuation index of the waveform observed by the power transmission antenna 105 for each transmission power value in the first detection state on the basis of the line segment 1102. For example, in the case of the transmission power value Pt3, the waveform attenuation index is estimated as $\delta3$ from a point 1103 on the line segment 1102 corresponding to Pt3.

The TX can calculate a threshold for use in determining the presence or absence of the foreign substance for each transmission power value on the basis of an estimation result. For example, a waveform attenuation index, which is larger by a predetermined value (a value corresponding to the measurement error), can be set as a foreign substance determination threshold with respect to a result of estimating the waveform attenuation index in the first detection state in a certain transmission power value.

The CAL process performed by the power transmission device 100 and the power reception device 200 so that the power transmission device 100 acquires a combination of the transmission power value and the waveform attenuation index is hereinafter referred to as the "CAL process of the waveform attenuation method."

Although measurement processes are performed at two points of the transmission power values Pt1 and Pt2 in the above-described example, the waveform attenuation index of transmission power may be calculated by performing a measurement process at three or more points so that accuracy is further improved.

The RX may perform control in the light load state and control in the connected load state after a notification of a predetermined packet indicating that the control is executed is provided to the TX. Moreover, either of the two controls may be performed first.

The process of calculating the threshold for use in determining the foreign substance for each load (or for each transmission power value) described in the present embodiment may be performed in the calibration phase. As described above, in the calibration phase, the TX acquires data necessary for detecting the foreign substance by the power loss method.

At that time, the TX acquires the reception power value of each RX and data about power loss when the load state of the RX is the light load state and the connected load state. Therefore, the measurement at the CP 1100 and the CP 1101 in FIG. 11 may be performed together with the measurement of power loss when the RX is in the light load state and the connected load state in the calibration phase.

For example, when a signal having the first reference reception power information has been received from the RX, the TX performs measurement at the CP 1100 in addition to the predetermined process to be performed in the calibration phase. The first reference reception power information is information about RP 1 specified in the WPC standard, but other messages may be used.

Moreover, when a signal having the second reference reception power information has been received from the RX, the TX performs measurement at the CP 1101 in addition to the predetermined process to be performed in the calibration phase. The second reference reception power information is information about RP2 specified in the WPC standard, but other messages may be used. Because it is not necessary to provide a separate period for performing measurement at the CP 1100 and the CP 1101, the measurement at the CP 1100 and the CP 1101 can be executed in a shorter time.

Thus, the TX adjusts and sets the threshold of the waveform attenuation index for the transmission power on the basis of the information about the waveform attenuation index measured by the TX for transmission power. For example, when a Q-value is used as a waveform attenuation index, the TX compares the measurement value of the Q-value with the threshold decided by the above-described method.

When the measurement value of the Q-value is smaller than the threshold, it is determined that "there is a foreign substance" or "there is a possibility of a foreign substance being present." When the measurement value of the Q-value is greater than or equal to the threshold, it is determined that "there is no foreign substance" or "there is a low possibility of a foreign substance being present." As described above, a threshold in transmission power of the TX is set and more accurate foreign substance determination is possible.

The number of foreign substance determination thresholds set by the above method is not limited to one. A plurality of thresholds can be set in stages. For example, the first threshold is set as a threshold for determining that "there is a state abnormality," the second threshold is set as a threshold for determining that "there is a high probability of a state abnormality," the third threshold is set as a threshold for determining that "there is a low possibility of a state abnormality," and the fourth threshold is set as a threshold for determining "there is no state abnormality."

Moreover, there is a possibility that accuracy cannot be ensured only by executing the foreign substance detection process once. For example, when one transmission power control process is performed in the execution of foreign substance detection of the waveform attenuation method and the foreign substance determination is made from the waveform attenuation index at that time, there is a possibility that the amplitude and phase of the transmission power waveform during the transmission power control period may be disturbed.

The introduction of noise during the transmission power control period, the position shift of the RX placed on the TX, and the like may occur. In this case, when the value of the waveform attenuation index obtained from the transmission power waveform during one transmission power control period is not accurate, there is a possibility that the false determination may occur in the foreign substance determination.

Therefore, the TX can perform a plurality of transmission power controls, measure a waveform attenuation index from the transmission power waveform during a plurality of transmission power control periods, and make more accurate foreign substance determination on the basis of a plurality of measurement results.

Next, a first measurement method will be described as a coupling state index measurement method of the power transmission antenna and the power reception antenna. The measurement performed in the first measurement method is hereinafter referred to as first measurement. In wireless power transmission, power is transmitted by electromagnetically coupling the power transmission antenna 105 and the power reception antenna 205.

A voltage is induced in the power reception antenna 205 by causing an AC current to pass through the power transmission antenna 105 and changing a magnetic flux passing through the power reception antenna 205. The coupling coefficient (denoted by k and its value is referred to as a k value), which is an index indicating the coupling state between the power transmission antenna and the power reception antenna, is, for example, "k = 1" when all (100%) of the magnetic flux generated by the power transmission antenna passes through the power reception antenna.

Moreover, when 70% of the magnetic flux generated by the power transmission antenna passes through the power reception antenna, "k = 0.7." In this case, the remaining (30%) magnetic flux generated by the power transmission antenna becomes the leakage flux.

This is the magnetic flux that has not passed through the power reception antenna within the magnetic flux generated by the power transmission antenna. Therefore, when the coupling state between the power transmission antenna and the power reception antenna is suitable and the k value is large, the transmission efficiency of the power transmitted from the TX to the RX is high. In contrast, when the coupling state is not suitable and the k value is small, the transmission efficiency of the power transmitted from the TX to the RX is low.

Factors that decrease a value of the coupling coefficient may be a foreign substance (a metallic piece or the like) located between the power transmission antenna and the power reception antenna and a position shift between the power transmission antenna and the power reception antenna. Alternatively, the factor may be an increase in the distance between the power transmission antenna and the power reception antenna.

If a foreign substance is located between the power transmission antenna and the power reception antenna, there is a possibility that heat will be generated in the foreign substance. Moreover, when the position shift or separation of the power transmission antenna and the power reception antenna occurs, because the leakage flux increases, there is a possibility that large noise will be caused in the surroundings.

When the k value is small, appropriate control is required to implement safer and higher-quality wireless power transmission. In the present embodiment, a process for detecting the coupling state (including the coupling coefficient) between the power transmission antenna and the power reception antenna is executed so that the accuracy of detection of the foreign substance and the detection accuracy of a case where the position shift or the distance is large are improved.

A coupling state index measurement method for the power transmission antenna and the power reception antenna will be described with reference to FIGS. 12(A) and 12(B). FIG. 12(A) is an explanatory equivalent circuit diagram of the first measurement method. The definitions of various quantities related to the power transmission antenna (power transmission coil) on the primary side (the TX) are shown below.

- r1: Winding resistance of the power transmission antenna.
- L1: Self-inductance of the power transmission antenna.
- V1: Power transmission voltage (input voltage) applied to the power transmission antenna measured by the TX.

Moreover, the definitions of various quantities related to the power reception antenna (power reception coil) on the secondary side (the RX) are shown below.

- r2: Winding resistance of the power reception antenna.

- L2: Self-inductance of the power reception antenna.
- V2: Power reception voltage (output voltage) applied to the power reception antenna measured by the RX.

The coupling coefficient k between the power transmission antenna and the power reception antenna can be calculated by the following Eq. (2).

$$k = (V2/V1) \cdot \sqrt{(L1/L2)} \text{ (Eq. (2))}$$

When the TX calculates the coupling coefficient k, the RX notifies the TX of the measured power reception voltage V2 and the value of the self-inductance L2 of the power reception antenna held by the RX in advance. The TX calculates the k value using the measured power transmission voltage V1, the value of the self-inductance L1 of the power transmission antenna held in advance, and the power reception voltage V2 and the value of the self-inductance L2 received from the RX.

Alternatively, the RX can notify the TX of a constant calculated using both or one of L1 and L2 and V2 and the TX can calculate the k value using the constant and V2 received from the RX and the power transmission voltage V1 measured by the TX.

On the other hand, when the RX calculates the coupling coefficient k, the TX notifies the RX of the measured power transmission voltage V1 and the value of the self-inductance L1 of the power transmission antenna held in advance. The RX calculates the k value using the measured power reception voltage V2, the value of the self-inductance L2 of the power reception antenna held in advance, and the power transmission voltage V1 and the value of the self-inductance L1 received from the TX.

Alternatively, the TX can notify the RX of V1 and the constant calculated using both or one of L1 and L2 and the RX can calculate the k value using the constant received from the TX, V1, and the power reception voltage V2 measured by the RX.

For the power transmission voltage V1, the TX actually measures a voltage applied to the power transmission antenna or the TX calculates the voltage from a set value of the transmission power. Alternatively, the power transmission voltage V1 may be used as a set value of the power transmission voltage at the time of power transmission.

Moreover, it is possible to obtain the power transmission voltage (denoted by V3) applied to a circuit (e.g., an inverter) provided in the power transmission unit 103 of the TX and the power transmission voltage V1 applied to the power transmission antenna from the voltage applied between both ends of the resonant capacitor 107.

Here, the power transmission voltage V3 applied to the circuit provided in the power transmission unit 103 of the TX is, for example, an inverter input voltage input to the inverter provided in the power transmission unit 103 of the TX or an inverter output voltage output by the inverter.

In this case, the TX may also calculate the power transmission voltage V3 from the set value of the transmission power. Alternatively, the TX may actually measure the power transmission voltage V3 and the voltage applied between both ends of the resonant capacitor 107 and obtain the power transmission voltage V1 using the measured voltages. Alternatively, the TX may transmit the values of the measured power transmission voltage V3 and the voltage applied between both ends of the resonant capacitor 107 to the RX and the RX may calculate the k value by obtaining the power transmission voltage V3.

Moreover, when the TX or the RX performs the first measurement, the RX may perform control so that the terminal of the power reception antenna 205 is in an open state by turning off the third switch unit 213. Thereby, as shown in FIG. 12(A), both ends of the power reception antenna can be made in the open state.

Because the first measurement is not affected by the resonant capacitor 211, the power reception unit 203, the charging unit 206, and the battery 207, it is possible to measure the coupling coefficient k with higher accuracy. Moreover, it is possible to obtain the power reception voltage (denoted by V4) applied to the circuit (e.g., the rectification unit) provided in the power reception unit 203 of the RX and the power reception voltage V2 applied to the power reception antenna from the voltage applied between both ends of the resonant capacitor 211.

Here, the power reception voltage V4 applied to the circuit provided in the power reception unit 203 of the RX is, for example, the rectification-unit-specific input voltage input to the rectification unit provided in the power reception unit 203 of the RX. Alternatively, it is possible to obtain the power reception voltage V2 applied to the power reception antenna from the power reception voltage (denoted by V5) of the circuit (e.g., the rectification unit) of the power reception unit 203 of the RX and the voltage applied between both ends of the resonant capacitor 211.

Here, the power reception voltage V5 applied to the circuit provided in the power reception unit 203 of the RX is, for example, a rectification-unit-specific output voltage output from the rectification unit provided in the power reception unit 203 of the RX. In this case, the RX may actually measure the power reception voltage V4 and the voltage applied between both ends of the resonant capacitor 211 and obtain the power reception voltage V2 using the measured voltages.

Alternatively, the RX may actually measure the power reception voltage V5 and the voltage applied between both ends of the resonant capacitor 211 and obtain the power reception voltage V2 using the measured voltages. Alternatively, the RX may transmit the values of the measured power reception voltage V4 and the voltage applied between both ends of the resonant capacitor 211 to the TX and the TX may calculate the k value by obtaining the power reception voltage V2.

Alternatively, the RX may transmit the values of the measured power reception voltage V5 and the voltage applied between both ends of the resonant capacitor 211 to the TX and the TX may calculate the k value by obtaining the power reception voltage V2. Alternatively, when the TX or the RX performs the first measurement, the RX may perform control so that the state is the light load state or the connected load state.

By making the load state of the RX uniform, it is possible to measure the coupling coefficient k with higher accuracy. Alternatively, the TX or the RX may perform control so that the RX performs the first measurement in both the light load state and the connected load state.

Alternatively, the TX or the RX may perform control so that the RX performs the first measurement in each of the three or more load states. By measuring the coupling state in a plurality of load states of the RX and determining the coupling state on the basis of the load states, it is possible to determine the coupling state with higher accuracy.

As an index indicating an electromagnetic coupling state between the power transmission antenna and the power reception antenna, a plurality of quantities other than the coupling coefficient are present and are collectively referred to as a "coupling state index" in the present embodiment. Each coupling state index has a value corresponding to the electromagnetic coupling state between the power transmission antenna and the power reception antenna. Likewise, the content of the present embodiment can be applied even if a coupling state index other than the coupling coefficient is used.

For example, as a method of calculating the coupling state index, there is a method using a power transmission voltage V3 applied to a circuit (e.g., an inverter) provided in the power transmission unit 103 of the TX and a power reception voltage (denoted by V4) applied to a circuit (e.g., a rectification unit) provided in the power reception unit 203 of the RX.

Here, the power transmission voltage V3 applied to the circuit provided in the power transmission unit 103 of the TX is, for example, the inverter input voltage input to the inverter provided in the power transmission unit 103 of the TX or the inverter output voltage output by the inverter.

Here, the power reception voltage V4 applied to the circuit provided in the power reception unit 203 of the RX is, for example, the rectification-unit-specific input voltage input to the rectification unit provided in the power reception unit 203 of the RX. Using these, it is possible to perform a calculation process for the coupling state index between the power transmission antenna and the power reception antenna.

Alternatively, it is possible to calculate the coupling state index between the power transmission antenna and the power reception antenna using the power transmission voltage V3 applied to the circuit (e.g., the inverter) provided in the power transmission unit 103 of the TX and the power reception voltage (denoted by V5) of the circuit (e.g., the rectification unit) provided in the power reception unit 203 of the RX.

Here, the power reception voltage V5 applied to the circuit provided in the power reception unit 203 of the RX is, for example, the rectification-unit-specific output voltage output from the rectification unit provided in the power reception unit 203 of the RX. Alternatively, the voltage is a voltage applied to the load (the charging unit or the battery).

The TX notifies the RX of the power transmission voltage V3 and the RX can calculate a coupling state index using V3 indicated in the notification and V4 or V5. At this time, the TX notifies the RX of a constant calculated using the electrical characteristics (e.g., L1) of the power transmission antenna and the RX can calculate a coupling state index using the constant.

Alternatively, the RX notifies the TX of the power reception voltage V4 or the power reception voltage V5 and the TX calculates a coupling state index using V4 or V5 and V3 indicated in the notification. At this time, the RX notifies the TX of a constant calculated using the electrical characteristics (e.g., L2) of the power reception antenna and the TX can calculate a coupling state index using the constant.

The TX and the RX transmit and receive voltage values from V1 to V5, values of self-inductance L1 and L2, and information about constants indicating the electrical characteristics of the power transmission antenna and the power reception antenna. Hereinafter, a timing for measuring the voltage value and a timing for transmitting and receiving each information item will be described.

The measurement of each voltage value is executed, for example, in the ping phase. In the ping phase, the TX transmits a digital ping to the RX. Therefore, any voltage value of V1, V2, V3, V4, and V5 generated at the time of transmission of the digital ping can be used. In the ping phase, the TX and the RX measure any value from V1 to V5 and store and hold the measured value in the memory 106 or the memory 208.

The TX transmits a predetermined transmission request packet for requesting the RX to transmit a packet including information about any or all of the voltage values of V2, V4, and V5. When the transmission request packet is received, the RX transmits a predetermined packet having information about any or all of the voltage values of V2, V4, and V5 to the TX.

The TX receives a predetermined packet having information about any or all of the voltage values of V2, V4, and V5 indicated in the notification from the RX, and stores the information in the memory 106. The information included in the predetermined packet may include not only the voltage of the RX but also information such as the reception power, the required reception power value, the value of the self-inductance L2, and a constant calculated using the electrical characteristics of the power reception antenna.

Moreover, the information may also include information about a temperature of the RX. The TX can receive the information from the RX and perform more appropriate control using the information and the calculated coupling state index.

As the predetermined packet, a signal strength data packet can be used to notify the TX of information about the RX. Alternatively, the predetermined packet may be an identification data packet or an extended identification data packet in the I&C phase.

Alternatively, the packet may be a configuration data packet. Alternatively, the packet may be a packet in the calibration phase or the power transfer phase.

That is, RP1, RP2, and RP0 may be used. In addition, the TX is not limited to an example in which a voltage value generated at the time of transmission of a digital ping is used. In the selection phase, the TX may use any voltage value from V1 to V5 generated at the time of transmission of the analog ping. Alternatively, any voltage value from V1 to V5 generated when the TX transmits power to the RX in the power transfer phase may be used.

The RX transmits a predetermined transmission request packet for requesting the TX to transmit a packet including information about one or both of the voltage values of V1 and V3. When the transmission request packet is received, the TX transmits a predetermined packet having information about one or both of the voltage values of V1 and V3 to the RX.

The RX receives a predetermined packet having information about one or both of the voltage values of V1 and V3 indicated in the notification from the TX, and stores the information in the memory 208. The information included in the predetermined packet may include not only the voltage of the TX, but also information such as a transmission power value, an available transmission power value, a value of self-inductance L1, and a constant calculated using the electrical characteristics of the power transmission antenna.

Moreover, a foreign substance detection result of the above-described foreign substance detection method (the power loss method, the Q-value measurement method, or the waveform attenuation method) and information about the temperature of the TX may be included. The RX can receive the information from the TX and perform more appropriate control using the information and the calculated coupling state index.

Moreover, a power transmitter capabilities (CAP) data packet can be used as the predetermined packet to notify the RX of information about the TX.

Alternatively, a power transmitter identification (ID) data packet can be used to notify the RX of information about the TX. In addition, the TX is not limited to an example in which a voltage value generated at the time of transmission of a digital ping is used.

In the selection phase, the TX may use any voltage value from V1 to V5 generated at the time of transmission of the analog ping. Alternatively, any voltage value from V1 to V5 generated when the TX transmits power to the RX in the power transfer phase may be used.

When the first measurement is performed, the RX may perform control so that the third switch unit 213 located between the resonant capacitor 211 and the power reception unit 203 is turned off and the terminals of the circuit including the power reception antenna 205 and the resonant capacitor 211 are in an open state.

Thereby, because the first measurement is not affected by the power reception unit 203, the charging unit 206, and the battery 207 in the implementation of the first measurement method, it is possible to measure the coupling state index with higher accuracy.

Next, a second measurement method will be described as another example of the coupling state index measurement method of the power transmission antenna and the power reception antenna. The measurement performed in the second measurement method is hereinafter referred to as the second measurement. FIG. 12(B) is an explanatory equivalent circuit diagram of the second measurement method.

r1, r2, L1, and L2 are the same as in FIG. 12(A). The definitions of various quantities related to the power transmission antenna (coil) on the primary side (the TX) are shown below.

- V6: Input voltage (power transmission voltage) of the power transmission antenna when the power reception antenna side is in a short state.
- V7: Input voltage (power transmission voltage) of the power transmission antenna when the power reception antenna side is in an open state.
- I1: Current flowing through the power transmission antenna when the power reception antenna side is in a short state.
- I2: Current flowing through the power transmission antenna when the power reception antenna side is in an open state.

The coupling coefficient k can be calculated by the following Eq. (3).

$$k = \sqrt{(1 - Lsc/Lopen)} \quad \text{(Eq. (3))}$$

Lsc in Eq. (3) denotes the inductance of the power transmission antenna when both ends of the power reception antenna are short-circuited. For example, the control unit 201 causes the third switch unit 213 and the second switch unit 210 to be in an ON state (a short-circuit state).

In this state, an Lsc value can be acquired by measuring the inductance value of the power transmission antenna. The inductance value of the power transmission antenna can be obtained from the input voltage V6 and the current I1 of the power transmission antenna.

Lopen in Eq. (3) denotes the inductance of the power transmission antenna when both ends of the power reception antenna are opened. For example, the control unit 201 causes the third switch unit 213 to be in an OFF state (an open state). In this state, an Lopen value can be acquired by measuring the inductance value of the power transmission antenna.

The inductance value of the power transmission antenna can be obtained from the input voltage V7 and the current I2 of the power transmission antenna. In the second measurement method, the coupling state index (coupling coefficient) can be obtained from the input voltage and current of the power transmission antenna when both ends of the power reception antenna are short-circuited and when they are open.

Moreover, the TX can calculate a coupling state index on the basis of the power transmission voltage and current applied to the circuit (e.g., the inverter) included in the power transmission unit 103. In this case, the input voltage V6 or V7 is a power transmission voltage applied to the circuit (e.g., the inverter) included in the power transmission unit 103, for example, an inverter input voltage or an inverter output voltage.

Moreover, the input voltage V6 or V7 may be a voltage applied between both terminals of a series resonant circuit consisting of the power transmission antenna and the resonant capacitor. Alternatively, the power transmission voltage applied to the circuit (e.g., the inverter) provided in the power transmission unit 103 and the voltage applied between both ends of the resonant capacitor 107 may be measured and the voltage applied to the power transmission antenna may be calculated from measurement results.

That is, it is possible to obtain a coupling state index from results of measuring the power transmission voltage applied to the circuit (e.g., the inverter) included in the power transmission unit 103 and the voltage applied between both ends of the resonant capacitor 107. In this case, the power transmission voltage applied to the circuit (e.g., the inverter) included in the power transmission unit 103 may be calculated by the TX from the set value of the transmission power.

Moreover, in FIG. 12(B), the current I1 or I2 is not limited to the current flowing through the power transmission antenna, but may be, for example, a current flowing through the circuit (e.g., the inverter) including the power transmission unit 103. Here, the current flowing through the circuit provided in the power transmission unit 103 of the TX is, for example, an inverter input current or an inverter output current.

An example in which the control unit 201 implements the open state and the short-circuit state of the power reception antenna according to the control of the second switch unit 210 and the third switch unit 213 has been described. These states may be implemented in the power reception unit 203.

Moreover, instead of the short-circuit state, the light load state may be used. Moreover, instead of the open state, the connected load state may be used.

In the second measurement method, the TX can calculate a coupling state index by measuring the input voltages V6 and V7 and the currents I1 and I2. Therefore, because information such as the voltage value and the inductance value of the power reception antenna measured by the RX is not required, it is not necessary to provide a notification of the information from the RX to the TX.

However, when the TX measures the input voltage V6 and the current I1, the RX needs to short (short-circuit) both terminals of the circuit including the power reception antenna. Moreover, when the TX measures the input voltage V7 and the current I2, the RX needs to open both terminals of the circuit including the power reception antenna.

That is, in accordance with a timing when the TX measures the input voltage and current, the RX needs to control both terminals of the circuit including the power reception antenna so that they are in a short or open state.

If the control is completed, the TX performs the measurement. In relation to a measurement timing, the TX performs a decision process and provides a notification to the RX or the RX performs a decision process and provides a notification to the TX. Moreover, the RX provides a notification to the TX when control is completed so that both terminals of the circuit including the power reception antenna are in the short or open state.

These notifications are provided according to communication based on the WPC standard performed between the first communication unit 104 of the TX and the first communication unit 204 of the RX or communication based on a standard other than the WPC standard performed between the second communication unit 109 of the TX and the second communication unit 212 of the RX.

Measurements of the input voltages V6 and V7 and the currents I1 and I2 are performed, for example, in the ping phase. In the ping phase, the TX transmits a digital ping to the RX. Therefore, the values of V6 and V7 and the currents I1 and I2 generated at the time of transmission of the digital ping can be used.

In the ping phase, the TX acquires the values of V6, V7, I1, and I2, holds the values in the memory 106, and calculates a coupling state index. In addition, the TX is not limited to an example in which the voltage value and the current value generated at the time of transmission of a digital ping are used.

For example, in the selection phase, the values of V6, V7, I1, and I2 generated when the TX transmits the analog ping may be used. Alternatively, the voltage values of V6, V7, I1, and I2 generated when the TX transmits power to the RX in the power transfer phase may be used.

In the present disclosure, either the first measurement method or the second measurement method can be applied to the coupling state index measurement method for the power transmission antenna and the power reception antenna. Hereinafter, a method of setting a state determination threshold for a coupling state index acquired by the first or second measurement method will be described.

The state determination is the determination related to the detection of a foreign substance between the power transmission antenna and the power reception antenna, the determination related to the detection of a position shift between the power transmission antenna and the power reception antenna, the determination related to detection that the power transmission antenna and the power reception antenna are separated, or the like.

It is possible to perform the first or second measurement method and determine the presence or absence of a state abnormality using the state determination threshold. Hereinafter, the first to fourth threshold setting methods will be described.

The first threshold setting method is a method of setting the value of the coupling state index in the absence of a state abnormality as a threshold for the coupling state index for use in state detection between the power transmission antenna and the power reception antenna.

In the state detection, for example, a determination result such as "there is a state abnormality," "there is a high possibility of a state abnormality," "the possibility of a state abnormality is low," or "there is no state abnormality" can be obtained. It is assumed that the RX is placed on the test TX and there is no state abnormality between the power transmission antenna and the power reception antenna.

In this case, the value of the coupling state index between the test TX including the power transmission antenna and the RX including the power reception antenna can be set as a threshold. The value (threshold) of the coupling state index measured in advance is held in the memory by the RX and the RX notifies the TX of the threshold.

The TX performs a determination process related to state detection using the threshold. This threshold may be included within an FOD status data packet specified in the WPC standard and the FOD status data packet is transmitted by the RX to the TX. Alternatively, a value of the coupling state index between the power transmission antenna and the power reception antenna for obtaining predetermined power transmission efficiency may be set as the threshold.

In state detection, for example, the following determination results can be obtained.

- "The predetermined power transmission efficiency cannot be obtained" or "the coupling between the power transmission antenna and the power reception antenna is weak."
- "There is a high possibility that the predetermined power transmission efficiency cannot be obtained" or "there is a possibility that the coupling between the power transmission antenna and the power reception antenna will be weak."
- "There is a high possibility that predetermined power transmission efficiency can be obtained" or "there is a possibility that the coupling state between the power transmission antenna and the power reception antenna is suitable."
- "Predetermined power transmission efficiency can be obtained" or "the coupling state between the power transmission antenna and the power reception antenna is suitable."

Here, a case where the RX is placed on the test TX, there is no state abnormality between the power transmission antenna and the power reception antenna, and predetermined power transmission efficiency is obtained is assumed. In this case, a value of the coupling state index between the test TX including the power transmission antenna and the RX including the power reception antenna can be set as the threshold.

The RX holds the value of the pre-measured coupling state index as the threshold in the memory and notifies the TX of the threshold. The TX performs a determination process related to state detection using the threshold. This threshold may be included within the FOD status data packet specified in the WPC standard and the FOD status data packet may be transmitted by the RX to the TX.

The second threshold setting method is a method in which the TX and the RX set a coupling state index measured by the first or second measurement method as the threshold in a predetermined state. The predetermined state is "a state in which there is no state abnormality between the power transmission antenna and the power reception antenna."

In a method of confirming the state, it is possible to use state detection of the TX and the RX such as foreign substance detection by the power loss method, foreign substance detection by the waveform attenuation method, foreign substance detection by the Q-value measurement method, and foreign substance detection based on the temperature of the TX or the RX to be described below.

As a result, when it is determined that there is no state abnormality, it can be confirmed that there is no state abnormality between the power transmission antenna and the power reception antenna with a high probability. That is, this confirmation is executed by methods and means other than the first or second measurement method.

As a result, if it is determined that "there is no state abnormality" (or "there is no foreign substance"), the coupling state index is measured using the first or second measurement method, and an appropriate threshold is set on the basis of the measurement result.

For example, in the WPC standard, a foreign substance detection process using the Q-value measurement method is executed during the negotiation phase or the renegotiation phase. When it is determined that "there is no state abnormality" (or "there is no foreign substance") as a result of the foreign substance detection process, the coupling state index is measured using the first or second measurement method in the negotiation phase, the renegotiation phase, or a subsequent phase.

On the basis of the measurement results, it is possible to set a more appropriate threshold. Moreover, the foreign substance detection process by the power loss method is executed during the power transfer phase. After the foreign substance detection process is executed, the coupling state index is measured using the first or second measurement method, and a more appropriate threshold can be set on the basis of the measurement result.

Alternatively, in the selection phase or the ping phase, a foreign substance detection process can be executed using a quality factor or the like. In this case, the coupling state index is measured using the first or second measurement method after the phase in which the foreign substance detection process is executed, and an appropriate threshold can be set on the basis of a measurement result.

Alternatively, the foreign substance detection process by the waveform attenuation method described above is executed during the power transfer phase. After the foreign substance detection process is executed, the coupling state index is measured using the first or second measurement method, and a more appropriate threshold can be set on the basis of the measurement result.

Next, a third threshold setting method will be described with reference to FIG. 13. FIG. 13 is an explanatory diagram of a threshold setting method in state detection using a coupling state index. In FIG. 13, the horizontal axis represents transmission power and the vertical axis represents a coupling state index.

On a graph line indicated by a linear line segment 1202, a point 1200 corresponds to a transmission power value Pt1 and a coupling state index value k1, and a point 1201 corresponds to a transmission power value Pt2 and a coupling state index value k2.

On the graph line, a point 1203 corresponds to a transmission power value Pt3 and a coupling state index value k3. For the calculation of each coupling state index value, it is possible to use the first measurement method or the second measurement method described above.

As shown in FIG. 3, because the charging unit 206 and the battery 207 are connected to the power reception unit 203 of the RX as a load, the calculated coupling state index value changes with the load state. It is necessary to set a threshold for the coupling state index so that it is determined whether or not there is a state abnormality according to the load state.

First, when power is transmitted from the TX, the RX performs control so that the load is in a light load state. The light load state is a state in which power is not supplied to the load of the RX or only power less than or equal to the threshold is supplied thereto.

Alternatively, the state is a load state in which the reception power value of the RX is within a prescribed predetermined range (hereinafter referred to as a "fifth range"). The transmission power value of the TX in this state is denoted by Pt1. The RX transmits a packet indicating a request for measuring the coupling state index to the TX.

Alternatively, the TX transmits a packet indicating a request for measuring the coupling state index to the RX. In this state, the TX and the RX measure the power transmission voltage on the TX side and the power reception voltage on the RX side.

The TX and the RX exchange information such as the values of V1 to V7, the values of self-inductance L1 and L2, or constants calculated using the electrical characteristics of the power transmission antenna and the power reception antenna, and the TX or the RX calculates the coupling state index value k1.

When the RX calculates the coupling state index value k1, a notification of a calculation result is provided to the TX. When the TX calculates the coupling state index value k1, a notification of a calculation result and Pt1 are provided to the RX. At this time, the TX recognizes the transmission power value Pt1 and stores the CP 1200 at which Pt1 and k1 are associated in the memory. Alternatively, the RX stores the CP 1200 at which Pt1 and k1 are associated in the memory.

Next, the RX performs control so that the load of the RX is in the connected load state when power is transmitted from the TX. The connected load state is a state in which the maximum power is supplied to the load of the RX or power greater than or equal to the threshold is supplied thereto.

Here, the "maximum power" is power with a value close to the reference power. Alternatively, the state is a load state in which the reception power value of the RX is within a prescribed predetermined range (hereinafter referred to as a "sixth range").

A power value of the sixth range is larger than that of the fifth range. The transmission power value of the TX in this state is denoted by Pt2. The RX transmits a packet indicating a request for measuring the coupling state index to the TX.

Alternatively, the TX transmits a packet indicating a request for measuring the coupling state index to the RX. In that state, the TX and the RX measure the power transmission voltage of the TX side and the power reception voltage of the RX side.

The TX and the RX exchange information such as the values of V1 to V7, the values of self-inductance L1 and L2, or the constants calculated using the electrical characteristics of the power transmission antenna and the power reception antenna and the TX or the RX calculates the coupling state index value k2.

When the RX calculates the coupling state index value k2, a notification of a calculation result is provided to the TX. When the TX calculates the coupling state index value k2, a notification of a calculation result and Pt2 are provided to the RX. The TX stores a CP 1201 at which Pt2 and k2 are associated in the memory.

Alternatively, the RX stores the CP 1201 at which Pt2 and k2 are associated in the memory. Subsequently, the TX performs linear interpolation between the CP 1200 and the CP 1201 to generate a line segment 1202.

The line segment 1202 indicates a relationship between the transmission power and the coupling state index in a state in which there is no state abnormality in the vicinity of the TX and the RX. The TX can estimate the coupling state index value for each transmission power value in a state in which there is no state abnormality in the vicinity of the TX and the RX using the line segment 1202.

For example, it is assumed that the transmission power value is Pt3. In this case, a coupling state index value k3 can be estimated from a point 1203 on the line segment 1202 corresponding to the transmission power value Pt3. The TX can calculate a threshold for use in determining the presence or absence of a state abnormality for each transmission power value on the basis of an estimation result.

For example, a coupling state index value obtained by adding a predetermined value (a value corresponding to a measurement error) for the result of estimating the coupling state index value in the absence of a state abnormality in a certain transmission power value can be set as a determination threshold.

Thus, the CAL process performed by the power transmission device 100 and the power reception device 200 so that the power transmission device 100 acquires a combination of the transmission power value and the coupling state index value is referred to as a "CAL process of the coupling state index measurement method."

In addition, the RX may perform control in which the load is in the light load state and control in which the load is in the connected load state after notifying the TX that the control is performed. Moreover, either of the two controls may be performed first.

In the present embodiment, the operation for calculating the state detection determination threshold for each load (or for each transmission power value) is performed, for example, in the calibration phase. In the calibration phase, the TX acquires data necessary for detecting a foreign substance by the power loss method.

At this time, the TX acquires data of an amount of power loss when the load state of the RX is the light load state and when the load state of the RX is the connected load state. Therefore, the measurement processes at the CP 1200 and the CP 1201 in FIG. 13 can be performed together with the measurement of power loss when the RX is in the light load state and the connected load state in the calibration phase.

That is, when the first reference reception power information has been received from the RX, the TX performs a measurement process at the CP 1200 in addition to the predetermined process to be performed in the calibration phase. The first reference reception power information is information based on RP1 specified in the WPC standard, but other messages may be used.

Moreover, when the second reference reception power information has been received from the RX, the TX performs a measurement process at the CP 1201 in addition to the predetermined process to be performed in the calibration phase. The second reference reception power information is information based on RP2 specified in the WPC standard, but other messages may be used. Thus, because it is not necessary to separately provide periods for the measurement processes at the CP 1200 and the CP 1201, the measurement processes at the CP 1200 and the CP 1201 can be performed in a shorter time.

The fourth threshold setting method is a method in which the TX or the RX sets a threshold in advance for a coupling state index having a value within a predetermined range. This threshold is a common value that does not depend on the RX serving as a transmission target and the TX or the RX holds a prescribed predetermined value.

In addition, the threshold may be a fixed value that does not depend on a situation or may be a variable value decided by the TX or the RX in accordance with a situation. For example, if the coupling state index is the coupling coefficient k, the range of k values is "$0 \leq k \leq 1$." For example, the TX or the RX determines that "there is a state abnormality" in the case of "$0 \leq k < 0.2$" and determines that "a possibility of a state abnormality is high" in the case of "$0.2 \leq k < 0.5$."

The TX or the RX determines that "a possibility of a state abnormality is low" in the case of "$0.5 \leq k < 0.8$" and determines that "there is no state abnormality" in the case of "$0.8 \leq k \leq 1$." The data of the condition for the k value is stored in the memory in advance and a determination process is executed on the basis of the data.

Alternatively, the TX or the RX determines that "predetermined power transmission efficiency cannot be obtained" or "the coupling between the power transmission antenna and the power reception antenna is weak," for example, in the case of "$0 \leq k < 0.2$."

The TX or the RX determines that "there is a high possibility that the predetermined power transmission efficiency cannot be obtained" or "there is a possibility that the coupling between the power transmission antenna and the power reception antenna is weak" in the case of "$0.2 \leq k < 0.5$."

The TX or the RX determines that "there is a high possibility that a predetermined power transmission efficiency can be obtained" or "there is a possibility that the coupling state between the power transmission antenna and the power reception antenna is suitable" in the case of "$0.5 \leq k < 0.8$."

The TX or the RX determines that "the predetermined power transmission efficiency can be obtained" or "the coupling state between the power transmission antenna and the power reception antenna is suitable" in the case of "$0.8 \leq k \leq 1$." The data of the condition for the k value is stored in the memory in advance and a determination process is made on the basis of the data.

Moreover, even in the setting of the determination threshold related to the state detection using the coupling state index, a value obtained by adding a predetermined value (a value corresponding to a measurement error) to the coupling state index value calculated on the basis of the measurement result or the received information can be set as the determination threshold. In addition, the number of thresholds is not limited to one and a plurality of thresholds can be set in stages as described above.

Next, a timing for calculating the coupling state between the power transmission antenna and the power reception antenna using the first or second measurement method will be described. The calculation (measurement) of the coupling state is executed by the RX transmitting a predetermined packet to the TX.

Here, the predetermined packet is a signal strength data packet that the RX transmits to the TX. Alternatively, the predetermined packet may be an identification data packet, an extended identification data packet, or a configuration data packet in the I&C phase.

Alternatively, the predetermined packet may be a packet in the calibration phase or the power transfer phase. That is, the predetermined packet may be RP1, RP2, and RP0.

When the predetermined packet has been received from the RX, the TX calculates a coupling state index between the power transmission antenna and the power reception antenna. Also, the TX makes the determination by comparing the determination threshold set by the above-described method with the calculated coupling state index.

When it is determined that there is no state abnormality, the TX transmits a positive response ACK or state information indicating that "there is no state abnormality" to the RX. When it is determined that "a possibility of a state abnormality is low" or "there is a high possibility of a state abnormality," the TX transmits state information indicating each determination result to the RX. When it is determined that there is a state abnormality, the TX transmits a negative response NAK or state information indicating that there is a state abnormality to the RX.

Alternatively, when it is determined that "predetermined power transmission efficiency can be obtained" or "the coupling state between the power transmission antenna and the power reception antenna is suitable," the TX transmits a positive response ACK or state information indicating the determination result to the RX.

When it is determined that "there is a high possibility that predetermined power transmission efficiency can be obtained" or "there is a possibility that the coupling state between the power transmission antenna and the power reception antenna is suitable," the TX transmits state information indicating a determination result to the RX.

When it is determined that "there is a high possibility that predetermined power transmission efficiency cannot be obtained" or "there is a possibility that the coupling between the power transmission antenna and the power reception antenna will be weak," the TX transmits state information indicating a determination result to the RX.

When it is determined that "predetermined power transmission efficiency cannot be obtained" or "the coupling between the power transmission antenna and the power reception antenna is weak," the TX transmits a negative response NAK to the RX or state information indicating a determination result to the RX.

The state information is, for example, numerical information corresponding to the state, and is as follows.

- State information "0" corresponding to a result of determining that "there is no state abnormality," "predetermined power transmission efficiency can be obtained," or "the coupling state between the power transmission antenna and the power reception antenna is suitable."
- State information "1" corresponding to a result of determining that "a possibility of a state abnormality is low," "there is a high possibility that predetermined power transmission efficiency can be obtained," or "there is a possibility that the coupling state between the power transmission antenna and the power reception antenna is suitable."
- State information "2" corresponding to a result of determining that "there is a high possibility of a state abnormality," "there is a high possibility that predetermined power transmission efficiency cannot be obtained," or "there is a possibility that the coupling between the power transmission antenna and the power reception antenna will be weak."
- State information "3" corresponding to a result of determining that "there is a state abnormality," "predetermined power transmission efficiency cannot be obtained," or "the coupling between the power transmission antenna and the power reception antenna is weak."

Alternatively, the calculation (measurement) of the coupling state is executed by the TX transmitting a predetermined packet to the RX. Here, the predetermined packet is a power transmitter capabilities (CAP) data packet that the TX transmits to the RX.

Alternatively, the packet is a power transmitter identification (ID) data packet. When a predetermined packet has been received from the TX, the RX calculates a coupling state index between the power transmission antenna and the power reception antenna.

Also, the RX makes the determination by comparing the determination threshold set by the above-described method with the calculated coupling state index. When it is determined that there is no state abnormality, the RX transmits the predetermined packet including state information indicating the determination result to the TX.

When it is determined that "a possibility of a state abnormality is low" or "there is a high possibility of a state abnormality," the RX transmits a predetermined packet including state information indicating each determination result to the TX. When it is determined that "there is a state abnormality," the RX transmits a predetermined packet including state information indicating a determination result to the TX.

Alternatively, when it is determined that "predetermined power transmission efficiency can be obtained" or "the coupling state between the power transmission antenna and the power reception antenna is suitable," the RX transmits state information indicating a determination result to the TX.

When it is determined that "there is a high possibility that predetermined power transmission efficiency can be obtained" or "there is a possibility that a coupling state between the power transmission antenna and the power reception antenna is suitable," the RX transmits state information indicating a determination result to the TX.

When it is determined that "there is a high possibility that predetermined power transmission efficiency cannot be obtained" or "there is a possibility that the coupling between the power transmission antenna and the power reception antenna will be weak," the RX transmits state information indicating a determination result to the TX.

When it is determined that "predetermined power transmission efficiency cannot be obtained" or "the coupling between the power transmission antenna and the power reception antenna is weak," the RX transmits state information indicating the determination result to the TX. An example of state information is as described above.

Next, a first method in which the TX detects the placement of the RX when the coupling between the power transmission antenna and the power reception antenna is weak will be described.

In a wireless charging system based on the WPC standard, the TX and the RX generally have a power transmission antenna and a power reception antenna facing each other. Moreover, a distance from the power reception antenna to the exterior of a housing of the RX and a distance from the power transmission antenna to the exterior of a housing of the TX are specified in the WPC standard. A configuration in which a distance between the power transmission antenna and the power reception antenna is within a predetermined range is adopted. Specifically, description will be given with reference to FIGS. 14(A) to 14(D).

FIG. 14(A) shows an example in which a shape of the exterior of the housing in the vicinity of the power reception antenna of the RX is planar and a shape of the exterior of the housing in the vicinity of the power transmission antenna of the TX is planar. In this case, it is possible to adopt a configuration in which the distance between the power transmission antenna and the power reception antenna is within a predetermined range.

FIG. 14(B) shows an example in which a shape of the exterior of the housing in the vicinity of the power reception antenna of the RX is curved and a shape of the exterior of the housing in the vicinity of the power transmission antenna of the TX is planar. When the power reception antenna is arranged along the housing shape with respect to the TX, it is possible to adopt a configuration in which a distance between a central portion of the power reception antenna and the power transmission antenna is within a predetermined range.

However, because both ends of the power reception antenna and a part of the power transmission antenna are far apart from each other, there is a possibility that a distance between two parts is not within the predetermined range.

FIG. 14(C) shows an example in which a shape of the exterior of the housing in the vicinity of the power reception antenna of the RX is planar, a shape of the exterior of the housing in the vicinity of the power transmission antenna of the TX is planar, and a distance between the power reception antenna and the exterior of the housing of the RX is greater than or equal to a specified distance.

For example, there is a case where it is necessary to arrange a member on the lower side (the TX side) of the power reception antenna, a case where it is necessary to sufficiently increase the thickness of the exterior of the housing, or the like in the RX. When a predetermined area is required between the power reception antenna and the exterior of the housing of the RX, a distance between the power reception antenna and the power transmission antenna (hereinafter referred to as a separation distance) increases. Moreover, as a wireless charging system, the separation distance may be set to a specified distance or more.

FIG. 14(D) shows an example having a predetermined area between the power reception antenna and the exterior of the housing of the RX, and between the power transmission antenna and the exterior of the housing of the TX. The shape of the exterior of the housing in the vicinity of the power reception antenna of the RX is planar and the shape of the exterior of the housing in the vicinity of the power transmission antenna of the TX is planar. Because the separation distance in FIG. 14(D) is larger compared with the separation distance in FIG. 14(C), a distance between the power reception antenna and the power transmission antenna is further increased.

FIG. 14(B) shows an example in which the power transmission antenna and the power reception antenna are not directly facing each other and FIGS. 14(C) and 14(D) show an example in which the separation distance between the antennas is a predetermined distance or more. Even in such a case, if it is possible to appropriately perform wireless charging, it is possible to increase the degree of freedom in the design of the power transmission device and the power reception device.

In the example of FIG. 14(B), compared to when the power transmission antenna and the power reception antenna are directly facing each other, the coupling between the power transmission antenna and the power reception antenna is weaker or the coupling coefficient of the power transmission antenna and the power reception antenna is smaller.

Moreover, in the case of the example of FIGS. 14(C) and 14(D), compared to when the separation distance of the antenna is less than the predetermined distance, the coupling between the power transmission antenna and the power reception antenna is weaker or the coupling coefficient of the power transmission antenna and the power reception antenna is smaller. In the present embodiment, a method of enabling the power transmission device to appropriately detect the placement of the power reception device in a state in which the coupling between the power transmission antenna and the power reception antenna is weak will be described.

In the above-described selection phase (S1201 and S1301), the TX intermittently transmits an analog ping. The TX detects one or both of the voltage value and the current value of the power transmission antenna 105 when the analog ping is transmitted and detects that an object is placed on the charging base of the TX.

In the ping phase (S1201 and S1301), the TX transmits a digital ping and the RX notifies the TX of the power reception voltage value in response to the digital ping. The power of the digital ping is enough to activate the control unit of the RX placed on the TX.

By receiving a response from the RX that has received the digital ping, the TX recognizes that the object detected in the selection phase is the RX. Here, the response received by the TX from the RX is a signal strength data packet. This packet has the power reception voltage value of the digital ping received by the RX as the signal strength value.

In the conventional analog and digital ping specifications, as shown in FIG. 14(A), the parameters are optimized so that the TX detects the RX when the antenna separation distance is within a predetermined range.

In the example of FIGS. 14(B), 14(C), and 14(D), because the coupling between the power reception antenna and the power transmission antenna is weak, there is a possibility that the TX cannot detect the placement of the RX with the ping. Therefore, a configuration for enabling the TX to detect the placement of the RX even if the coupling between the antennas is weak will be described with reference to FIG. 15.

FIGS. 15(A) and 15(B) are explanatory diagrams of an analog ping and a digital ping. Hereinafter, the analog ping is referred to as an AP and the digital ping is referred to as a DP.

FIG. 15(A) shows an example of a state in which the electromagnetic coupling between the power transmission antenna and the power reception antenna is stronger than the coupling in a predetermined state (hereinafter also referred to as a strong coupling state). FIG. 15(B) shows an example of a state in which the electromagnetic coupling between the power transmission antenna and the power reception antenna is weaker than the coupling in the predetermined state (hereinafter also referred to as a weak coupling state).

The horizontal axis in FIG. 15 is a time axis and the vertical axis represents the power of the AP and the DP. In FIG. 15, Vinv denotes a power transmission voltage applied to a circuit (e.g., an inverter) provided in the power transmission unit 103 of the TX. This is, for example, the inverter output voltage described above.

As shown in FIGS. 15(A) and 15(B), the TX transmits APs with periodic changes in power. For example, the power value is set to three levels: a low level, a medium level, and a high level. It is assumed that "1" denotes the minimum power, "3" denotes the maximum power, and "2" denotes the power between "1" and "3."

The TX transmits APs of "1," "2," and "3" sequentially and periodically. Hereinafter, the APs of "1," "2," and "3" are denoted by AP1, AP2, and AP3, respectively.

In the example of FIG. 15(A), as indicated by a black arrow, it is assumed that the RX is placed on the TX at a timing between AP2 and AP3. For example, in the strong coupling state, the separation distance between the antennas is within a predetermined range.

In this state, the TX can detect the RX on the TX if the power of an AP is greater than or equal to predetermined power (first power). The first power is lower than the power of AP1. That is, in FIG. 15(A), the TX can detect the RX by APs of all power levels, i.e., the low level, the medium level, and the high level.

As shown in FIG. 15(A), the RX is detected by AP3 after the RX is placed on the TX. Subsequently, the RX is detected by AP1 and AP2. Also, the RX is detected by AP3 again.

The TX does not ascertain when the RX has been placed on the charging base 300. Therefore, the TX determines whether the object (the RX) can be detected twice by the APs with the same power. When this condition is satisfied, the TX can recognize that an attempt to detect the placement of the RX with all APs with power of "1" to "3"is completed after the RX is placed on the charging base 300.

In the example of FIG. 15(A), the TX detects an object (the RX) twice with AP3. Therefore, after the object (the RX) is placed on the charging base 300, the TX recognizes that the attempt to detect the placement of the object (the RX) with APs of all power levels has been completed.

In the strong coupling state, the TX recognizes that the RX can be detected by each AP after a detection attempt based on APs with all power levels. In other words, the TX recognizes that the RX can be detected by the AP of "1" or more.

Next, in the example of FIG. 15(B), as indicated by the black arrow, it is assumed that the RX is placed on the TX at a timing between AP2 and AP3. For example, in the weak coupling state, as shown in FIGS. 14(B), 14(C), and 14(D), the separation distance between the antennas is not within the predetermined range.

In this case, the RX may not be detected by an AP by which the RX can be detected in the strong coupling state. The TX transmits the AP from the power transmission antenna and detects a change on the charging base 300 using a change in an acquired electrical physical quantity or the like.

In the weak coupling state, if the power of the AP is less than or equal to a predetermined threshold, there is a possibility that the TX cannot sufficiently detect the change in the electrical physical quantity. For example, when the RX on the TX is detected by an AP transmitted from the power transmission antenna of the TX, the first state and the second state are assumed as a coupling state between the power transmission antenna and the power reception antenna.

A strong coupling state is a state in which the coupling between the power transmission antenna and the power reception antenna is stronger than in the first state. The second state is a state in which the coupling between the power transmission antenna and the power reception antenna is weaker than in the first state.

When the coupling between the power transmission antenna and the power reception antenna is stronger than in the second state, the object (the RX) can be detected by an AP with predetermined power (second power) or more. Specifically, the second power is greater than the power of AP2 and less than the power of AP3. In the example of FIG. 15(B), the TX can detect the RX by only AP3 with the maximum power.

As shown in FIG. 15(B), the RX is detected by AP3 after the RX is placed on the TX. the RX is not detected by AP1 and AP2. Also, the RX is detected by AP3 again. When the TX detects the object (the RX) twice with APs with the same power, after the RX is placed on the charging base 300, it can be recognized that an attempt to detect the placement of the RX with the APs of all power levels has been completed.

The TX has detected the object (the RX) twice with AP3. Therefore, after the object (the RX) is placed on the charging base 300, the TX recognizes that an attempt to detect the placement of the object (the RX) with APs of all power levels has been completed. In the weak coupling state, the TX recognizes that the RX can be detected by only AP3 with the maximum power after a detection attempt by APs with all power levels.

In the present embodiment, an example in which a plurality of APs with different power levels are periodically transmitted has been described. In the example of FIG. 15, a configuration in which AP3 with the maximum power is continuously transmitted is also conceivable. In this configuration, because the transmission of the AP with the maximum power is continuously performed, power consumption increases.

Therefore, the TX transmits a plurality of APs with appropriate different power levels. Thereby, even if the coupling between the power transmission antenna and the power reception antenna is stronger than in the first state or even if the coupling between the power transmission antenna and the power reception antenna is stronger than in the second state, the TX can detect that the RX has been placed. Moreover, this detection process can be implemented with more power saving.

Next, a DP transmitted after the detection of the object (the RX) by the AP will be described. In the example of FIG. 15(A), the TX attempts to detect the placement of an object with APs from AP1 to AP3 after the placement of the RX. The TX recognizes that the object (the RX) can be detected by AP1, AP2, and AP3.

In the case of the strong coupling state, the RX receives a signal transmitted from the TX with higher power than in the case of the weak coupling state. The reason is that when the coupling state between the power transmission antenna and the power reception antenna is suitable and the k value is large, the efficiency of power transmission from the TX to the RX is high. In contrast, when the coupling state between the power transmission antenna and the power reception antenna is not suitable and the k value is small, the efficiency of power transmission from the TX to the RX is low.

In the case of the strong coupling state shown in FIG. 15(A), because the RX can be detected by AP1 with the minimum power, the TX can recognize that the coupling between the power transmission antenna and the power reception antenna is strong. In this case, the TX transmits a DP with relatively low power from the power transmission antenna. Thereby, the control unit of the RX placed on the TX can be activated and the RX can transmit a response to the DP (a notification of a reception power voltage value) to the TX.

Thus, when the RX can be detected by AP1 with the minimum power, the TX recognizes a state in which the coupling between the power transmission antenna and the power reception antenna is stronger than in the predetermined state. The TX transmits a DP (A in the drawing), which has relatively low power.

This DP is referred to as DPA. DPA corresponds to the case of "Vinv = VA." The RX placed on the TX receives DPA and activates the control unit of the RX. Also, the RX transmits a signal strength data packet, which is a response to DPA, to the TX.

When the TX receives the packet, it transitions to the I&C phase (S1202 and S1302). In the communication between the TX and the RX in the I&C phase, the TX performs communication with power equivalent to power of the case where DPA is transmitted. Alternatively, in the communication between the TX and the RX in the I&C phase, the TX performs communication with Vinv (VA) equivalent to a voltage of a case where DPA is transmitted.

On the other hand, in the case of the weak coupling state shown in FIG. 15(B), because the RX can be detected only by AP3 with the maximum power, the TX recognizes a state in which the coupling between the power transmission antenna and the power reception antenna is weak. The TX transmits DP with relatively high power from the power transmission antenna. Thereby, the control unit of the RX placed on the TX can be activated and the RX can transmit a response to the DP (a notification of the reception power voltage value) to the TX.

Thus, when the RX can be detected only by AP3 with the maximum power, the TX recognizes a state in which the coupling of the power transmission antenna and the power reception antenna is weaker than in the predetermined state. The TX transmits the DP (B in the drawing), which has relatively high power.

This DP is referred to as DPB. This is a relationship between "power of DPB > power of DPA." DPB corresponds to the case of "Vinv = VB." There is a relationship of "VB>VA." The RX placed on the TX receives DPB and activates the control unit of the RX.

Also, the RX transmits a signal strength data packet, which is a response to DPB. When the TX receives the packet, it transitions to the I&C phase (S1202 and S1302).

In the communication between the TX and the RX in the I&C phase, the TX performs communication with power equivalent to power of the case where DPB is transmitted. Alternatively, in the communication between the TX and the RX in the I&C phase, the TX performs communication with Vinv (VB) equivalent to a voltage of a case where DPB is transmitted.

The TX recognizes the coupling state between the power transmission antenna and the power reception antenna on the basis of the AP with the minimum power among the plurality of APs by which the object (the RX) can be detected. In FIG. 15(A), the minimum power with which the object can be detected is the power of AP1 and the state is recognized as the strong coupling state.

Moreover, in FIG. 15(B), the minimum power with which detection is possible is the power of AP3, and the state is recognized as a weak coupling state. The TX changes the power of the DP in accordance with the recognized coupling state. In other words, the power of the DP is decided in accordance with the minimum power of the AP by which the object can be detected.

FIG. 16 is an explanatory sequence diagram of the operations of the TX and the RX. The operation of the TX is shown on the left and the operation of the RX is shown on the right. In F1601, the TX transmits an AP. In F1602, the RX is placed on the charging base 300. In F1603, the TX transmits an AP. In F1604, it is detected that an object has been placed. In F1605, the TX transmits an AP. In F1606, it is detected that an object has been placed.

In F1607, the TX measures a Q-value. In F1608, a DP corresponding to the AP by which the object has been detected is transmitted. In F1609, the RX detects the placement on the TX. In F1610, the RX transmits a signal strength data packet to the TX.

In F1611, the TX detects the placement of the RX. In F1612, identification information and capability information are exchanged. The TX acquires the identification information and the capability information from the RX according to the communication of the I&C phase.

In F1613, the TX decides a GP value with the RX through communication of the negotiation phase. After a CAL process is executed in F1614, the TX starts a power transmission process in F1615.

FIG. 17 is an explanatory flowchart of the operations of the TX and the RX. After the power supply of the TX is turned on in S 1701, the TX transmits an AP that satisfies the initial condition for detecting whether or not an object has been placed on the charging base 300 in S1702.

For example, the initial condition is that the power of the AP is the minimum power. The TX has a counter that counts the number of times the AP has been transmitted. In S1703, the TX sets a value of a variable Count of the counter to 1.

In S1704, the TX determines whether or not an object has been detected by the transmitted AP. When no object has been detected, the process proceeds to the processing of S1705. The TX waits for a predetermined time and the process proceeds to the processing of S1706. Moreover, when the object has been detected, the process proceeds to the processing of S1709.

In S1706, the TX transmits an AP of a condition different from a condition of the previously transmitted AP. The condition different from a condition of the previously transmitted AP is that the power of the currently transmitted AP is higher than the power of the previously transmitted AP.

For example, when AP1 with the minimum power was previously transmitted, the power of the currently transmitted AP is the medium power (AP2). Next, in S1707, the TX sets the value of the variable Count to a value increased by 1. Also, the process proceeds to the processing of S1708.

In S1708, the TX determines whether or not an object has been detected by the transmitted AP. When the object has been detected, the process proceeds to the processing of S1709. When no object has been detected, the process proceeds to the processing of S1710. In S1710, the TX waits for a predetermined time. In S1711, the TX determines whether or not a value of the variable Count has reached a predetermined value.

For example, the predetermined value is 3. When the value of the variable Count has not reached the predetermined value 3, the process proceeds to the processing of S1706. When the value of the variable Count is set to 2, the process proceeds to the processing of S1706 and the TX transmits an AP with a condition different from that of the previously transmitted AP. The transmission of an AP different from the previously transmitted AP2, i.e., AP3 with the maximum power, is performed.

On the other hand, when the value of the variable Count has reached the predetermined value 3, the process proceeds to the processing of S1702. In this case, the TX retransmits an AP that satisfies the initial condition. In other words, the TX retransmits AP1 with the minimum power. As described above, the TX performs control to periodically transmit a plurality of APs with different power levels.

In S1709, the TX determines whether or not an object has already been detected by the APs under the same condition. The same condition is that the power levels of a plurality of transmitted APs are the same. When the determination condition of S1709 is satisfied, the process proceeds to the processing of S1712. When the determination condition of S1709 is not satisfied, the process proceeds to the processing of S1710.

In S1712, the TX measures the quality factor by the Q-value measurement method. In addition, the TX may detect whether or not the object is an object having the function of an NFC card or an RFID tag before or after the measurement of the quality factor by the Q-value measurement method.

In this case, the TX detects the object having the function of the NFC card or the RFID tag and does not transmit a DP if it is determined that there is a possibility of damage to the object with the transmission power of the TX.

After the TX stops the transmission of the AP in the next S1713, the TX transmits DPA or DPB in accordance with the condition of transmission of the AP by which the object has been detected in S1714. Also, the process proceeds to the processing of S1715.

In S1715, the TX determines whether or not a signal strength data packet has been received from the RX. When it is determined that the packet has been received, the series of processes ends. When it is determined that the packet has not been received, the process proceeds to the processing of S1702.

In the present embodiment, when the object has not been detected in the previously transmitted AP, the process proceeds to the processing of S1709 if the AP is further transmitted and the placement of the object (the RX) is detected. When an object has already been detected by APs under the same condition, the TX stops the transmission of the AP and transmits a DP corresponding to the condition of the AP by which the object has been detected.

At this time, the TX decides the power of the DP according to the power of the AP by which the object has been detected. The RX receives the DP from the TX and detects that the RX has been placed on the charging base 300 of the TX (F1609).

The RX transmits a signal strength data packet to the TX in response to the DP (F1610). The TX receives the packet and recognizes that the RX has been placed on the charging base 300 (F1611).

The TX of the present embodiment performs transmission while periodically changing the power of the AP for detecting the placement of the object in the order of the low, medium, and high levels. The present invention is not limited to this example. When the object has been detected by the AP, the TX may transmit an AP with power lower than that of the AP by which the object is detected as the next AP to be transmitted. Moreover, the TX may also periodically transmit four or more types of APs with different power levels.

The TX decides the power of the DP in accordance with the minimum power of the APs by which the object can detected. In other words, the TX searches for the AP with the minimum power by which an object can be detected. It is possible to detect the placement of the object in a shorter time. When the placement of the object is detected by the AP with the minimum power, the search may end at that point in time, the transmission of the AP may be stopped, and the power of the DP may be decided and transmitted immediately.

Moreover, in the present embodiment, when the placement of the object is detected twice by APs under the same condition (with the same power), it is determined that an attempt to detect the placement of the object by APs with three types of power has been completed. The present invention is not limited to this example. When the TX recognizes that detection of the placement of the object by the APs of three types of power has been completed, it may be determined that the attempt to detect the placement of the object with all APs has been completed.

For example, the TX detects the placement of the object with AP3 once and then attempts to detect the placement of the object with AP1 and AP2. It can be determined that the TX has attempted to detect the placement of the object with all of AP1, AP2, and AP3.

As described above, in the first method, the TX transmits a plurality of APs with periodic changes in power and decides the power of the DP corresponding to the power of the AP with the minimum power by which the object can be detected.

Next, a second method in which the TX detects the placement of the RX when the coupling between the power transmission antenna and the power reception antenna is weak will be described. In the second method, the TX causes the power levels of the APs to be the same as each other and periodically changes the threshold for use in the determination when the placement of the object is detected by the APs.

The threshold is a threshold for a variation in the voltage applied to the power transmission antenna or a variation in the current flowing through the power transmission antenna. Alternatively, the threshold is a threshold for the variation in the resonance frequency of the power transmission antenna, which can be calculated from the variation in the voltage applied to the power transmission antenna or the variation in a value of the current flowing through the power transmission antenna, or the variation in the value of the capacitance of the electrode in the vicinity of the charging base 300 of the TX.

Alternatively, the threshold is a threshold for the variation in the value of the quality factor of the power transmission antenna or the circuit including the power transmission antenna. The change in the electrical physical quantity that is measured or calculated by the TX is caused by the placement of the object on the power transmission antenna. Therefore, when the variation in the physical quantity is greater than or equal to the predetermined threshold, the TX can determine that the object has been placed on the power transmission antenna. Specifically, description will be given with reference to FIGS. 18(A) and 18(B).

FIG. 18(A) shows a case in a strong coupling state and FIG. 18(B) shows a case in a weak coupling state. The settings of the vertical axis and the horizontal axis are the same as in FIG. 15. The TX sets the threshold in the order of the first threshold, the second threshold, and the third threshold and transmits APs with the same power sequentially and periodically. The first threshold is the maximum threshold, the third threshold is the minimum threshold, and the second threshold is a value between the first and third thresholds.

In FIG. 18(A), as indicated by the black arrow, the RX is placed on the TX after the transmission of the second AP. In this case, as shown in FIG. 14(A), the separation distance between the antennas is within a predetermined range. Therefore, the TX easily detects a change in a physical quantity due to the placement of the RX. That is, in the case of the strong coupling state, the variation in the electrical physical quantity caused by the placement of the RX on the TX is greater than in the case of the weak coupling state.

When the TX detects the object with the AP, it is assumed that the coupling between the power transmission antenna and the power reception antenna is stronger than in the first state. In this case, when the variation in the electrical physical quantity is greater than or equal to the predetermined value (the first threshold), the TX recognizes that the object (the RX) has been placed.

This indicates that "the TX has detected the RX with the first threshold." Moreover, it is assumed that the coupling between the power transmission antenna and the power reception antenna is weaker than in the first state and stronger than in the second state.

In this case, when the variation in the electrical physical quantity is less than the first threshold and is greater than or equal to the second threshold, the TX recognizes that the object (the RX) has been placed. This indicates that "the TX has detected the RX with the second threshold."

Moreover, it is assumed that the coupling between the power transmission antenna and the power reception antenna is weaker than in the second state and stronger than in the third state. In this case, when the variation in the electrical physical quantity is less than the second threshold and is greater than or equal to the third threshold, the TX recognizes that the object (the RX) has been placed. This indicates that "the TX has detected the RX with the third threshold."

In FIG. 18, an AP is periodically transmitted to determine whether the object has been placed in the order of the first threshold, the second threshold, and the third threshold. Subsequently, the DP of power corresponding to the determination result is transmitted.

In the example of FIG. 18(A), after the RX is placed on the TX after the transmission of the second AP as indicated by the black arrow, the TX determines whether the object has been placed with the third threshold. Next, the TX detects the RX with the first threshold. Subsequently, the TX detects the RX with the first threshold again.

The TX does not ascertain when the RX has been placed on the charging base 300. It is assumed that the TX can detect the object (the RX) twice with APs under the same condition (with the same threshold). In this case, the TX can recognize that an attempt to detect the placement of the RX with all APs corresponding to the first to third thresholds has been completed after the placement of the RX on the charging base 300.

In the example of FIG. 18(A), the TX detects the object (the RX) twice with the first threshold. Therefore, the TX can recognize that the attempt to detect the placement of the object (the RX) with the APs corresponding to all thresholds (the first to third thresholds) has been completed after the placement of the object (the RX) on the charging base 300. That is, the TX recognizes that the RX can be detected by the AP corresponding to the maximum threshold (the first threshold) when the change in the electrical physical quantity that is measured or calculated is the largest change.

In FIG. 18(B), as indicated by the black arrow, the RX is placed on the TX after the transmission of the second AP. In this case, as shown in FIGS. 14(B), 14(C), and 14(D), the separation distance between the antennas is not within a predetermined range. Therefore, the RX may not be detected by an AP corresponding to the threshold by which the RX could be detected in the case of a strong coupling state.

In the example of FIG. 18(B), after the RX is placed on the TX, the TX detects the RX with the third threshold. Thereafter, the TX detects the RX with the third threshold again. The TX determines whether or not the object (the RX) has been detected twice by APs under the same conditions (with the same threshold).

When this condition is satisfied, the TX can recognize that an attempt to detect the placement of the RX with APs corresponding to all thresholds (the first to third thresholds) has been completed after the placement of the RX on the charging base 300. The TX detects the object (the RX) twice with APs corresponding to the third threshold.

Thus, after the placement of the object (the RX) on the charging base 300, the TX can recognize that an attempt to detect the placement of the object (the RX) with the APs corresponding to all thresholds has been completed. That is, the TX recognizes that the RX can be detected only by the AP corresponding to the third threshold when the change in the electrical physical quantity that is measured or calculated is the minimum change.

Next, a DP according to the determination result of the AP will be described. In the case of the strong coupling state shown in FIG. 18(A), because the TX easily detects the change in the physical quantity due to the placement of the RX, the variation in the electrical physical quantity that is measured or calculated is a larger value.

In this case, the TX recognizes that the RX can be detected by the AP corresponding to the maximum threshold (the first threshold). In other words, the TX can recognize that the coupling between the power transmission antenna and the power reception antenna is strong.

The TX transmits DPA with relatively low power from the power transmission antenna. The control unit of the RX placed on the TX can be activated by DPA and the RX can transmit a response to the DP (a notification of the reception power voltage value) to the TX.

Thus, when the RX has been detected by the first threshold, the TX recognizes a state in which the coupling between the power transmission antenna and the power reception antenna is stronger than in the first state and transmits DPA with low power. The RX receives DPA and activates its control unit. Also, the RX transmits a signal strength data packet to the TX.

When the TX receives the packet, it transitions to the I&C phase (S1202 and S1302). In the communication between the TX and the RX in the I&C phase, the TX performs communication with power equivalent to that when DPA is transmitted. Alternatively, in the communication between the TX and the RX in the I&C phase, the TX performs communication with Vinv (VA) equivalent to a voltage of a case where DPA is transmitted.

Next, in the case of FIG. 18(B), because the TX can detect the RX with the third threshold, it is possible to recognize a state in which the coupling between the power transmission antenna and the power reception antenna is weak. The TX transmits DPB with relatively high power from the power transmission antenna. The control unit of the RX placed on the TX according to DPB can be activated and the RX can transmit a response to the DP (a notification of the reception power voltage value) to the TX.

Thus, when the RX is detected by the third threshold, the TX recognizes a state in which the coupling state between the power transmission antenna and the power reception antenna is weaker than in the second state and stronger than in the third state. The TX transmits DPB with high power. The RX receives DPB and activates its control unit.

Also, the RX transmits a signal strength data packet to the TX. When the TX receives the packet, it transitions to the I&C phase (S1202 and S1302). In the communication between the TX and the RX in the I&C phase, the TX performs communication with power equivalent to that when DPB is transmitted. Alternatively, in the communication between the TX and the RX in the I&C phase, the TX performs communication with Vinv (VB) equivalent to a voltage of a case where DPB is transmitted.

In the second method, the TX recognizes the coupling state between the power transmission antenna and the power reception antenna on the basis of the threshold set for the AP for detecting the object (the RX). The TX decides the power of the DP in accordance with the threshold of the AP by which the object (the RX) (the power is decided in accordance with the coupling state) can be detected.

The operations of the TX and the RX in the second method will be described with reference to FIGS. 16 and 17. In addition, only differences from the first method will be described. In F 1601 of FIG. 16, the TX transmits an AP corresponding to the first threshold. In F1603, the TX transmits an AP corresponding to the second threshold. In F1605, the TX transmits an AP corresponding to the third threshold. The TX recognizes the coupling state between the power transmission antenna and the power reception antenna and decides the power of the DP in accordance with the coupling state.

In FIG. 17, in S1702, the TX transmits an AP that satisfies the initial condition. The initial condition is that the determination threshold is the first threshold. In S1706, the TX transmits an AP under a condition different from that of the previously transmitted AP.

The condition is that the determination threshold is the second threshold. Alternatively, when the previously transmitted AP corresponds to the second threshold, the condition is that the determination threshold is the third threshold. The TX periodically transmits APs with the same power corresponding to each of the first to third thresholds.

When the placement of the object (the RX) is detected in S1704 or S1708 of FIG. 17, the TX determines whether or not the object has been detected by the APs under the same condition in S1709. The same condition is that the thresholds corresponding to the APs have the same value.

When the object has already been detected by APs under the same condition, the TX executes the processing of S 1712 to S 1714. In S 1714, the TX transmits a DP corresponding to the condition of the AP by which the object is detected. The TX decides the power of the DP in accordance with the determination threshold set for the AP.

Next, a third method in which the TX detects the placement of the RX when the coupling between the power transmission antenna and the power reception antenna is weak will be described. The TX transmits a plurality of APs with the same power. When the TX has detected a change in the electrical physical quantity that is measured or calculated at the time of AP transmission, the TX decides power of the DP in accordance with a detected variation in the physical quantity. Specifically, description will be given with reference to FIGS. 19(A) and 19(B).

The case of the strong coupling state will be described with reference to FIG. 19(A). As indicated by the black arrow, it is assumed that the RX is placed on the TX after the transmission of the second AP. As shown in FIG. 14(A), it is assumed that the separation distance between the antennas is within a predetermined range. In the case of the strong coupling state, the variation in the electrical physical quantity caused by the placement of the RX on the TX is larger than in the case of the weak coupling state.

The change in the electrical physical quantity is the variation in the voltage applied to the power transmission antenna or the variation in the current flowing through the power transmission antenna. Alternatively, the variation is a variation in the resonance frequency of the power transmission antenna, which can be calculated from the variation in the voltage applied to the power transmission antenna or the variation in the value of the current flowing through the power transmission antenna, or a variation in the value of the capacitance of the electrode near the charging base 300 of the TX.

Alternatively, the variation is a variation in the value of the quality factor of the power transmission antenna or the circuit including the power transmission antenna. Three types of thresholds are set for the variation in the electrical physical quantity that is measured or calculated by the TX. When the coupling between the power transmission antenna and the power reception antenna is stronger than in the first state, it is assumed that the variation in the electrical physical quantity is greater than or equal to the first threshold.

This indicates that "the TX has detected the RX with the first threshold." Moreover, it is assumed that, when the coupling between the power transmission antenna and the power reception antenna is weaker than in the first state and stronger than in the second state, the variation in the electrical physical quantity is less than the first threshold and is greater than or equal to the second threshold.

This indicates that "the TX has detected the RX with the second threshold." Moreover, it is assumed that, when the coupling between the power transmission antenna and the power reception antenna is weaker than in the second state and stronger than in the third state, the variation in the electrical physical quantity is less than the second threshold and is greater than or equal to the third threshold. This indicates that "the TX has detected the RX with the third threshold."

In FIG. 19(A), as indicated by the black arrow, after the object (the RX) is placed on the TX, a determination process of determining whether or not there is a change in the electrical physical quantity that is measured or calculated by the TX on the basis of the AP is performed.

The TX determines that the variation in the electrical physical quantity is within the range based on the first threshold. The TX recognizes a state in which the coupling between the power transmission antenna and the power reception antenna is stronger than in the first state.

The case of the weak coupling state will be described with reference to FIG. 19(B). As indicated by the black arrow, after the object (the RX) is placed on the TX, a determination process of determining whether or not there is a change in the electrical physical quantity that is measured or calculated by the TX on the basis of the AP is performed.

In this case, as shown in FIGS. 14(B), 14(C), and 14(D), the separation distance of the antenna is not within a predetermined range. The TX determines that the variation in the electrical physical quantity is within a range based on the third threshold. The TX recognizes a state in which the coupling between the power transmission antenna and the power reception antenna is weaker than in the second state and stronger than in the third state.

In the third method, the TX transmits an AP and detects that there is a change in the electrical physical quantity that is measured or calculated on the basis of the AP. In this case, the TX determines whether or not the object (the RX) has been placed on the charging base 300.

The TX compares the variation in the electrical physical quantity measured or calculated at that time with the threshold. A process of determining a range in which the variation is decided by the first threshold, the second threshold, and the third threshold is executed.

Next, the DP transmitted by the TX after the detection of the object (the RX) by the AP will be described. In the case of FIG. 19(A), the TX detects the RX with the first threshold and recognizes that the variation in the electrical physical quantity is the largest variation.

In the strong coupling state, the TX transmits DPA with relatively low power from the power transmission antenna. The control unit of the RX placed on the TX can be activated according to DPA and the RX can transmit a response to the DP (a notification of a reception power voltage value) to the TX.

Thus, if the variation in the electrical physical quantity that is measured or calculated by the TX is within the range based on the first threshold, the TX transmits DPA with low power. The RX placed on the TX activates the control unit and transmits the signal strength data packet to the TX.

When the TX receives the packet from the RX, it transitions to the I&C phase (S1202 and S1302). In the communication between the TX and the RX in the I&C phase, the TX performs communication with power equivalent to that when DPA is transmitted. Alternatively, in the communication between the TX and the RX in the I&C phase, the TX performs communication with Vinv (VA) equivalent to a voltage of a case where DPA is transmitted.

In the case of FIG. 19(B), the TX detects the RX with the third threshold. In the weak coupling state, the TX transmits DPB with relatively high power from the power transmission antenna. The control unit of the RX placed on the TX can be activated according to DPB and the RX can transmit a response to the DP (a notification of a reception power voltage value) to the TX.

Thus, when the variation in the electrical physical quantity that is measured or calculated by the TX is within a range based on the third threshold, the TX transmits DPB with high power. The RX placed on the TX activates the control unit and transmits a signal strength data packet to the TX. When the TX receives the packet from the RX, it transitions to the I&C phase (S1202 and S 1302).

In the communication between the TX and the RX in the I&C phase, the TX performs communication with power equivalent to that when DPB is transmitted. Alternatively, in the communication between the TX and the RX in the I&C phase, the TX performs communication with Vinv (VB) equivalent to a voltage of a case where DPB is transmitted.

In the third method, the TX recognizes a coupling state between the power transmission antenna and the power reception antenna from the variation in the electrical physical quantity to be measured or calculated, and changes the power of the DP in accordance with the coupling state. In other words, the power of the DP is decided in accordance with the variation in the electrical physical quantity when the TX has transmitted the AP.

The operations of the TX and the RX will be described with reference to FIGS. 20 and 21. In FIG. 20, the TX transmits an AP in F2001. In F2002, the RX is placed on the TX. In F2003, the TX transmits the AP. In F2004, the placement of the object is detected.

In F2005, the TX measures a Q-value. In F2006, the TX transmits a DP with power decided in accordance with the variation in the electrical physical quantity when the TX has transmitted the AP. Hereinafter, because the operation from F2007 to F2013 is similar to the operation from F1609 to F1615 in FIG. 16, description thereof will be omitted.

In FIG. 21, the power supply of the TX is turned on in S2101 and the TX transmits the AP in S2102. Next, in S2103, the TX determines whether or not the object has been placed on the charging base 300.

A process of determining whether or not there is a predetermined change in the electrical physical quantity that is measured or calculated by the TX on the basis of the AP is performed. When the placement of the object has been detected, the process proceeds to the processing of S2105. When the placement of the object has not been detected, the process proceeds to the processing of S2104.

In S2104, the TX waits for a predetermined time, the process proceeds to the processing of S2102 and retransmits an AP. When the placement of the object has been detected by the AP, the process proceeds to the processing from S2103 to S2105.

In S2105, the TX identifies a threshold range in which there is a variation in the measured or calculated electrical physical quantity. In the present embodiment, a process of determining a range in which the electrical physical quantity is present is performed on the basis of the first to third thresholds. The processing from S2106 to S2109 is similar to the processing from S 1712 to S 1715 in FIG. 17.

However, in S2108, the TX decides the power of the DP in accordance with a threshold range (a range based on the first to third thresholds) in which there is a variation in the electrical physical quantity that is measured or calculated. Control is performed to transmit the DP with the changed power in accordance with the coupling state between the power transmission antenna and the power reception antenna.

Next, a fourth method in which the TX detects the placement of the RX when the coupling between the power transmission antenna and the power reception antenna is weak will be described. In the first and second methods, an example of control in which a magnitude of the power of the AP and the threshold for detecting the presence or absence of an object are periodically changed has been described.

In the third method, an example of DP-specific power control corresponding to the variation in the electrical physical quantity that is measured or calculated by the TX at the time of transmission of an AP has been described. In any method, a process of initially detecting the placement of the object (the RX) on the TX with an AP is performed.

In contrast to these methods, in the fourth method, a configuration and control in which the placement of the object (the RX) on the TX can be detected by the DP when the placement of the object (the RX) on the TX cannot be detected by the AP will be described.

FIGS. 22(A) to 22(C) are explanatory diagrams of a signal for detecting the placement of the object (the RX) on the TX. The settings of the vertical axis and the horizontal axis are the same as in FIG. 15. FIG. 22(A) shows a case where the RX is not placed on the TX. FIGS. 22(B) and 22(C) show a case where the RX is placed on the TX. FIG. 22(B) shows the case of the strong coupling state and FIG. 22(C) shows the case of the weak coupling state.

In FIG. 22(A), the RX is not placed on the TX and the DP is transmitted regardless of detection of the placement of the object (the RX) by the AP. When the RX has received the DP from the TX, a signal strength data packet is transmitted to the TX as a response thereto.

The TX receives the packet. That is, the DP transmitted by the TX has a function in which it can be detected that the RX has been placed. When the object (the RX) has not been detected, it is possible to detect that the RX has been placed on the TX by performing the transmission of the AP and the transmission of the DP at predetermined intervals as a signal for detecting the object (the RX).

Because the AP is a signal for detecting the placement of an object on the TX, the power is low. On the other hand, the DP has sufficient power to activate the control unit of the RX, which is higher than the power of the AP. Therefore, when the coupling between the power transmission antenna and the power reception antenna is weak, even if the placement of the RX on the TX cannot be detected by the AP, there is a possibility of detection using the DP.

When the RX is placed on the TX and the coupling between the power transmission antenna and the power reception antenna is weak, the TX transmits the AP and the DP at predetermined intervals. Even if the RX cannot be detected by the AP, if the RX can be detected by the DP, the probability of detection of the RX increases.

In the example of FIG. 22(A), the TX transmits two APs and transmits one DP. This transmission is periodically executed. At this time, the TX periodically changes the power of the DP. The reason is similar to the reason for changing the power of the AP and transmitting the AP in the first method.

That is, this is because, when the placement of the object (the RX) on the TX cannot be detected by the AP, the placement of the RX on the TX can be detected by the DP regardless of a strong or weak coupling state. Examples of three types of DPA, DPB, and DPC are shown.

- DPA: this corresponds to the case where the power is the minimum power (see A in FIG. 22) and "Vinv = VA."
- DPB: this corresponds to the case where the power is the medium power (see B in FIG. 22) and "Vinv = VB."
- DPC: this corresponds to the case where the power is the maximum power (see C in FIG. 22) and "Vinv = VC."

This is a relationship of "power of DPC > power of DPB > power of DPA." In addition, this is a relationship of "VC>VB>VA" and the TX performs transmission periodically in the order of DPA, DPB, and DPC.

Next, an example of FIG. 22(B) will be described. Although the state is a strong coupling state, it is assumed that the TX cannot detect the placement of the RX by the AP. The TX transmits DPA after the transmission of a predetermined number of APs (2 APs). The RX activates the control unit with DPA and recognizes that DPA has been received.

Also, in response to DPA, the RX transmits a signal strength data packet. By receiving the packet from the RX, the TX recognizes that the RX has been placed. In other words, the TX recognizes that the placement of the RX has been detected with DPA with the minimum power. The TX retransmits a predetermined number of APs and then transmits DPB.

The RX activates the control unit with DPB and recognizes that DPB has been received. Also, the RX transmits a signal strength data packet in response to DPB. By receiving the packet from the RX, the TX recognizes that the RX has been placed. In other words, the TX recognizes that the placement of the RX has been detected by DPB. Subsequently, the TX recognizes that the placement of the RX has been detected by DPC according to a similar procedure.

As shown in FIG. 22(B), the TX detects the RX with DPA, DPB, and DPC. Also, the TX detects the RX with DPA again. When the TX has detected the object (the RX) twice with DPs under the same condition, it is possible to recognize that an attempt to detect the placement of the RX with all of DPA, DPB, and DPC has been completed after the placement of the RX on the charging base 300.

For example, the TX recognizes that an attempt to detect the placement of the object (the RX) with all DPs has been completed after the placement of the object (the RX) on the charging base 300 by detecting the object (the RX) twice with DPA. According to the DP-based attempt, the TX recognizes that the RX can be detected by all DPs after the placement of the RX. In other words, the TX recognizes that the placement of the RX can be detected by DPA with the minimum power.

Next, an example of FIG. 22(C) will be described. It is assumed that the state is the weak coupling state and the TX cannot detect the placement of the RX with an AP. After the TX transmits a predetermined number of APs, the TX transmits DPC to detect the object (the RX). Also, the TX does not detect the object (the RX) with DPA and DPB. The TX retransmits DPC to detect the object (the RX).

The object (the RX) is detected by two DPC pings, such that the TX can recognize that an attempt to detect the placement of the object (the RX) with all DPs has been completed after the placement of the object (the RX) on the charging base 300. In this case, the TX recognizes that the RX can be detected only by DPC with the maximum power.

Next, the DP transmitted by the TX after the placement of the object (the RX) is detected by the DP will be described. In the case of FIG. 22(B), the TX attempts to detect the placement of the object with all DPs and recognizes that the placement of the RX can be detected by all of DPA, DPB, and DPC. Because the placement of the RX can be detected by DPA with the minimum power, the TX can recognize that the coupling between the power transmission antenna and the power reception antenna is strong.

Therefore, the TX transmits a DP with relatively low power from the power transmission antenna. In other words, the TX subsequently transmits DPA with the minimum power. It is possible to activate the control unit of the RX placed on the TX with DPA and the RX can transmit a response to DPA (a notification of the reception power voltage value) to the TX.

When the RX transmits a signal strength data packet and the TX receives the packet, it transitions to the I&C phase (S1202 and S1302). In the communication between the TX and the RX in the I&C phase, the TX performs communication with power equivalent to power of a case where DPA is transmitted. Alternatively, in the communication between the TX and the RX in the I&C phase, the TX performs communication with Vinv (VA) equivalent to a voltage of a case where DPA is transmitted.

In the case of FIG. 22(C), because the TX can detect the placement of the RX only with DPC, the TX can recognize that the coupling between the power transmission antenna and the power reception antenna is weak. Therefore, the TX transmits a DP with relatively high power from the power transmission antenna.

In other words, the TX subsequently transmits DPC with the maximum power. The control unit of the RX placed on the TX can be activated by DPC and the RX can transmit a response to DPC (a notification of a reception power voltage value) to the TX.

When the RX transmits a signal strength data packet and the TX receives the packet, it transitions to the I&C phase (S1202 and S1302). In the communication between the TX and the RX in the I&C phase, the TX performs communication with power equivalent to power of a case where DPC is transmitted. Alternatively, in the communication between the TX and the RX in the I&C phase, the TX performs communication with Vinv (VC) equivalent to a voltage of a case where DPC is transmitted.

In the fourth method, the TX recognizes the coupling state between the power transmission antenna and the power reception antenna from a power value of a DP with the minimum power among a plurality of DPs by which the placement of the object (the RX) can be detected. The TX changes the power of the DP transmitted after the placement of the RX on the TX is detected in accordance with the coupling state. In other words, the power of the DP is decided in accordance with the minimum power with which the placement of the RX can be detected.

In the example of FIG. 22, a configuration in which the TX continuously transmits DPC with the maximum power is also conceivable. In this configuration, because the TX continuously transmits the DP with the maximum power, power consumption increases.

Moreover, even if the coupling state between the power transmission antenna and the power reception antenna is stronger than in the first state, it transitions to the I&C phase with DPC. As a result of supplying more power than necessary to the RX according to the DP, the RX is likely to be damaged.

The TX can detect the RX placed on the TX by transmitting a plurality of DPs with different power levels. Even if the coupling state between the power transmission antenna and the power reception antenna is stronger than the first state or even if the coupling state is stronger than the second state, the TX can detect that the RX has been placed. Moreover, this detection process can be implemented with more power saving and it transitions to the I&C phase with a DP with appropriate power.

Detailed operations of the TX and the RX will be described with reference to FIGS. 23 to 25. In FIG. 23, the TX transmits APs in F2301 and F2302 and transmits a DP with the first power in F2303. The TX transmits APs in F2304 and F2305 and transmits a DP with the second power in F2306.

The TX transmits APs in F2307 and F2308 and transmits a DP with the third power in F2309. The TX transmits APs in F2310 and F2311 and transmits a DP with the first power in F2312.

In F2313, the RX is placed on the TX. The TX transmits APs in F2314 and F2315 and transmits a DP in F2316. The RX detects the placement on the TX in F2317 and transmits a signal strength data packet to the TX in F2318.

Because the TX receives the packet in F2319, the placement of the RX is detected. In F2320 to F2328, two AP transmissions and one DP transmission are performed periodically as described above.

The RX detects the placement on the TX in F2329 and transmits a signal strength data packet to the TX in F2330. Because the TX receives the packet in F2331, a Q-value is measured in F2332 after the placement of the RX is detected.

In F2333, the TX transmits a DP. Hereinafter, because an operation from F2334 to F2340 is similar to an operation from F1609 to F1615 in FIG. 16, description thereof will be omitted.

In FIG. 24, the power supply of the TX is turned on in S2401. The TX has a function of counting the number of AP transmissions and a variable of the first counter is denoted by Counter_A. In S2402, the TX sets a value of Counter_A to zero.

Moreover, the TX has a function of counting the number of DP transmissions and the variable of the second counter is denoted by Counter_B. In S2403, the TX sets the value of Counter_B to zero.

In S2404, the TX transmits an AP to detect that the object has been placed on the charging base 300. Subsequently, in S2405, the TX increases (increments) the value of Counter_A by 1.

Also, in S2406, the TX determines whether or not the object (the RX) has been detected by the AP transmitted in S2404. When the object (the RX) has been detected, the process proceeds to the processing of S2417. When the object (the RX) has not been detected, the process proceeds to the processing of S2407 in FIG. 25.

In S2407, the TX waits for a predetermined time corresponding to the transmission interval of the AP or the transmission intervals of the AP and DP. In S2408, the TX determines whether or not the value of Counter_A has reached the predetermined number of times (e.g., 2).

When it is determined that the value of Counter_A has been reached the predetermined number of times, the process proceeds to the processing of S2409. When it is determined that the value of Counter_A has not reached the predetermined number of times, the process proceeds to the processing of S2404.

For example, when the value of Counter_A is 1 (No in S2408), the TX transmits an AP in S2404 and the value of Counter_A is increased by 1 and set to 2 in S2405. When no object has been detected in S2406 (No in S2406), it is determined that the Counter_A has reached 2 that is the predetermined number of times in S2408 after waiting in S2407 (Yes in S2408).

In S2409, the TX determines whether or not the value of Counter_B has reached the predetermined number of times (e.g., 3). When it is determined that the value of Counter_B has reached the predetermined number of times, the process proceeds to the processing of S2414. When it is determined that the value of Counter_B has not reached the predetermined number of times, the process proceeds to the processing of S2410.

In S2410, the TX makes a change to a condition different from a condition of a case where a previous digital ping is transmitted and transmits a DP after the change. In this regard, when the DP is transmitted for the first time after the TX is activated, the DP of the initial condition is transmitted.

The initial condition is that the power of the DP is the minimum power (DPA in FIG. 22). Subsequently, in S2411, the TX increases the value of Counter_B by 1 and then proceeds to the processing of S2412.

In S2412, the TX determines whether or not the RX has been detected by the transmitted DP. When the TX transmits a DP to the RX and receives a signal strength data packet from the RX, it is determined that the RX has been detected and the process proceeds to the processing of S2416.

Moreover, when the TX does not receive a signal strength data packet from the RX, it is determined that the RX has not been detected and the process proceeds to the processing of S2413. Because a predetermined number of APs are transmitted in S2413, the TX sets the value of Counter_A to zero and then proceeds to the processing of S2404.

The TX iterates the processing of S2404 to S2408 again. For example, when two APs have been transmitted (Yes in S2408), the TX determines whether or not the value of Counter_B has reached the predetermined number of times in S2409.

When the value of Counter_B is 1 (No in S2409), the process proceeds to the processing of S2410 and the TX transmits a DP of a condition different from that at the time of the previous DP transmission (F2305). When the power of the previous DP is the minimum power, DPB with the next highest power is transmitted as a current DP in S2410.

In S2411, Counter_B is incremented and the value of Counter_B is set to 2. When the RX has not been detected in S2412, the value of Counter_A is set to zero in S2413 and then the processing from S2404 to S2408 is iterated again.

When the value of Counter_B has not reached 3 that is the predetermined number of times, a DP of a condition different from that at the time of the previous DP transmission is transmitted in S2410. When the previous DP is DPB, DPC is transmitted as the current DP.

In S2411, the value of Counter_B is increased by 1 and set to 3. When the RX has not been detected in S2412, the process proceeds to the processing of S2413 and S2404 and the processing from S2404 to S2408 is iterated again.

In this case, because the value of Counter_B is 3 that is the predetermined number of times (Yes in S2409), the process proceeds to the processing of S2414. In S2414, the TX transmits a DP of the initial condition (F2312). DPA with the minimum power is transmitted. Subsequently, in S2415, the TX sets the value of Counter_B to zero. Also, the process proceeds to the processing of S2412.

According to the above control, the TX periodically transmits an AP and a DP. After the RX is placed on the TX, the TX performs the above control and transmits the DP to detect the RX (Yes in S2412), the process proceeds to the processing of S2416.

In S2416, the TX determines whether or not the RX has already been detected by DPs under the same condition. When the RX has not been previously detected by the DPs under the same condition (No in S2416), the process proceeds to the processing of S2404 via S2413. In this case, the AP and DP are transmitted periodically.

Moreover, when the RX has previously been detected by the DPs under the same conditions (Yes in S2416), the process proceeds to the processing of S2417 (FIG. 24). In addition, when the TX has detected the object (the RX) twice with DPs under the same condition, it is possible to recognize that an attempt to detect the placement of the RX on the charging base 300 with all DPs (DPA, DPB, and DPC) has been completed.

In S2417, the TX measures a quality factor by the Q-value measurement method. In addition, the TX may detect whether or not the object is an object having the function of an NFC Card or an RFID tag before and after this measurement.

When the TX detects an object with such a function and determines that the power transmitted by the TX is likely to cause damage, a DP is not transmitted. The process proceeds to the processing of S2418 after S2417.

In S2418, the TX transmits a DP corresponding to a condition of the ping when the object has been detected. Specifically, when the object has been detected by the AP, control is performed to transmit the DP of the initial condition (the minimum power). Moreover, when the object (the RX) has been detected by the DP, control is performed to transmit a DP of power corresponding to the condition of the DP.

The TX decides the power of the DP to be subsequently transmitted in accordance with the power of the DP of the minimum power with which the object has been detected. The TX transmits the DP of the decided power and the RX receives the DP from the TX and detects the placement on the charging base 300 (F2334). The RX transmits a signal strength data packet that is a response to the DP to the TX (F2335). The process proceeds to the processing of S2419 after S2418.

In S2419, the TX determines whether or not a signal strength data packet has been received from the RX. When this determination condition is satisfied, the TX recognizes that the RX has been placed (F2336).

The series of processes is completed and the phase shifts to the I&C phase (S1202 and S1302). In the communication between the TX and the RX in the I&C phase, the TX performs communication with power equivalent to power of the DP to be transmitted in S2418.

Alternatively, in the communication between the TX and the RX in the I&C phase, the TX performs communication with Vinv equivalent to a voltage of the DP transmitted in S2418. When the TX does not receive a signal strength data packet (No in S2419), the process proceeds to the processing of S2413 (or S2402).

In the above-described example, control is performed to transmit three types of DPs having different power levels in the order of low-, medium-, and high-power levels, but the present invention is not limited to this example. For example, when the TX detects the RX with a DP, a DP having lower power than the DP by which the RX has been detected may be transmitted as the next DP.

As described above, the TX decides the power of the DP in the I&C phase in accordance with the power of the DP with the minimum power with which the RX can be detected. That is, because the purpose is to search for a DP with the minimum power with which the RX can be detected, the TX can detect the placement of the RX in a shorter time according to the above-described method.

Moreover, after the placement of the RX is detected by DPA with the minimum power, the TX does not transmit DPB or DPC. That is, the TX may immediately decide the power of a DP and transmit the DP in the I&C phase.

Moreover, in the above-described example, when the placement of the object has been detected twice with DPs under the same condition (with the same power), the TX determines that an attempt to detect the placement of the object with a DP of all of low-, medium-, and high-power levels has been completed. The present invention is not limited to this example. The TX can recognize that the attempt to detect the placement of the object with DPs of all of the low-, medium-, and high-power levels has been completed.

For example, in FIG. 22(B), the TX detects the placement of the object twice with DPA and determines that an attempt has been made to detect the placement of the object with all DPs. Instead of this determination, the TX detects the placement of the object once with DPA and then detects the placement of the object with DPB and DPC, such that it is possible to determine that the attempt to detect the placement of the object with all DPs has been completed.

Next, another method in which the TX detects the placement of the RX when the coupling between the power transmission antenna and the power reception antenna is weak will be described. In the above-described first to fourth methods, before it transitions to the I&C phase, the TX transmits a DP to the RX. The RX, which has received the DP, transmits a signal strength data packet, which is a response to the DP, to the TX.

The signal strength data packet stores the voltage value of the DP received by the RX as the signal strength value. When the TX receives the signal strength data packet from the RX, the power or Vinv of the DP may change with the signal strength value.

For example, the TX compares the signal strength value with a predetermined threshold. When the signal strength value is less than the predetermined threshold, the TX performs control so that the power or Vinv is increased by a difference between the two values and transmits a DP.

Moreover, when the signal strength value is greater than the predetermined threshold, the TX performs control so that the power or Vinv is decreased by a difference between the two values and transmits a DP. In the communication between the TX and the RX in the I&C phase, the TX performs communication with the power (or Vinv) equivalent to the power (or Vinv) of the DP changed in accordance with the signal strength value.

The above-described method is also applicable to the DP for detecting the placement of the RX described in the fourth method. Although the TX periodically changes the power of the DP and transmits the DP as shown in FIG. 22, the RX can transmit a signal strength data packet to the TX when the control unit 201 of the RX has been activated.

Therefore, the TX may change the power or Vinv of the DP to be subsequently transmitted in accordance with the signal strength value.

Alternatively, as another method, the TX or the RX may calculate (measure) a coupling state index between the power transmission antenna and the power reception antenna and decide the power or Vinv of the DP on the basis of a calculation (measurement) result. The TX or the RX calculates (measures) a coupling state index on the basis of the first measurement method or the second measurement method described above.

In accordance with the calculated (measured) coupling state index, the power or Vinv of the DP can be changed. For example, the TX compares the calculated coupling state index with a predetermined threshold. Here, a method of setting a state determination threshold for the coupling state index acquired by the first or second measurement method described above can be applied to set the predetermined threshold.

When the value of the coupling state index is less than (or greater) than the predetermined threshold, the TX performs control so that the power or Vinv is increased (or decreased) by the difference between the two values and transmits a DP with the increased (decreased) power or Vinv.

In the communication between the TX and the RX in the I&C phase, the TX performs communication with power equivalent to power of the DP changed in accordance with the coupling state index. Alternatively, in the communication between the TX and the RX in the I&C phase, the TX performs communication with Vinv equivalent to the Vinv of a DP changed in accordance with the coupling state index.

Moreover, in the first to fourth methods, it is assumed that the TX transmits a DP to the RX before the transition to the I&C phase. At this time, a case where the RX cannot receive the DP (the control unit 201 of the RX cannot be activated) is assumed.

A signal strength data packet is not transmitted from the RX to the TX. Alternatively, a signal strength data packet is transmitted from the RX to the TX, but the TX may not be able to receive the signal strength data packet.

In this case, after waiting for a predetermined time, the TX performs control for transmitting a DP having higher power than a previously transmitted DP to the RX. Alternatively, the TX performs control for transmitting a DP having higher Vinv than a previously transmitted DP to the RX. Thereafter, a state in which the RX cannot receive the DP or the TX cannot receive the signal strength data packet may continue.

In this case, the TX further performs control for transmitting a DP with higher power. Alternatively, the TX further performs control for transmitting a DP with higher Vinv. In this way, if the above-described state continues before the transition to the I&C phase, the TX appropriately controls the power or Vinv of the DP to be transmitted to the RX.

In other words, the TX sets the power or Vinv of the DP to be initially transmitted to the minimum power, increases the power or Vinv in stages, and performs a plurality of DP transmissions. It is assumed that the number of stages of changing the power or Vinv is two or more.

When the TX has received a signal strength data packet from the RX, it transitions to the I&C phase using power of the DP, power decided on the basis of Vinv, or a DP of Vinv.

In the communication between the TX and the RX in the I&C phase, the TX performs communication with power equivalent to that of the decided DP. Alternatively, in the communication between the TX and the RX in the I&C phase, the TX performs communication with Vinv equivalent to a voltage of the decided DP.

The above-described method is also applicable for the AP transmitted by the TX before the transition to the I&C phase, even if the TX does not change its power and does not change the determination threshold. Moreover, the above-described method is applicable for DPs transmitted by the TX before the transition to the I&C phase, even if the TX does not change its power.

In other words, the above-described method is applicable regardless of the condition of the AP or DP that is transmitted by the TX before the transition to the I&C phase. In this way, a probability of power transmission from the TX to the RX increases when it transitions to the I&C phase.

As described above, in the present embodiment, the power of the AP or DP to be transmitted to detect the placement of the object on the TX or a determination reference value (threshold) for detection of placement is controlled. With this control, it is possible to detect that the object has been placed on the TX even if the coupling between the power transmission antenna and the power reception antenna is weak.

Moreover, it is possible to detect the placement of a plurality of objects (RXs) with different electrical characteristics by controlling the determination reference value for detecting the placement of the object on the TX. Here, the "electrical characteristics" are, for example, power (startup power) with which the control unit 201 of the RX can be activated or the maximum power that can be supplied to the RX.

When a plurality of RXs having different electrical characteristics are placed on the TX, the TX can detect and identify a plurality of the RXs. Moreover, the above-described methods described in the present embodiment can be appropriately combined and executed.

According to the present embodiment, even if the electromagnetic coupling between the power transmission antenna and the power reception antenna is weak, a process of detecting the placement of the object can be more appropriately performed.

[Second Embodiment]

A second embodiment will be described with reference to FIGS. 26 to 29. In the present embodiment, a method of recognizing that the power transmission device and the power reception device are in a weak coupling state will be described. Moreover, a method of recognizing that a power transmission device and a power reception device are in a strong coupling state will be described.

For example, there is a case where the power transmission antenna and the power reception antenna are not directly facing each other as shown in FIG. 14(B) or a case where a separation distance between the antennas is greater than or equal to a predetermined distance as in FIGS. 14(C) and 14(D).

Alternatively, even if the separation distance between the antennas is less than a predetermined distance, there may be a conductor, a dielectric, a magnetic material, or the like near the power transmission antenna

or the power reception antenna. According to the presence of the conductor, the dielectric, the magnetic material, or the like, there is a possibility that the coupling between the power transmission antenna and the power reception antenna will be weak.

Specific control performed in the case of a weak coupling state will be described in a third embodiment. A method of recognizing the weak coupling state will be described in the present embodiment. It is necessary to correctly recognize that the TX and the RX are in a weak coupling state so that the TX and the RX perform predetermined control in the case of the weak coupling state. In the present embodiment, matters similar to those in the first embodiment will not be described and only differences will be described. This method of omitting descriptions is also applicable to embodiments to be described below.

First, a first method in which the power transmission device and the power reception device recognize that the state is a weak coupling state will be described. In the examples of FIGS. 14(B), 14(C), and 14(D), when the RX has been placed on the TX, there is a possibility that a weak coupling state may occur and it is assumed that the power reception device is already aware of this.

Alternatively, in the vicinity of the power reception antenna, there may be a conductor, a dielectric, a magnetic material, or the like constituting a part of a housing of the RX. Due to the presence of a conductor, a dielectric, a magnetic material, or the like, there is a possibility of a weak coupling state, and it is assumed that the power reception device is already aware of this. The RX can notify the TX of predetermined information indicating that there is a possibility of a weak coupling state.

Alternatively, the RX can notify the TX of predetermined information indicating that a structure in the vicinity of the power reception antenna of the RX satisfies a predetermined condition. Here, the predetermined condition refers to a case where a distance between the exterior of the housing of the RX and the power reception antenna is greater than a predetermined value or a case where a conductor, a dielectric, a magnetic material, or the like constituting a part of the housing of the RX is present within a predetermined distance from the power reception antenna.

By receiving the information, the TX can recognize the possibility of a weak coupling state. The predetermined information is, for example, as follows.

- Information acquired by communication based on a first standard (a WPC standard) that is performed between a first communication unit 104 of the TX and a first communication unit 204 of the RX.
- Information acquired by communication based on a second standard (a standard other than the WPC standard) that is performed between a second communication unit 109 of the TX and a second communication unit 212 of the RX.

Moreover, the predetermined information is included in the signal strength data packet transmitted from the RX to the TX in the ping phase and its notification is provided. Alternatively, the predetermined information is included in the identification data packet transmitted from the RX to the TX in the I&C phase and its notification is provided.

Alternatively, the predetermined information is included in an extended identification data packet transmitted from the RX to the TX in the I&C phase and its notification is provided. Alternatively, the predetermined information is included in the configuration data packet transmitted from the RX to the TX in the I&C phase and its notification is provided.

Alternatively, the predetermined information is included in the FOD status data packet transmitted from the RX to the TX in the negotiation phase and its notification is provided. Alternatively, it may be a packet in the calibration phase or the power transfer phase, i.e., RP1, RP2, or RP0.

In these packets, a 1-bit field indicating whether or not there is a possibility of a weak coupling state is provided. When the RX notifies the TX that there is a possibility of a weak coupling state, "1" (or "0") is stored in the field. When the RX notifies the TX that there is no possibility of a weak coupling state, "0" (or "1") is stored in the field.

Alternatively, in these packets, a 1-bit field indicating whether or not the structure in the vicinity of the power reception antenna satisfies a predetermined condition is provided. When the structure in the vicinity of the power reception antenna satisfies the predetermined condition, the RX stores "1" (or "0") in the field.

Moreover, when the RX notifies the TX that the structure in the vicinity of the power reception antenna does not satisfy the predetermined condition, "0" (or "1") is stored in the field. Alternatively, an FOD status data packet can be used. The packet includes a reference quality factor value and a reference resonance frequency value.

A process is performed to make a reference quality factor value or a reference resonance frequency value greater or less than a predetermined threshold. These values can be used as information indicating whether or not there is a possibility of a weak coupling state.

Alternatively, these values can be used as information indicating whether or not the structure in the vicinity of the power reception antenna satisfies the predetermined condition. Hereinafter, it is assumed that the description of "information indicating whether or not there is a possibility of a weak coupling state" is similarly applicable to "information indicating whether or not the structure in the vicinity of the power reception antenna satisfies the predetermined condition."

Moreover, the above-described packet can further provide a notification of detailed information about the hardware of the power reception device in addition to information indicating whether or not there is a possibility of a weak coupling state. Moreover, the above-described packet can further provide a notification of detailed information about the hardware of the power reception device in addition to information indicating whether or not the structure in the vicinity of the power reception antenna satisfies a predetermined condition.

For example, there is information such as the size and type of the power reception antenna (a power reception coil). By receiving the information from the RX, the TX can recognize that there is a possibility that the coupling between the power transmission antenna and the power reception antenna will be weakened.

FIG. 26 is an explanatory flowchart of the process in the first method. In S2501, the RX transmits a packet including information indicating the coupling state between the power transmission antenna and the power reception antenna to the TX. In S2501, the TX receives a packet including information indicating the coupling state between the power transmission antenna and the power reception antenna from the RX.

In S2502, the TX determines whether or not the received packet includes information indicating the weak coupling state. When it is determined that the packet includes information indicating the weak coupling state (Yes in S2502), the process proceeds to the processing of S2503 and the TX executes control in the case of the weak coupling state in cooperation with the RX.

Specific control will be described in the third embodiment. On the other hand, when it is determined that the packet does not include information indicating the weak coupling state (No in S2502), the process proceeds to the processing of S2504 and the TX and the RX execute control in the case of a strong coupling state.

Alternatively, even if it is determined that the packet includes information indicating that there is no possibility of a weak coupling state, the process proceeds to the processing of S2504, and the TX and the RX execute control in the case of the strong coupling state. An example of this control is control specified in the ordinary WPC standard.

Another example will be described with reference to FIG. 26. In S2501, the RX transmits a packet including information indicating the structure in the vicinity of the power reception antenna to the TX. In S2501, the TX receives a packet including information indicating the structure in the vicinity of the power reception antenna from the RX.

In S2502, the TX determines whether or not the received packet includes information indicating that the structure in the vicinity of the power reception antenna satisfies a predetermined condition. When it is determined that the packet includes information indicating that the structure in the vicinity of the power reception antenna satisfies the predetermined condition (Yes in S2502), the process proceeds to the processing of S2503 and the TX executes control in the case of the weak coupling state in cooperation with the RX.

Specific control will be described in the third embodiment. On the other hand, when it is determined that the packet does not include information indicating that the structure in the vicinity of the power reception antenna satisfies the predetermined condition (No in S2502), the process proceeds to the processing of S2504 and the TX and the RX execute control in the case of the strong coupling state.

Alternatively, even if it is determined that the packet includes information indicating that the structure in the vicinity of the power reception antenna does not satisfy the predetermined condition, the process proceeds to the processing of S2504 and the TX and the RX execute control in the case of a strong coupling state. An example of this control is control specified in the WPC standard.

Another method for recognizing that the power transmission device and the power reception device are in the weak coupling state will be described. The coupling state between the TX and the RX is not decided solely by the structure of the RX and may also be related to the structure of the TX. For example, in the case of FIG. 14(D), the coupling state between the TX and the RX is determined by a size of a required predetermined area in the RX and a size of a required predetermined area in the TX.

Therefore, the TX or the RX determines the coupling state between the TX and the RX on the basis of both the information possessed by the TX and the information possessed by the RX. Description will be given with reference to FIG. 26. It is assumed that the power transmission device is already aware of the structure of the housing in the vicinity of the power transmission antenna. Moreover, it is assumed that the power reception device is already aware of the structure of the housing in the vicinity of the power reception antenna.

In S2501, the TX receives a packet including information about the structure of the housing in the vicinity of the power reception antenna from the RX. In S2502, the TX determines the coupling state between the TX and the RX on the basis of information about the structure in the vicinity of the received power reception antenna and information about the structure of the housing in the vicinity of the power transmission antenna.

When it is determined that the coupling state between the TX and the RX is a weak coupling state (Yes in S2502), the process proceeds to the processing of S2503 and the TX executes control in the case of the weak coupling state in cooperation with the RX. Specific control will be described in the third embodiment. On the other hand, when it is determined that the coupling state between the TX and the RX is a strong coupling state (No in S2502), the process proceeds to the processing of S2504 and the TX and the RX execute control in the case of the strong coupling state.

An example of this control is control specified in the WPC standard. Alternatively, in S2501, the RX receives a packet including information about the structure of the housing in the vicinity of the power transmission antenna from the TX. In S2502, the RX determines the coupling state between the TX and the RX on the basis of the received information about the structure in the vicinity of the power transmission antenna and information about the structure of the housing in the vicinity of the power reception device.

When it is determined that the coupling state between the TX and the RX is a weak coupling state (Yes in S2502), the process proceeds to the processing of S2503 and the TX executes control in the case of the weak coupling state in cooperation with the RX. Specific control will be described in the third embodiment. On the other hand, when it is determined that the coupling state between the TX and the RX is a strong coupling state (No in S2502), the process proceeds to the processing of S2504 and the TX and the RX execute control in the case of the strong coupling state.

An example of this control is control specified in the WPC standard. Here, an example of information about the structure in the vicinity of the power transmission antenna is shown below.

- Information about whether or not a distance between the exterior of the housing of the TX and the power transmission antenna is greater than or equal to a predetermined value.
- Information about whether or not there are a conductor, a dielectric, a magnetic material, and the like constituting a part of the housing of the TX within a predetermined distance from the power transmission antenna.

Moreover, an example of information about the structure in the vicinity of the power reception antenna is shown below.

- Information about whether or not a distance between the exterior of the housing of the RX and the power reception antenna is greater than or equal to a predetermined value.
- Information about whether or not there are a conductor, a dielectric, a magnetic material, and the like constituting a part of the housing of the RX within a predetermined distance from the power reception antenna.

Next, a second method for recognizing that the power transmission device and the power reception device are in a weak coupling state will be described. When there is a possibility of a weak coupling state, the TX and the RX measure a coupling state index between the power transmission antenna and the power reception antenna and make the state determination by comparing a measurement result with a predetermined threshold.

When the measurement result of the coupling state index is outside a threshold range, it is possible to recognize that the TX and the RX are in the weak coupling state. A method of setting a state determination threshold is similar to a threshold setting method for measuring the coupling state index. For example, a threshold is set by the first or fourth threshold setting method.

The TX and the RX compare the measurement value of the coupling state index with the threshold. For example, it is possible to determine that the TX and the RX are in a weak coupling state when the measurement value is less than the threshold and it is possible to determine that the TX and the RX are in a strong coupling state when the measurement value is greater than or equal to the threshold.

FIG. 27 is a flowchart showing the process in the second method. In S2601, the TX and the RX set a threshold for the coupling state index. In S2602, the RX transmits a packet including information for calculating a coupling state index to the TX. In S2602, the TX receives a packet including information for calculating a coupling state index from the RX.

The TX measures a value necessary for calculating a coupling state index in S2603 and calculates the coupling state index in S2604. In S2605, the TX determines whether or not the calculated coupling state index is less than a threshold. When it is determined that the calculated coupling state index is less than the threshold (Yes in S2605), the process proceeds to the processing of S2606.

Moreover, when it is determined that the calculated coupling state index is not less than the threshold (No in S2605), the process proceeds to the processing of S2607. In S2606, the TX transmits a negative response NAK to the RX and the TX executes control in the case of a weak coupling state in cooperation with the RX. Specific control will be described in the third embodiment.

The RX recognizes that the TX and the RX are in a weak coupling state by receiving a negative response NAK from the TX. Moreover, in S2607, the TX transmits a positive response ACK to the RX and the TX and the RX execute control of a case where the RX and the TX are in a strong coupling state. An example of this control is control specified in the WPC standard. The RX recognizes that the state is the strong coupling state by receiving the positive response ACK from the TX.

Although a case where the TX calculates the coupling state index has been described in the above-described example, the calculation of the coupling state index may be performed by the RX. An operation of a case where the RX calculates a coupling state index will be described using the flowchart of FIG. 27. In S2601, the TX and the RX set a threshold for the coupling state index.

In S2602, the TX transmits a packet including information for calculating a coupling state index to the RX. In S2602, the RX receives the packet including the information for calculating the coupling state index from the TX. The RX measures a value necessary for calculating the coupling state index in S2603 and calculates the coupling state index in S2604.

In S2605, the RX determines whether or not a value of the calculated coupling state index is less than the threshold. When it is determined that the value of the calculated coupling state index is less than the threshold (Yes in S2605), the process proceeds to the processing of S2606. Moreover, when it is determined that the value of the calculated coupling state index is not less than the threshold (No in S2605), the process proceeds to the processing of S2607.

In S2606, the RX transmits a predetermined first packet to the TX and the RX executes control in the case of a weak coupling state in cooperation with the TX. Specific control will be described in the third embodiment. The TX recognizes that the state is the weak coupling state by receiving the predetermined first packet from the RX. Moreover, in S2607, the RX transmits a predetermined second packet to the TX and the RX and the TX execute control in the case of a strong coupling state.

An example of this control is control specified in the WPC standard. The TX recognizes that the state is the strong coupling state by receiving the predetermined second packet from the RX. In addition, there is a possibility that the coupling state between the TX and the RX may change over time due to a position shift or the like. Therefore, the TX and the RX may periodically execute the processing from S2601 to S2607 during the power transfer phase.

Next, a third method for recognizing that the power transmission device and the power reception device are in the weak coupling state will be described. When there is a possibility of a weak coupling state, a determination process is performed as to whether or not the power received by the RX from the TX is less than a predetermined threshold. When the reception power of the RX is less than the predetermined threshold, it is possible to recognize that the TX and the RX are in the weak coupling state.

The RX measures the reception power value and notifies the TX of a measurement result. For example, in the ping phase, the TX transmits a DP and the RX measures a voltage value of the received (reception-power-specific) DP. The RX stores the measured voltage value as a signal strength value in the signal strength data packet.

The RX transmits a packet to the TX and the TX receives the packet from the RX. The signal strength value is a value measured by the RX as a voltage value with respect to the power transmitted by the TX. That is, a magnitude of the reception power voltage value (the measurement value) is the strength of coupling between the power transmission antenna and the power reception antenna.

The TX compares the signal strength value within the packet with the threshold. When the signal strength value is greater than or equal to the threshold, the TX determines that the state is the strong coupling state. When the signal strength value is less than the threshold, the TX determines that the state is the weak coupling state.

In addition, the signal strength value is a value obtained by the RX measuring the power transmitted by the TX as a voltage value. The RX determines the strength of the coupling between the power transmission antenna and the power reception antenna according to a result of comparing the measurement value of the signal strength value with the threshold.

In relation to the threshold setting process in the third method, the first or fourth threshold setting method among the threshold setting methods in the measurement of the coupling state index may be particularly implemented, the TX may hold the threshold in advance, and the RX may notify the TX of the threshold. Alternatively, the TX and the RX may hold the same threshold in advance.

Alternatively, in the calibration phase or the power transfer phase, the RX can be implemented using a packet for notifying the TX of the reception power value. RP1, RP2, or RP0 include information about the reception power value measured by the RX. This is a value obtained when the RX measures power of the power transmission of the TX.

That is, a magnitude of the reception power value measured by the RX is the strength of the coupling between the power transmission antenna and the power reception antenna. The TX compares the threshold with the reception power value stored within RP1, RP2, or RP0. When the reception power value is greater than or equal to the threshold, the TX determines that the state is a strong coupling state. When the reception power value is less than the threshold, the TX determines that the state is a weak coupling state.

In addition, the reception power value stored in the packet transmitted by the RX to the TX is a power value obtained when the RX measures power of the power transmission of the TX. The RX can determine the strength of the coupling between the power transmission antenna and the power reception antenna according to a result of comparing the measured reception power value with the threshold.

FIG. 28 is a flowchart showing a process in the third method. In S2701, the TX transmits a DP. In S2702, the TX determines whether or not a signal strength data packet including information about a reception power voltage value received by the RX has been received from the RX.

When the TX has received the packet (Yes in S2702), the process proceeds to the processing of S2704. When the TX has not received the packet (No in S2702), the process proceeds to the processing of S2703. In S2703, the TX proceeds to the process of S2701 after waiting for a predetermined time and retransmits a DP.

In S2704, the TX determines whether or not the signal strength value in the signal strength data packet is less than a predetermined value (threshold). When it is determined that the signal strength value is less than the predetermined value (Yes in S2704), the process proceeds to the processing of S2705 and the TX executes control in the case of a weak coupling state in cooperation with the RX.

Specific control will be described in the third embodiment. Moreover, when it is determined that the signal strength value is not less than a predetermined value (No in S2704), the process proceeds to the processing of S2706 and the TX executes control in the case of a strong coupling state. An example of this control is control specified in the WPC standard.

FIG. 29 is an explanatory TX-specific flowchart of another example of the process in the third method. In S2801, the TX starts power transmission for the RX. In S2802, the TX determines whether or not a received power data packet including information about the reception power value received by the RX has been received from the RX.

When the TX has received the received power data packet (Yes in S2802), the process proceeds to the processing of S2804. Moreover, when the TX has not received the packet (No in S2802), the process proceeds to the processing of S2803 and proceeds to the processing of S2802 after waiting for a predetermined time.

In S2804, the TX determines whether or not the reception power value in the received power data packet is less than a predetermined value (threshold). When it is determined that the reception power value in the packet is less than the predetermined value (Yes in S2804), the TX executes control in the case of a weak coupling state in cooperation with the RX in S2805.

Specific control will be described in the third embodiment. Moreover, when it is determined that the reception power value in the packet is not less than the predetermined value (No in S2804), the TX executes control in the case of a strong coupling state in S2806. An example of this control is control specified in the WPC standard.

In addition, the coupling state between the TX and the RX is likely to change over time, for example, due to a position shift or the like. Therefore, the TX and the RX may periodically execute the processing from S2801 to S2806 during the power transfer phase.

Next, a fourth method for recognizing that the power transmission device and the power reception device are in a weak coupling state will be described. In the case of a weak coupling state in the first embodiment, the first to fourth methods are cited as methods in which the TX detects the placement of the RX. For example, the AP or DP to be transmitted before the I&C phase is controlled so that an object can be detected even in a weak coupling state.

The TX can make the determination related to the condition of the AP or DP by which the object has been detected and recognize that the state is the weak coupling state. In the first method of the first embodiment, an example in which the power of the AP is periodically changed will be described.

As shown in FIG. 15(A), when the TX can detect an object with the AP having the minimum power, it is determined that the state is the strong coupling state. Moreover, as shown in FIG. 15(B), when the TX can detect an object only with the AP having the maximum power, it is determined that the state is the weak coupling state. That is, it is possible to recognize the coupling state between the power transmission antenna and the power reception antenna on the basis of the power of the AP by which the object can be detected.

Moreover, in the second method of the first embodiment, an example in which the threshold for use in detecting the placement of the object with the AP is changed will be described. As shown in FIG. 18(A), the TX determines that the state is the strong coupling state when the object has been detected by the AP when the threshold for use in determining the placement of the object is the first threshold.

Moreover, as shown in FIG. 18(B), the TX determines that the state is the weak coupling state when the object has been detected by the AP when the threshold for use in determining the placement of the object is the third threshold. That is, it is possible to recognize the coupling state between the power transmission antenna and the power reception antenna on the basis of the object placement determination threshold for detecting the object.

Moreover, in the third method of the first embodiment, an example in which the power of the DP is changed in accordance with a value of the physical quantity detected during AP transmission has been described. As shown in FIG. 19(A), the TX determines that the state is the strong coupling state when a variation in the detected physical quantity is within a range based on the first threshold.

Moreover, as shown in FIG. 19(B), the TX determines that the state is the weak coupling state when the variation in the detected physical quantity is within a range based on the third threshold. That is, it is possible to recognize a coupling state of the power transmission antenna and the power reception antenna on the basis of a result of comparing the variation in the detected physical quantity with the threshold.

Moreover, in the fourth method of the first embodiment, an example in which the power of the DP is periodically changed has been described. As shown in FIG. 22(B), the TX determines that the state is a strong coupling state when the RX can be detected by the DP having the minimum power. Moreover, as shown in FIG. 22(C), when the TX can detect the RX only with the DP with the maximum power, it is determined that the state is a weak coupling state. That is, it is possible to recognize the coupling state between the power transmission antenna and the power reception antenna on the basis of the power of the DP by which the RX can be detected.

As described above, the power transmission device and the power reception device can more accurately recognize that the power transmission device and the power reception device are in a weak coupling state on the basis of the conditions (power, a determination threshold, and the like) of the AP or DP by which the placement of the object (the RX) can be detected.

By utilizing the first to fourth methods described in the first embodiment or combining these methods as necessary, it is possible to more accurately recognize that the power transmission device and the power reception device are in a weak coupling state.

According to the present embodiment, it is possible to more accurately recognize a state in which the electromagnetic coupling between the power transmission antenna and the power reception antenna is weak.

[Third Embodiment]

Next, a third embodiment of the present disclosure will be described. In the present embodiment, an example in which a TX and an RX perform a control process in the case of a weak coupling state will be described. Even in the case of the weak coupling state, the TX can detect the placement of the RX by the method of the first embodiment and the TX and the RX can recognize a state in which the coupling between the power transmission antenna and the power reception antenna is weak by the method of the second embodiment.

Although the TX transmits power to the RX on the basis of a recognition result, there are the following problems when the power is transmitted in a weak coupling state.

- Noise leaking from a power transmission antenna and a power reception antenna to surroundings is large.
- Communication performed by superimposing a signal on a transmission power waveform of the TX (voltage waveform or current waveform) becomes unstable.
- Accuracy of foreign substance detection specified in the WPC standard is reduced.

In order to solve the above problem, when the TX detects the placement of the RX and recognizes that the TX and the RX are in the weak coupling state, the TX and the RX perform the following control.

First, a method in which the TX reduces the transmission power to the RX will be described as a first method of suppressing noise leaking from the power transmission antenna and the power reception antenna to the surroundings. When it is recognized that the TX and the RX are in the weak coupling state, control is performed to limit the power by reducing the transmission power compared to the case of the strong coupling state.

The power supply of the power transmitted from the TX can also be a noise source. Therefore, it is possible to suppress noise leaking from the power transmission antenna and the power reception antenna to the surroundings by reducing the transmission power. A control unit 101 of the TX controls a power transmission unit 103 and sets the transmission power to be less than or equal to a predetermined power value. The power transmitted from a power transmission antenna 105 is limited to a predetermined power value or less.

Another implementation method for reducing the transmission power of the TX or a method for reducing the reception power of the RX is a method in which the TX and the RX negotiate in the negotiation phase to decide a GP. The RX transmits requested load power information to the TX.

The requested load power is a value of power requested from the RX to the TX so that the power is output to the load. This power is power consumed by the load. The load refers to a system in which power is supplied from the RX or the power reception unit of the RX, and examples of the load include a charging unit 206 and a battery 207 of the RX.

On the other hand, the TX has a potential load power value or a negotiable load power value in advance. The potential load power has a maximum load power value (a highest load power level) of load power that can be negotiated by the TX and output (supplied) to the load of the RX.

Moreover, the negotiable load power is a maximum load power value (a highest load power level) of load power that can be negotiated by the TX and output (supplied) to the load of the RX during a predetermined period or under predetermined conditions. A negotiation is concluded if the value of the requested load power is less than the value of negotiable load power.

The TX and the RX set a value of requested load power as a value of the GP and hold the set value in the memory. That is, the TX receives the value of requested load power from the RX and transmits a positive response ACK to the RX when the value is less than the value of negotiable load power.

The TX and the RX set the value of requested load power as the value of the GP and hold the set value in the memory. The TX also receives the value of the requested load power from the RX and transmits a negative response NAK to the RX when the value is greater than the value of the negotiable load power.

The RX decreases the value of the requested load power and retransmits information indicating the value of requested load power to the TX. The RX iterates this process until a positive response ACK is received from the TX. When the RX receives the positive response ACK from the TX, the TX and the RX set the value of requested load power as the value of the GP and hold the set value in the memory.

When the value of the GP is set to be less than or equal to a predetermined value, the transmission power of the TX can be reduced and the reception power of the RX can be reduced. Thus, the TX sets the potential load power or the negotiable load power to a predetermined value or less.

Alternatively, the RX sets the value of the requested load power to a predetermined value or less. In addition, the above-described control may be executed in the renegotiation phase. Moreover, the TX may switch an inverter provided in the power transmission unit 103 from a switching circuit having a full-bridge configuration to a switching circuit having a half-bridge configuration.

In the above-described example, the operations of the TX and the RX when the TX and the RX recognize that the state is a weak coupling state have been described. On the other hand, when a foreign substance (a metallic piece or the like) located between the power transmission antenna and the power reception antenna is removed, the coupling state between the power transmission antenna and the power reception antenna changes from the weak coupling state to the strong coupling state.

Alternatively, when a position shift between the power transmission antenna and the power reception antenna is eliminated and the power transmission antenna and the power reception antenna are arranged to directly face each other, the coupling state between the power transmission antenna and the power reception antenna changes from the weak coupling state to the strong coupling state. Alternatively, as a distance between the power transmission antenna and the power reception antenna decreases, the coupling state between the power transmission antenna and the power reception antenna changes from the weak coupling state to the strong coupling state.

An operation when the coupling state between the power transmission antenna and the power reception antenna is changed from the weak coupling state to the strong coupling state will be described. The TX and the RX calculate (measure) a coupling state index by the coupling state index measurement method and compare the calculated coupling state index with a set threshold. A method of setting the threshold is as described above.

Also, when it is recognized that the TX and the RX are in a strong coupling state, control is performed to increase the transmission power of the TX (increase the reception power of the RX) compared to the case of the weak coupling state. In this case, the value of the GP is set to a predetermined value or more, such that the transmission power of the TX can be increased (the reception power of the RX can be increased).

Thus, the TX sets the potential load power or negotiable load power to a predetermined value or more. Alternatively, the RX sets the value of requested load power to a predetermined value or more. In addition, the above-described control may be executed in the renegotiation phase.

Moreover, the TX may switch the inverter provided in the power transmission unit 103 from the switching circuit having the half-bridge configuration to the switching circuit having the full-bridge configuration. Alternatively, in the TX or the RX, the coupling state index is calculated (measured) by the coupling state index measurement method at a predetermined timing in the power transfer phase and the coupling state is determined by comparing the calculated coupling state index with the set threshold.

The predetermined timing occurs at prescribed intervals or occurs when the TX has received a predetermined packet from the RX. Alternatively, the predetermined timing occurs when the RX has received a predetermined packet from the TX. The TX or the RX may control the transmission power by the above-described method in accordance with a determination result of the coupling state.

Next, a method in which the TX changes a frequency band of a transmission power waveform will be described as a second method of suppressing noise leaking from the power transmission antenna and the power reception antenna to the surroundings. Noise is generated in a frequency band for use in power transmission from the power transmission antenna to the power reception antenna (hereinafter referred to as a usable frequency band).

Moreover, harmonic noise is generated in a frequency band higher than the usable frequency band. When the frequency band in which noise is generated is used by another system, there is a possibility that the other system will malfunction. Therefore, when the state is recognized as a weak coupling state, the TX and the RX perform control for changing the usable frequency band from a first frequency band to a second frequency band.

It is possible to suppress an influence on the other system by changing the frequency band of noise leaking from the power transmission antenna and the power reception antenna to the surroundings. The usable frequency band specified in the WPC standard is in a range of 87 kHz to 205 kHz. When the TX and the RX recognize that the state is a weak coupling state, the usable frequency band is changed to a frequency band lower than 87 kHz or a frequency band higher than 205 kHz.

In the above-described example, the operations of the TX and the RX when the TX and the RX recognize that the state is the weak coupling state have been described. An operation of a case where the state changes and the coupling state between the power transmission antenna and the power reception antenna changes from the weak coupling state to the strong coupling state will be described. The TX and the RX calculate (measure) the coupling state index by the coupling state index measurement method and compare the calculated coupling state index with the set threshold.

Also, when the TX and the RX recognize that the state is the strong coupling state, control is performed to change the usable frequency band from the second frequency band to the first frequency band. Alternatively, in the power transfer phase, the TX or the RX calculates (measures) the coupling state index by the coupling state index measurement method at a predetermined timing and determines the coupling state by comparing the calculated coupling state index with the set threshold.

The predetermined timing occurs at prescribed predetermined intervals or occurs when the TX receives a predetermined packet from the RX. Alternatively, the predetermined timing occurs when the RX receives a predetermined packet from the TX. The TX or the RX may control the usable frequency band by the above-described method in accordance with the determination result.

Next, a method using a noise suppression circuit will be described as a third method for suppressing noise leaking from the power transmission antenna and the power reception antenna to the surroundings. The TX or the RX has a noise suppression circuit. For example, the noise suppression circuit is placed on a circuit board of the TX and connected to the power transmission antenna 105, the power transmission unit 103, and a first communication unit 104 and includes an inductor, a capacitor, a resistor, a filter, and a noise suppression component (a ferrite or the like).

Moreover, the noise suppression circuit is placed on the circuit board of the RX and connected to a power reception antenna 205, a power reception unit 203, and a first communication unit 204 and includes an inductor, a capacitor, a resistor, a filter, and a noise suppression component (a ferrite or the like). The noise suppression circuit is configured in accordance with the usable frequency band.

The reason is that the noise source is based on the transmission power of the TX and the frequency band of the generated noise is determined in accordance with the usable frequency band. Therefore, the TX or the RX has a noise suppression circuit for each usable frequency band.

When the TX and the RX recognize that the state is a weak coupling state, noise suppression control is performed by changing the usable frequency band from the first frequency band to the second frequency band and switching to the noise suppression circuit corresponding to the changed usable frequency band.

In the above-described example, the operations of the TX and the RX when the TX and the RX recognize that the state is a weak coupling state have been described. An operation of a case where the state changes and the coupling state between the power transmission antenna and the power reception antenna changes from a weak coupling state to a strong coupling state has been described. The TX and the RX calculate (measure) the coupling state index by the coupling state index measurement method and compare the calculated coupling state index with the set threshold.

Also, the TX and the RX recognize that the state is the strong coupling state. When the strong coupling state has been recognized, control for changing the usable frequency band from the second frequency band to the first frequency band and switching to the noise suppression circuit corresponding to the changed usable frequency band is performed.

Alternatively, the TX or the RX calculates (measures) the coupling state index by the coupling state index measurement method at a predetermined timing in the power transfer phase and compares the calculated coupling state index with the set threshold to determine the coupling state. The predetermined timing occurs at prescribed predetermined intervals or occurs when the TX receives a predetermined packet from the RX.

Alternatively, the predetermined timing occurs when the RX receives a predetermined packet from the TX. In accordance with a determination result, the TX or the RX controls the usable frequency band by the above-described method and performs control for switching to a noise suppression circuit corresponding to the changed usable frequency band.

Next, a method of changing a frequency-shift modulation parameter to be used by the TX to communicate with the RX will be described as a fourth method of suppressing noise leaking from the power transmission antenna and the power reception antenna to the surroundings. Moreover, a method of changing a load modulation or amplitude modulation parameter to be used by the RX to communicate with the TX will be described.

In the communication of information transmission from the TX to the RX, the first communication unit 104 of the TX performs frequency-shift modulation of electromagnetic waves output from the power transmission antenna 105. At that time, the TX changes a frequency of carrier waves (a transmission power waveform) and transmits information.

When two frequencies are used, the TX associates a relatively high frequency signal with first information (e.g., "1"), and associates a relatively low frequency signal with second information (e.g., "0"). The TX performs transmission (power transmission) while switching between the two frequencies and transmits information to the RX.

Moreover, the TX switches the frequency of the carrier waves to a first operating frequency corresponding to the unmodulated state (denoted by fop) and a second operating frequency corresponding to the modulated state (denoted by fmod) and transmits information to the RX. fop and fmod are defined by two parameters.

The first parameter is polarity and indicates whether the difference (fmod-fop) between fmod and fop is positive or negative. Due to a polarity change, it is possible to suppress noise in a certain frequency band.

There is a possibility that noise in the frequency band used for communication or harmonic noise in a frequency band higher than the frequency band may cause other systems to malfunction. By changing the polarity, the frequency band for use in communication can be changed. The second parameter is a modulation index (a frequency shift, a modulation index, or a depth) and indicates a magnitude (an absolute value) of the difference between fmod and fop.

The larger the modulation index, the larger the magnitude of the difference between fmod and fop. Therefore, a bandwidth of noise in a specific frequency band that leaks from the power transmission antenna and the power reception antenna to the surroundings is wider. In the case of the weak coupling state, strong noise is likely to occur in a wider bandwidth during power transmission.

Therefore, when the state is recognized as the weak coupling state, the TX and the RX control values of the first and second parameters so that the values become predetermined values in communication when information is transmitted from the TX to the RX. For example, the TX and the RX perform control so that the polarity is negative (or positive) when they are recognized to be in a weak coupling state.

By changing the polarity, the frequency band for use in communication can be controlled. Therefore, it is possible to suppress noise in a specific frequency band leaking from the power transmission antenna and the power reception antenna to the surroundings.

Moreover, when the TX and the RX recognize that the state is a weak coupling state, control is performed so that the modulation index (a frequency shift, a modulation index, or a depth) is reduced. Because the magnitude of the difference between fmod and fop is reduced, it is possible to narrow the bandwidth of noise in a specific frequency band leaking from the power transmission antenna and the power reception antenna to the surroundings.

In the above-described example, the operations of the TX and the RX when the TX and the RX recognize that the state is the weak coupling state have been described. An operation of a case where the state changes and the coupling state between the power transmission antenna and the power reception antenna changes from the weak coupling state to the strong coupling state will be described. The TX and the RX calculate (measure) the coupling state index by the coupling state index measurement method and compare the calculated coupling state index with the set threshold.

Also, the TX and the RX recognize that the state is the strong coupling state. When the TX and the RX recognize that the state is the strong coupling state, control is performed so that the polarity becomes positive (or negative) or so that the modulation index (a frequency shift, a modulation index, or a depth) is increased.

Alternatively, in the power transfer phase, the TX or the RX calculates (measures) the coupling state index by the coupling state index measurement method at a predetermined timing, and compares the calculated coupling state index with the set threshold to determine the coupling state. The predetermined timing occurs at prescribed predetermined intervals or occurs when the TX receives a predetermined packet from the RX.

Alternatively, the predetermined timing occurs when the RX receives a predetermined packet from the TX. The TX or the RX controls at least one of the polarity and the modulation index by the above-described method in accordance with a determination result.

The first and second parameters can be included in the configuration data packet transmitted by the RX in the I&C phase. When the state is recognized as the weak coupling state, the RX sets the values of the two parameters related to frequency-shift modulation within the configuration data packet to predetermined values and transmits the packet to the TX.

The TX performs frequency-shift modulation on the basis of the values of the two parameters within the received packet and transmits the information to the RX. A packet used by the RX to transmit the values of the first and second parameters to the TX is a signal strength data packet or an identification data packet.

Alternatively, the packet may be an extended identification data packet. Alternatively, the packet may be a packet in the calibration phase or the power transfer phase, i.e., RP1, RP2, or RP0. Hereinafter, these packets are collectively referred to as a "predetermined packet."

Next, a method of changing the load modulation or amplitude modulation parameters used when the RX performs communication for transmitting information to the TX will be described. The first communication unit 204 of the RX performs load modulation or amplitude modulation of the electromagnetic waves output from the power transmission antenna 105 of the TX and transmits information to the TX for communication.

At that time, the RX transmits information by changing the amplitude of the carrier waves (the transmission power waveform). When magnitudes of two amplitudes are used, the RX associates a relatively large amplitude signal with the first information (e.g., "1"), and associated a relatively small amplitude signal with the second information (e.g., "0"). The RX transmits information to the TX by superimposing the signal on the transmission power waveform while switching the magnitude of the amplitude.

The RX switches the magnitude of the amplitude of the carrier waves in the following two types of amplitudes and transmits information to the TX.

- Amplitude Amp_A in the Hi-State state (relatively large amplitude).
- Amplitude Amp_B in the low-state state (relatively small amplitude).

A magnitude of the difference between Amp_A and Amp _B is referred to as a modulation index (a modulation depth). Because the change in the frequency of the carrier increases as the modulation index increases, the bandwidth of noise in a specific frequency band that leaks from the power transmission antenna and the power reception antenna to the surroundings increases. Therefore, in the case of the weak coupling state, strong noise is likely to occur in a wider bandwidth during power transmission.

Therefore, the TX and the RX perform control so that the modulation index becomes a predetermined value in communication from the RX to the TX when the state is recognized as a weak coupling state. More specifically, control is performed so that the modulation index is reduced and the magnitude of the difference between the amplitude Amp_A and the amplitude Amp_B is reduced. Therefore, it is possible to narrow the bandwidth of noise in a specific frequency band leaking from the power transmission antenna and the power reception antenna to the surroundings.

In the above-described example, the operations of the TX and the RX when the TX and the RX recognize that the state is a weak coupling state have been described. An operation of a case where the state changes and the coupling state between the power transmission antenna and the power reception antenna changes from the weak coupling state to the strong coupling state will be described.

The TX and the RX calculate (measure) the coupling state index by the coupling state index measurement method and compare the calculated coupling state index with the set threshold. Also, the TX and the RX perform control so that a modulation index increases when the state is recognized as the strong coupling state.

Alternatively, in the power transfer phase, the TX or the RX calculates (measures) the coupling state index by the coupling state index measurement method at a predetermined timing and compares the calculated coupling state index with the set threshold to determine the coupling state.

The predetermined timing occurs at prescribed predetermined intervals or occurs when the TX receives a predetermined packet from the RX. Alternatively, the predetermined timing occurs when the RX receives a predetermined packet from the TX. The TX or the RX controls the modulation index by the above-described method according to a determination result.

In executing the above-described process, the RX may notify the TX of a modulation index to be used by a predetermined packet in advance. For example, modulation index information for use in the configuration data packet transmitted by the RX in the I&C phase can be included.

When the state is recognized as a weak coupling state, the RX sets a value of a parameter (a modulation index) related to load modulation or amplitude modulation within the configuration data packet to a predetermined value and transmits the packet to the TX.

The TX controls the transmission power waveform on the basis of the value of the parameter (the modulation index) related to the load modulation or amplitude modulation included within the received packet. In addition, a packet to be used by the RX to transmit information about the parameter (the modulation index) related to load modulation or amplitude modulation to the TX may be the above-described predetermined packet.

Next, a method for changing the signal modulation scheme in communication related to information transmission from the TX to the RX and communication related to information transmission from the RX to the TX will be described as a fifth method for suppressing noise leaking from the power transmission antenna and the power reception antenna to the surroundings.

There is a spread spectrum scheme as an example of a signal modulation scheme and communication is performed using a signal having a wide frequency band that exceeds the frequency band necessary for information transmission. Specifically, as a first scheme, there is a direct sequence spread spectrum (DSSS).

For example, when the state is recognized as the weak coupling state in transmission from the TX to the RX, the first communication unit 104 of the TX performs an arithmetic process using a spreading signal for an original signal modulated with the frequency-shift modulation. The signal is referred to as a spreading code (PN: pseudo noise) or pseudorandom noise.

The first scheme is a scheme of directly spreading energy into a frequency band wider than the frequency band required for the transmission of the original signal. The TX transmits a signal processed in the arithmetic process to the RX. The RX holds data of the spreading signal used by the TX for the arithmetic process in the memory 208 in advance. The RX inversely converts the received signal using the spreading signal and acquires the original signal modulated with the frequency-shift modulation.

Moreover, when the state is recognized as the weak coupling state in transmission from the RX to the TX, the first communication unit 204 of the RX performs an arithmetic process using a spreading signal for the original signal modulated with the load modulation or amplitude modulation. The RX transmits a signal processed in the arithmetic process to the TX. The TX holds data of the spreading signal used by the RX for the arithmetic process in the memory 106 in advance.

The TX inversely converts the received signal using a spreading signal and acquires the original signal modulated with the load modulation or amplitude modulation. By using the first scheme, it is possible to reduce the magnitude (level) of noise in a specific frequency band leaking from the power transmission antenna and the power reception antenna to the surroundings.

In the above-described example, the operations of the TX and the RX when the TX and the RX recognize that the state is a weak coupling state have been described. An operation of a case where the state changes and the coupling state between the power transmission antenna and the power reception antenna changes from the weak coupling state to the strong coupling state will be described.

The TX and the RX calculate (measure) the coupling state index by the coupling state index measurement method and compare the calculated coupling state index with the set threshold. Also, when the TX and the RX recognize that the state is a strong coupling state, control is performed so that communication is performed in a state in which a predetermined arithmetic process is not performed.

The predetermined arithmetic process is an arithmetic process using a spreading signal referred to as a spreading code (PN: Pseudo Noise) or pseudo-random noise for the original signal modulated with the frequency-shift modulation or the original signal modulated with the load modulation or amplitude modulation.

Alternatively, in the power transfer phase, the TX or the RX calculates (measures) the coupling state index by the coupling state index measurement method at a predetermined timing and compares the calculated coupling state index with the set threshold to determine the coupling state. The predetermined timing occurs at prescribed predetermined intervals or occurs when the TX receives a predetermined packet from the RX.

Alternatively, the predetermined timing occurs when the RX receives a predetermined packet from the TX. In accordance with a determination result, the TX or the RX controls the arithmetic process using a spreading signal for the original signal modulated with the frequency-shift modulation or the original signal modulated with the load modulation or amplitude modulation by the above-described method.

The second scheme is a frequency hopping scheme (FHSS: Frequency Hopping Spread Spectrum). This scheme is a scheme in which the frequency band allocated for communication is divided into a plurality of frequency slots and the frequency slots used for communication are switched at high speed in a short time according to a frequency switching pattern.

That is, transmission is performed using different bands in a wide frequency band during switching in a short time. Frequency slots are also referred to as "hopping channels." The frequency switching pattern is referred to as a hopping sequence or hopping pattern. The TX and the RX can receive signals in their respective frequency bands and acquire the original signals according to a hopping sequence ascertained in advance.

For example, when the state is recognized as the weak coupling state in transmission from the TX to the RX, the first communication unit 104 of the TX performs a process of transmitting the original signal modulated with the frequency-shift modulation using a frequency slot according to the hopping sequence. The TX transmits the processed signal to the RX. The RX holds hopping sequence data used by the TX for a process in the memory 208 in advance.

The RX inversely converts the received signal according to the hopping sequence and acquires the original signal modulated with the frequency-shift modulation. Moreover, when the state is recognized as a weak coupling state in transmission from the RX to the TX, the first communication unit 204 of the RX performs a process of transmitting the original signal modulated with the load modulation or amplitude modulation using a frequency slot according to the hopping sequence.

The RX transmits the processed signal to the TX. The TX holds hopping sequence data used by the RX for a process in advance in the memory 106. The TX inversely converts the received signal according to the hopping sequence and acquires the original signal modulated with the load modulation or amplitude modulation. By using the second scheme, it is possible to reduce the magnitude (level) of noise in a specific frequency band leaking from the power transmission antenna and the power reception antenna to the surroundings.

In the above-described example, the operations of the TX and the RX when the TX and the RX recognize that the state is a weak coupling state have been described. An operation of a case where the state changes and the coupling state between the power transmission antenna and the power reception antenna changes from the weak coupling state to the strong coupling state will be described.

The TX and the RX calculate (measure) the coupling state index by the coupling state index measurement method described above and compare the calculated coupling state index with the set threshold. Also, when the TX and the RX recognize that the state is a strong coupling state, control is performed so that communication is performed in a state in which a predetermined process is not performed.

The predetermined process is a process of transmitting the original signal modulated with the frequency-shift modulation or the original signal modulated with the load modulation or amplitude modulation using a frequency slot according to a hopping sequence. Alternatively, in the power transfer phase, the TX or the RX calculates (measures) the coupling state index by the coupling state index measurement method at a predetermined timing and compares the calculated coupling state index with the set threshold to determine the coupling state.

The predetermined timing occurs at prescribed predetermined intervals or occurs when the TX receives a predetermined packet from the RX. Alternatively, the predetermined timing occurs when the RX receives a predetermined packet from the TX.

In accordance with a determination result, the TX or the RX controls a process of transmitting the original signal modulated with the frequency-shift modulation or the original signal modulated with the load modulation or amplitude modulation using a frequency slot according to a hopping sequence by the above-described method.

The third scheme is a scheme in which a process of a direct spread scheme is performed and a process of a frequency hopping scheme is further performed. By combining the two schemes, it is possible to further reduce the magnitude (level) of noise in a specific frequency band leaking from the power transmission antenna and the power reception antenna to the surroundings.

Information indicating which of the first to third schemes is used or whether or not the scheme is supported can be included in a configuration data packet transmitted by the RX in the I&C phase.

When the state is recognized as a weak coupling state, the RX stores data (e.g., "1") indicating that any one of the first to third schemes is used in a predetermined field within the configuration data packet.

Alternatively, "1" as data corresponding to the use of the first scheme, "2" as data corresponding to the use of the second scheme, and "3" as data corresponding to the use of the third scheme are stored in the field. When the state is recognized not to be the weak coupling state, the RX does not use any of the first to third schemes and stores "0" in the field.

Alternatively, information indicating whether or not the RX supports each of the first to third schemes is stored in a predetermined field. For example, "1" is stored in the field as data when the scheme is supported and "0" is stored in the field as data when the scheme is not supported.

The TX, which has received the configuration data packet from the RX, performs the transmission of information to the RX and the reception of the information from the RX on the basis of the information about the modulation scheme within the packet. In addition, the packet used by the RX to transmit information indicating which of the first to third schemes is used or whether or not the scheme is supported to the TX may be the above-described predetermined packet.

The information indicating which of the first to third schemes is used or whether or not the scheme is supported can be included in the following packet.

- Power transmitter capabilities (CAP) data packet transmitted by the TX.
- Power transmitter identification (ID) data packet.

When the state is recognized as a weak coupling state, the TX stores data (e.g., "1") indicating which of the first to third schemes is used in a predetermined field within the above-described packet. Alternatively, "1" as data corresponding to the use of the first scheme, "2" as data corresponding to the use of the second scheme, and "3" as data corresponding to the use of the third scheme are stored in the field.

When the state is recognized not to be the weak coupling state, the RX does not use any of the first to third schemes and stores "0" in the field. Alternatively, information indicating whether or not the TX supports each of the first to third schemes is stored in a predetermined field.

"1" is stored in the field as data when the scheme is supported and "0" is stored in the field as data when the scheme is not supported. The RX, which has received the packet from the TX, performs the transmission of information to the TX and the reception of the information from the TX on the basis of the information about the modulation scheme within the packet.

In executing the above-described process, the RX may notify the TX of the modulation scheme to be used through a predetermined packet in advance. For example, information about the modulation scheme used in the configuration data packet transmitted by the RX in the I&C phase can be included.

When the state is recognized as the weak coupling state, the RX sets a predetermined value in the field indicating the modulation scheme used by the RX within the packet and transmits the packet to the TX. The TX performs the transmission of information to the RX and the reception of information from the RX on the basis of the information about the modulation scheme used by the RX included in the received packet.

In executing the above-described process, the TX may notify the RX of the modulation scheme to be used by a predetermined packet in advance. For example, a power transmitter capabilities (CAP) data packet or a power transmitter identification (ID) data packet transmitted by the TX is used.

The packet can include information about the modulation scheme to be used. When the state is recognized as the weak coupling state, the TX sets a predetermined value in the field indicating the modulation scheme used by the TX within the packet and transmits the packet to the RX. The RX performs the transmission of information to the TX and the reception of information from the TX on the basis of the information about the modulation scheme used by the TX included in the received packet.

Regardless of the coupling state between the TX and the RX, when the TX and the RX support the first to third schemes, communication may be performed using the first to third schemes. For example, the RX may notify the TX of the modulation scheme to be used by a predetermined packet in advance. For example, information about the modulation scheme to be used can be included in the configuration data packet transmitted by the RX in the I&C phase.

Here, the information about the modulation scheme to be used is, for example, information indicating that a direct spread scheme is used or usable. Alternatively, the information about the modulation scheme to be used is information indicating that the frequency hopping scheme is used or usable.

Information indicating whether or not it is possible to use a direct spread scheme or a frequency hopping scheme is stored in a predetermined field of the configuration data packet. "1" is stored in the field as data corresponding to the case where the direct spread scheme can be used and "0" is stored in the field as data corresponding to the case where the direct spread scheme cannot be used.

Alternatively, "1" is stored in the field as data corresponding to the case where the frequency hopping scheme can be used and "0" is stored in the field as data corresponding to the case where the frequency hopping scheme cannot be used. The RX sets a predetermined value in the field indicating the modulation scheme used by the RX within the packet and transmits the packet to the TX.

The TX performs the transmission of information to the RX and the reception of information from the RX on the basis of the information about the modulation scheme used by the RX included in the received packet. For example, the TX recognizes that the RX uses or can use a direct spread scheme from the information included in the packet received from the RX.

Also, when the TX supports the communication of the direct spread scheme, the TX performs the transmission of information to the RX and the reception of information from the RX according to the communication of the direct spread scheme. The TX does not use the direct spread scheme in the transmission and reception of information to and from the RX when the TX does not support the communication of the direct spread scheme.

Moreover, for example, the TX recognizes that the RX uses or can use the frequency hopping scheme from the information included in the packet received from the RX. When the TX supports the communication of the frequency hopping scheme, the TX performs the transmission of information to the RX and the reception of information from the RX according to the communication of the frequency hopping scheme.

The TX does not use the frequency hopping scheme in the transmission and reception of information to and from the RX when the TX does not support the communication of the frequency hopping scheme. Moreover, the TX may notify the RX of the modulation scheme to be used by a predetermined packet in advance. The predetermined packet is a power transmitter capabilities (CAP) data packet transmitted by the TX.

Alternatively, the predetermined packet is a power transmitter identification (ID) data packet. The packet can include information about the modulation scheme to be used. Here, the information about the modulation scheme to be used is, for example, information indicating that a direct spread scheme is used or usable.

Alternatively, the information about the modulation scheme to be used is information indicating that the frequency hopping scheme is used or usable. Information indicating whether it is possible to use a direct spread scheme or a frequency hopping scheme is stored in a predetermined field of the packet.

"1" as data corresponding to the case where the direct spread scheme can be used, and "0" as data corresponding to the case where the direct spread scheme cannot be used are stored in the field. Alternatively, "1" as data corresponding to the case where the frequency hopping scheme can be used and "0" as data corresponding to the case where the frequency hopping scheme cannot be used are stored in the field.

The TX sets a predetermined value in the field indicating the modulation scheme used by the TX within the packet and transmits the packet to the RX. The RX performs the transmission of information to the TX and the reception of information from the TX on the basis of the information about the modulation scheme used by the TX included in the received packet.

For example, the RX recognizes that the TX uses or can use a direct spread scheme from the information included in the packet received from the TX. Also, when the RX supports a process of performing communication of the direct spread scheme, the RX performs the transmission of information to the TX and the reception of information from the TX according to the communication of the direct spread scheme.

The RX does not use the direct spread scheme in the transmission and reception of information to and from the TX when the RX does not support the communication of the direct spread scheme. Moreover, for example, the RX recognizes that the TX uses or can use a frequency hopping scheme from the information included in the packet received from the TX.

When the RX supports the communication of the frequency hopping scheme, the RX performs the transmission of information to the TX and the reception of information from the TX according to the communication of the frequency hopping scheme. The RX does not use the frequency hopping scheme in the transmission and reception of information to and from the TX when the RX does not support the communication of the frequency hopping scheme.

In addition, in the above-described method, the RX (or the TX) notifies the TX (or the RX) of information about the modulation scheme to be used by a predetermined packet in advance. On the basis of the information, the TX and the RX may perform a negotiation according to mutual communication and decide the modulation scheme for use in communication.

Next, a method in which the TX switches the power transmission antenna (power transmission coil) will be described as a sixth method of suppressing noise leaking from the power transmission antenna and the power reception antenna to the surroundings. As described in the coupling state index measurement method, when power is transmitted from the TX to the RX, the noise leaking to the surroundings increases as the leakage flux increases.

The leakage flux increases because a size difference between the power transmission antenna and the power reception antenna increases. For example, it is assumed that the power transmission antenna is larger than the power reception antenna. In this case, because the size of the power reception antenna is relatively small, a part of the magnetic flux generated from the power transmission antenna does not penetrate through the inside of the power reception antenna at the time of power transmission from the TX to the RX.

As the size difference between the power transmission antenna and the power reception antenna increases, the leakage flux increases. To solve this, the TX has two or more power transmission antennas. For example, a power transmission antenna with a larger size between the two power transmission antennas is referred to as "a power transmission antenna (larger)" and a power transmission antenna with a smaller size is referred to as a "power transmission antenna (smaller)."

It is assumed that the TX selects the power transmission antenna (larger), detects the placement of the object (the RX) on the TX by the method of the first embodiment, and recognizes that the state is the weak coupling state by the method of the second embodiment. In this case, the TX selects the power transmission antenna (smaller). Also, according to the method of the second embodiment, the TX redetermines whether or not the state is the weak coupling state.

For example, a coupling state determination process is executed using the second or third method described in the second embodiment. As a determination result, it is assumed that the coupling between the power transmission antenna and the power reception antenna is stronger than when the power transmission antenna (larger) is selected. **In** this case, the TX performs control so that the power transmission antenna (smaller) is used in each subsequent phase.

Moreover, it is assumed that the TX initially selects the power transmission antenna (smaller), detects the placement of the object (the RX) on the TX by the method of the first embodiment, and recognizes that the state is a weak coupling state by the method of the second embodiment. **In** this case, the TX selects the power transmission antenna (larger). Also, according to the method of the second embodiment, the TX redetermines whether or not the state is the weak coupling state.

For example, a coupling state determination process is executed using the second method or the third method described in the second embodiment. As a determination result, it is assumed that the coupling between the power transmission antenna and the power reception antenna is stronger than when the power transmission antenna (smaller) is selected. **In** this case, the TX performs control so that the power transmission antenna (larger) is used in each subsequent phase.

Alternatively, in the power transfer phase, the TX or the RX calculates (measures) the coupling state index by the coupling state index measurement method at a predetermined timing and compares the calculated coupling state index with the set threshold to determine the coupling state. The predetermined timing occurs at prescribed predetermined intervals or occurs when the TX receives a predetermined packet from the RX.

Alternatively, the predetermined timing occurs when the RX receives a predetermined packet from the TX. The TX or the RX may control power transmission antenna selection by the above-described method according to a determination result. In addition, the TX may have three or more power transmission antennas of different sizes.

The TX measures and determines the coupling state between the power transmission antenna and the power reception antenna when each power transmission antenna is used. In each subsequent phase, the TX performs control so that the power transmission antenna with the best coupling state is used.

Alternatively, as shown in the first method of the second embodiment, the RX notifies the TX of detailed information about the hardware of the power reception device in a predetermined packet. More specifically, the RX notifies the TX of a size and type of power reception antenna (power reception coil) and the like. The TX receives a predetermined packet from the RX and selects a power transmission antenna determined to be optimal for a power reception antenna serving as a target on the basis of information such as the size and type of the power reception antenna (power reception coil).

The TX or the RX measures the coupling state between the power transmission antenna and the power reception antenna and determines whether or not a value indicating the coupling state (e.g., a k value) is greater than or equal to a threshold. In each subsequent phase, the TX performs control so that a power transmission antenna having a suitable coupling state selected in accordance with a determination result is used.

Next, a method of changing a circuit so that a quality factor of a circuit related to power transmission including the power transmission antenna is further increased will be described as a seventh method for suppressing noise leaking from the power transmission antenna and the power reception antenna to the surroundings.

The efficiency of power transmission from the TX to the RX is expressed by a product of the coupling coefficient k and the quality factor (a Q-factor, a quality coefficient, or a Q-value). In the case where the state is the weak coupling state (the coupling coefficient k is small), the decrease in transmission efficiency can be suppressed when control is performed so that the value of the quality factor is increased.

When the TX (or the RX) recognizes that the state is the weak coupling state, the circuit is changed so that a quality factor of a circuit related to power transmission including the power transmission antenna (or the power reception antenna) is increased.

Specifically, first control is performed to switch the power transmission antenna 105 (or the power reception antenna 205) to a power transmission antenna (or a power reception antenna) having a different size or a different inductance value. Alternatively, second control is performed to switch the resonant capacitor 107 (or the resonant capacitor 211) to another constant resonant capacitor.

Alternatively, third control is performed to connect another new capacitor or inductor to the power transmission antenna 105 (or the power reception antenna 205) or the resonant capacitor 107 (or the resonant capacitor 211). The first, second, and third controls may be all executed or at least one may be executed.

The first, second, and third controls may be executed at a timing when the RX, which has recognized that the state is the weak coupling state, has provided a notification using a packet to the TX. Alternatively, the first, second, and third controls may be executed at a timing when the TX, which has recognized that the state is the weak coupling state, has provided a notification using a packet to the RX.

In the above-described example, the operations of the TX and the RX when the TX and the RX recognize that the state is the weak coupling state have been described. An operation of a case where the state changes and the coupling state between the power transmission antenna and the power reception antenna changes from the weak coupling state to the strong coupling state will be described.

The TX and the RX calculate (measure) the coupling state index by the coupling state index measurement method and compare the calculated coupling state index with the set threshold. Also, when the TX and the RX recognize that the state is the strong coupling state, control is performed to change the circuit so that the quality factor is less (the state is switched to the state before the first control, the second control, and the third control are performed).

Alternatively, in the power transfer phase, the TX or the RX calculates (measures) the coupling state index by the coupling state index measurement method at a predetermined timing and compares the calculated coupling state index with the set threshold to determine the coupling state.

The predetermined timing occurs at prescribed predetermined intervals or occurs when the TX receives a predetermined packet from the RX. Alternatively, the predetermined timing occurs when the RX receives a predetermined packet from the TX. The TX or the RX performs the first and second controls by the above-described method in accordance with a determination result.

Next, a first method for suppressing instability in communication between the TX and the RX will be described. In the case of a weak coupling state, communication performed by superimposing a signal on a transmission power waveform (a voltage waveform or a current waveform) is likely to be unstable.

The reason is that disturbances or the like occurs in the amplitude and phase of the transmission power waveform used to transmit signals between the TX and the RX in the weak coupling state. Therefore, a first change method for changing a parameter of frequency-shift modulation for use in communication for transmitting a signal from the TX to the RX, and a second change method for changing a parameter of load modulation or amplitude modulation for use in communication for transmitting a signal from the RX to the TX will be described.

First, in the first change method, the parameter of the frequency-shift modulation is a modulation index (a frequency shift, a modulation index, or a depth) and indicates a magnitude of a difference between fmod and fop. Because the magnitude of the difference between fmod and fop increases as the modulation index increases, the RX can easily demodulate the signal received from the TX.

Therefore, when the state is recognized as the weak coupling state, the TX and the RX perform control so that the modulation index becomes a predetermined value in communication when information is transmitted from the TX to the RX. More specifically, compared to when the state is recognized as the strong coupling state, when the state is recognized as the weak coupling state, control is performed so that the modulation index is larger and the RX is more likely to demodulate the signal received from the TX.

The modulation index can be included in the configuration data packet transmitted by the RX in the I&C phase. When the state is recognized as the weak coupling state, the RX sets the modulation index in the configuration data packet to a predetermined value and transmits the packet to the TX.

The TX transmits information from the TX to the RX on the basis of the modulation index included in the received packet. The packet used by the RX to transmit modulation index information to the TX may be the above-described predetermined packet.

Next, the second change method will be described. As described above, for example, the RX transmits information to the TX by switching between a relatively high amplitude Amp_A and a relatively low amplitude Amp_B with respect to the magnitude of the amplitude of the carrier waves. As the modulation index (the modulation depth) corresponding to the magnitude of the difference between the Amp_A and the Amp_B increases, the TX can easily demodulate the signal transmitted by the RX.

Therefore, when the state is recognized as the weak coupling state, the TX and the RX perform control so that a modulation index of amplitude modulation or load modulation becomes a predetermined value in communication for transmitting information from the RX to the TX. More specifically, when the state is recognized as the weak coupling state, control is performed so that the modulation index further increases than when the state is recognized as the strong coupling state.

Thereby, because a difference between the amplitude Amp_A in the state of Hi-State and the amplitude Amp_B in the state of Low-State increases, the TX can easily demodulate the signal transmitted by the RX.

In executing the above process, the RX may notify the TX of the modulation index to be used in a predetermined packet in advance. Because this is as described above and the same is applied to a predetermined packet used for transmitting the modulation index, its description will be omitted.

In the above-described example, the operations of the TX and the RX when the TX and the RX recognize that the state is a weak coupling state have been described. An operation of a case where the state changes and the coupling state between the power transmission antenna and the power reception antenna changes from the weak coupling state to the strong coupling state will be described.

The TX and the RX calculate (measure) the coupling state index by the coupling state index measurement method and compare the calculated coupling state index with the set threshold. Also, when the TX and the RX recognize that the state is a strong coupling state, control is performed so that the state is switched to a state before the first change method of changing a parameter of frequency-shift modulation for use in communication for transmitting a signal from the TX to the RX is performed.

Moreover, control is performed so that the state is switched to a state before the second change method of changing the parameter of load modulation or amplitude modulation for use in communication for transmitting a signal from the RX to the TX is performed. Alternatively, in the power transfer phase, the TX or the RX calculates (measures) the coupling state index by the coupling state index measurement method at a predetermined timing and compares the calculated coupling state index with the set threshold to determine the coupling state.

The predetermined timing occurs at prescribed predetermined intervals or occurs when the TX receives a predetermined packet from the RX. Alternatively, the predetermined timing occurs when the RX receives a predetermined packet from the TX. The TX or the RX controls a communication parameter by the above-described method according to a determination result.

Next, a method of changing a communication scheme related to communication that is performed between the TX and the RX will be described as a second method of suppressing the instability of communication between the TX and the RX. In the case of the weak coupling state, communication performed by superimposing a signal on a transmission power waveform (a voltage waveform or a current waveform) is likely to be unstable.

Therefore, the TX and the RX perform control for changing the communication scheme in the case of the weak coupling state. Control for making a change to a communication scheme based on a standard other than the WPC standard that is performed between the second communication unit 109 of the TX and the second communication unit 212 of the RX is performed.

Examples of this communication scheme include wireless local area network (LAN), Bluetooth (registered trademark) low energy (BLE), and near field communication (NFC).

The second communication unit 109 of the TX performs communication with the RX using an antenna different from the power transmission antenna 105. The second communication unit 212 of the RX performs communication with the TX using an antenna different from the power reception antenna 205.

The frequency band used for communication by the second communication unit 109 and the second communication unit 212 is different from the frequency band used for power transmission. Thus, in the case of a weak coupling state, the TX and the RX can perform stable communication in a communication scheme different from the communication scheme using the power transmission antenna 105 and the power reception antenna 205.

The RX can include information about whether or not a communication scheme based on a standard other than the WPC standard is supported in the configuration data packet transmitted in the I&C phase. Alternatively, the RX can include data indicating a communication scheme to be used among the communication schemes based on standards other than the WPC standard in the configuration data packet.

For example, when the state is recognized as the weak coupling state, the RX stores data (e.g., "1") indicating a communication scheme to be used among the communication schemes based on standards other than the WPC standard in a predetermined field within the configuration data packet.

Alternatively, "1" corresponding to the use of a wireless local area network (LAN) and "2" corresponding to the use of Bluetooth (registered trademark) low energy (BLE) are stored in the field. Moreover, "3" corresponding to the use of near field communication (NFC) is stored in the field.

Moreover, when the state is not the weak coupling state, "0" corresponding to the case where a communication scheme based on a standard other than the WPC standard is not used is stored in the field. Alternatively, information indicating whether the RX supports each communication scheme is stored in a predetermined field. When the communication scheme is supported, "1" is stored as data in the field. When the scheme is not supported, "0" is stored as data in the field. The RX transmits the packet to the TX.

The TX transmits information from the TX to the RX on the basis of the information about the communication scheme included in the received configuration data packet. In addition, the packet used for transmitting information about whether or not the RX supports a communication scheme based on a standard other than the WPC standard to the TX may be the above-described predetermined packet.

In executing the above-described process, the RX may notify the TX of the communication scheme to be used by a predetermined packet in advance. For example, information about the communication scheme used for the configuration data packet transmitted by the RX in the I&C phase can be included. When the state is recognized as the weak coupling state, the RX sets a field indicating the communication scheme used by the RX in the packet to a predetermined value and transmits the packet to the TX.

The TX decides the communication scheme on the basis of the information about the communication scheme used by the RX included in the received packet. In addition, the packet used by the RX for transmitting information about the communication scheme to be used to the TX may be the above-described predetermined packet.

The TX can include information about whether or not a communication scheme based on a standard other than the WPC standard is supported or data indicating which of the communication schemes based on standards other than the WPC standard is used in a predetermined packet. For example, when the state is the weak coupling state, the TX stores data (e.g., "1") indicating that a communication scheme based on a standard other than the WPC standard is used in the field of the predetermined packet.

Alternatively, "1" corresponding to the use of a wireless local area network (LAN) and "2" corresponding to the use of Bluetooth (registered trademark) low energy (BLE) are stored in the field. Moreover, "3" corresponding to the use of near field communication (NFC) is stored in the field.

Moreover, when the state is not the weak coupling state, "0" corresponding to the case where a communication scheme based on a standard other than the WPC standard is not used is stored in the field. The TX transmits the packet to the RX.

Alternatively, the TX stores information indicating whether or not the TX supports each communication scheme in a predetermined field. When the communication scheme is supported, "1" is stored as data in the field. When the scheme is not supported, "0" is stored as data in the field. The RX transmits information from the RX to the TX on the basis of the information about the communication scheme included in the received predetermined packet.

In executing the above-described process, the TX may notify the RX of the communication scheme to be used by a predetermined packet in advance. When the state is recognized as the weak coupling state, the TX sets a field indicating the communication scheme used by the TX in the packet to a predetermined value and transmits the packet to the RX. The RX decides the communication scheme on the basis of information about the communication scheme used by the TX included in the received packet.

In the above-described example, the operations of the TX and the RX when the TX and the RX recognize that the state is a weak coupling state have been described. An operation of a case where the state changes and the coupling state between the power transmission antenna and the power reception antenna changes from the weak coupling state to the strong coupling state will be described.

The TX and the RX calculate (measure) the coupling state index by the coupling state index measurement method and compare the calculated coupling state index with the set threshold. Also, when the TX and the RX recognize that the state is a strong coupling state, control is performed so that communication is performed by superimposing a signal on a transmission power waveform (a voltage waveform or a current waveform).

Alternatively, in the power transfer phase, the TX or the RX calculates (measures) the coupling state index by the coupling state index measurement method at a predetermined timing and compares the calculated coupling state index with the set threshold to determine the coupling state.

The predetermined timing occurs at prescribed predetermined intervals or occurs when the TX receives a predetermined packet from the RX. Alternatively, the predetermined timing occurs when the RX receives a predetermined packet from the TX. The TX or the RX controls the communication scheme by the above-described method in accordance with a determination result.

Next, a first method for suppressing a decrease in the detection accuracy of a foreign substance located between the TX and the RX will be described. In the case of a weak coupling state, the accuracy of foreign substance detection by the Q-value measurement method and the power loss method specified in the WPC standard is likely to decrease. Therefore, the TX and the RX use a foreign substance detection method other than that specified in the WPC standard in the case of the weak coupling state.

As a first foreign substance detection method other than that specified in the WPC standard, a method of detecting a foreign substance on the basis of a coupling state between the power transmission antenna and the power reception antenna will be described. When the state is recognized as the weak coupling state, the presence or absence of a foreign substance can be detected from the coupling state between the power transmission antenna and the power reception antenna.

As described in the coupling state index measurement method, the TX and the RX measure the coupling state index between the power transmission antenna and the power reception antenna and execute a foreign substance detection process on the basis of the measurement value. Moreover, a method of setting a determination threshold related to the possibility of the presence or absence of a foreign substance has already been described. In the case of the weak coupling state, it is possible to determine the possibility of the presence or absence of a foreign substance with higher accuracy on the basis of the measurement result of the coupling state index between the power transmission antenna and the power reception antenna.

A process of measuring the coupling state index between the power transmission antenna and the power reception antenna and determining the possibility of the presence or absence of a foreign substance on the basis of a measurement result may be periodically performed. In executing the foreign substance detection process based on the measurement result of the coupling state index, the TX and the RX may combine a Q-value measurement method, a power loss method, and a waveform attenuation method. The determination threshold setting method in each method is as described above.

For example, it is assumed that the TX is the main body that executes the foreign substance detection process on the basis of a result of measuring the coupling state index between the power transmission antenna and the power reception antenna. In that case, the TX executes a foreign substance detection process on the basis of the result of measuring the coupling state index between the power transmission antenna and the power reception antenna and acquires a determination result. The determination result indicates that "there is a high possibility of a foreign substance being present," "there is a foreign substance," "there is a low possibility of a foreign substance being present," "there is no foreign substance," or the like, and the TX notifies the RX of the determination result.

When the determination result indicates that "there is a high possibility of a foreign substance being present," or "there is a foreign substance," the RX transmits a packet for requesting the TX to execute a predetermined foreign substance detection process. Alternatively, when the determination result indicates that "there is a high possibility of a foreign substance being present" or "there is a foreign substance," the TX may transmit a packet for requesting the RX to transmit a packet for requesting the execution of a predetermined foreign substance detection process.

If the packet is received, the RX transmits a packet for requesting the TX to execute the predetermined foreign substance detection process. The predetermined foreign substance detection process is all of the foreign substance detection processes based on the Q-value measurement method, the power loss method, and the waveform attenuation method or one or more foreign substance detection processes. The TX executes a predetermined foreign substance detection process according to a request from the RX and notifies the RX of a determination result.

When the determination result indicates that "there is a high possibility of a foreign substance being present" or "there is a foreign substance," the RX transmits a packet for requesting the restriction on power transmission to the TX. For example, the packet is a packet for requesting a process of setting a GP value to a small value or RP1 or RP2 for requesting a CAL process of the power loss method again.

Alternatively, the packet is a packet for requesting a CAL process of the waveform attenuation method or the coupling state index measurement method again. Alternatively, the packet is an EPT packet for requesting the stop of power transmission.

Moreover, the above-described predetermined foreign substance detection process is executed and the TX notifies the RX of a determination result. When the determination result indicates that "there is a high possibility of a foreign substance being present" or "there is a foreign substance," the RX transmits a packet for requesting the TX to execute a foreign substance detection process based on the coupling state between the power transmission antenna and the power reception antenna.

The TX, which has received the packet, executes a foreign substance detection process based on the coupling state between the power transmission antenna and the power reception antenna and notifies the RX of the determination result. When the determination result is "there is a high possibility of a foreign substance being present" or "there is a foreign substance," the RX transmits a packet for requesting a restriction on power transmission to the TX.

For example, the packet is a packet for requesting a process of setting a GP value to a small value or RP1 or RP2 for requesting a CAL process of the power loss method again. Alternatively, the packet is a packet for requesting a CAL process of the waveform attenuation method again. Alternatively, the packet is an EPT packet for requesting the stop of power transmission.

Alternatively, when the RX is the main body that executes the foreign substance detection process on the basis of a result of measuring the coupling state index between the power transmission antenna and the power reception antenna, the RX executes the foreign substance detection process and acquires a determination result. The determination result indicates that "there is a high possibility of a foreign substance being present," "there is a foreign substance," "there is a low possibility of a foreign substance being present," "there is no foreign substance," or the like, and the RX notifies the TX of the determination result.

When the determination result is "there is a high possibility of a foreign substance being present" or "there is a foreign substance," the RX transmits a packet for requesting the TX to execute a predetermined foreign substance detection process. The predetermined foreign substance detection process is all of the foreign substance detection process based on the Q-value measurement method, the power loss method, and the waveform attenuation method, or one or more foreign substance detection processes.

The TX executes a predetermined foreign substance detection process according to a request from the RX and notifies the RX of the determination result. When the determination result indicates that "there is a high possibility of a foreign substance being present" or "there is a foreign substance," the RX transmits a packet for requesting the restriction on power transmission to the TX. For example, the packet is a packet for requesting a process of setting a GP value to a small value or RP 1 or RP2 for requesting a CAL process of the power loss method again.

Alternatively, the packet is a packet for requesting the CAL process of the waveform attenuation method or the coupling state index measurement method again. Alternatively, the packet is an EPT packet for requesting the stop of power transmission.

Moreover, the above-described predetermined foreign substance detection process is executed and the TX notifies the RX of the determination result. When the determination result is "there is a high possibility of a foreign substance being present" or "there is a foreign substance," the RX transmits a packet for notifying the TX that a foreign substance detection process based on the coupling state between the power transmission antenna and the power reception antenna is executed.

After the packet is transmitted, the RX executes a foreign substance detection process based on the coupling state between the power transmission antenna and the power reception antenna and notifies the TX of a determination result. When the determination result indicates that "there is a high possibility of a foreign substance being present" or "there is a foreign substance," the RX transmits a packet for requesting a restriction on power transmission to the TX.

For example, the packet is a packet for requesting a process of setting a GP value to a small value or RP1 or RP2 for requesting a CAL process of the power loss method again. Alternatively, the packet is a packet for requesting a CAL process of the waveform attenuation method again. Alternatively, the packet is an EPT packet for requesting the stop of power transmission.

In the above-described example, an operation in which the TX or the RX performs a foreign substance detection process based on the measurement result of the coupling state index between the power transmission antenna and the power reception antenna and a predetermined foreign substance detection process at different timings has been described. The TX or the RX may perform one or more foreign substance detection processes among the foreign substance detection process based on the measurement result of the coupling state index between the power transmission antenna and the power reception antenna and the predetermined foreign substance detection processes at the same timing.

When the RX designates the timing, the RX provides a notification of the timing by transmitting a predetermined packet to the TX. When the TX designates the timing, the TX provides a notification of the timing by transmitting a predetermined packet to the RX.

For example, when the TX or the RX receives the above-described predetermined packet, the TX or the RX executes a foreign substance detection process based on a result of measuring the coupling state index between the power transmission antenna and the power reception antenna and a foreign substance detection process based on the power loss method. Alternatively, when the TX or the RX has received the predetermined packet, the TX or the RX executes a foreign substance detection process based on a result of measuring the coupling state index between the power transmission antenna and the power reception antenna and a foreign substance detection process based on the waveform attenuation method.

Alternatively, when the above-described predetermined packet has been received, the TX or the RX executes a foreign substance detection process based on the result of measuring the coupling state index between the power transmission antenna and the power reception antenna, a foreign substance detection process based on the power loss method, and a foreign substance detection process based on the waveform attenuation method.

In the above-described example, operations of the TX and the RX when the TX and the RX recognize that the state is the weak coupling state have been described. An operation of a case where the state changes and the coupling state between the power transmission antenna and the power reception antenna changes from the weak coupling state to the strong coupling state will be described.

The TX and the RX calculate (measure) the coupling state index by the coupling state index measurement method, and compare the calculated coupling state index with the set threshold. Also, when the TX and the RX recognize that the state is the strong coupling state, control is performed so that a foreign substance detection process based on the Q-value measurement method or the power loss method specified in the WPC standard is performed.

Alternatively, in the power transfer phase, the TX or the RX calculates (measures) the coupling state index based on the coupling state index measurement method at a predetermined timing and compares the calculated coupling state index with the set threshold to determine the coupling state.

The predetermined timing occurs at prescribed predetermined intervals or occurs when the TX receives a predetermined packet from the RX. Alternatively, the predetermined timing occurs when the RX receives a predetermined packet from the TX. The TX or the RX controls the foreign substance detection process by the above-described method in accordance with a determination result.

Next, a method of detecting a foreign substance based on the temperature of the TX or the RX will be described as a second method for suppressing a decrease in the accuracy of detection of a foreign substance located between the TX and the RX. It is assumed that each of the TX and the RX has temperature sensors at a plurality of locations.

In particular, temperature sensors are arranged with a higher density in the power transmission antenna 105, the charging base 300, and the power reception antenna 205 compared to other locations. It is possible to detect a foreign substance located between the TX and the RX with higher accuracy.

When the state is recognized as the weak coupling state, the TX or the RX executes a foreign substance detection process based on a detected temperature. The TX acquires a detection value of the temperature sensor at a predetermined timing. The predetermined timing occurs at prescribed predetermined intervals or occurs when a predetermined packet is received from the RX. When the detection value of the temperature sensor is greater than a predetermined threshold, the TX determines that there is a high possibility of a foreign substance being present.

Moreover, the TX calculates a temperature rise rate on the basis of a plurality of temperature detection values acquired at a predetermined timing. The TX determines that there is a high possibility of a foreign substance being present when the temperature rise rate is greater than a predetermined threshold. The RX is notified of a determination result through a predetermined packet. Alternatively, when the determination result is acquired, the TX performs the above-described control to limit the transmission power (reduce power) or control to stop the power transmission. These controls have already been described and description is omitted.

Next, a foreign substance detection process based on the temperature of the RX will be described. The RX acquires a detection value of the temperature sensor at a predetermined timing. The predetermined timing occurs at prescribed predetermined intervals or occurs when a predetermined packet is received from the TX. When the detection value of the temperature sensor is greater than a predetermined threshold, the RX determines that there is a high possibility of a foreign substance being present.

Moreover, the RX calculates a temperature rise rate on the basis of a plurality of temperature detection values acquired at a predetermined timing. The RX determines that there is a high possibility of a foreign substance being present when the temperature rise rate is greater than a predetermined threshold. The TX is notified of a determination result through a predetermined packet. Alternatively, when the determination result is acquired, the RX transmits a predetermined packet to the TX and performs a process of requesting the limit of the transmission power (the reduction of power) or the stop of power transmission described above.

Thus, in the second method, in the case of the weak coupling state, the temperature of the TX or the RX is measured and more accurate foreign substance detection is possible on the basis of a measurement result. In executing the foreign substance detection, the TX and the RX may combine a Q-value measurement method, a power loss method, and a waveform attenuation method. For example, when the TX is the main body that executes the temperature-based foreign substance detection process, the TX executes the temperature-based foreign substance detection process and notifies the RX of a foreign substance determination result.

When the determination result indicates that "there is a high possibility that a foreign substance being present" or "there is a foreign substance," the RX provides a notification of a packet for requesting the TX to execute a foreign substance detection process based on one or more of the methods of the Q-value measurement method, the power loss method, and the waveform attenuation method.

The TX executes a predetermined foreign substance detection process according to a request from the RX and notifies the RX of a determination result. When the determination result of the foreign substance detection process indicates that "there is a high possibility of a foreign substance being present" or "there is a foreign substance," the RX transmits a packet for requesting a restriction on power transmission to the TX.

For example, the packet is a packet for requesting a process of setting a GP value to a small value or RP1 or RP2 for requesting a CAL process of the power loss method again. Alternatively, the packet is a packet for requesting a CAL process of the waveform attenuation method or a CAL process of the coupling state index measurement method again. Alternatively, the packet is an EPT packet for requesting the stop of power transmission.

Alternatively, the TX executes a foreign substance detection process based on one or more of the Q-value measurement method, the power loss method, and the waveform attenuation method and notifies the RX of a determination result. When the determination result indicates that "there is a high possibility of a foreign substance being present" or "there is a foreign substance," the RX transmits a packet for requesting the TX to perform foreign substance detection based on the temperature of the TX.

The TX executes a foreign substance detection process by acquiring a temperature detection value of the TX according to the packet and notifies the RX of a determination result. When the determination result is "there is a high possibility of a foreign substance being present" or "there is a foreign substance," the RX transmits a packet for requesting a restriction on power transmission to the TX.

For example, the packet is a packet for requesting a process of setting a GP value to a small value or RP1 or RP2 for requesting a CAL process of the power loss method again. Alternatively, the packet is a packet for requesting a CAL process of the waveform attenuation method or a CAL process of the coupling state index measurement method again. Alternatively, the packet is an EPT packet for requesting the stop of power transmission.

Alternatively, for example, it is assumed that the RX is the main body that executes the foreign substance detection process based on the temperature. In that case, the RX executes a foreign substance detection process based on the temperature and notifies the TX of a foreign substance determination result. When the determination result indicates that "there is a high possibility that a foreign substance being present" or "there is a foreign substance," the RX provides a notification of a packet for requesting the TX to execute a foreign substance detection process based on one or more of the Q-value measurement method, the power loss method, and the waveform attenuation method.

The TX executes a predetermined foreign substance detection process according to a request from the RX, and notifies the RX of a determination result. When the determination result of the foreign substance detection process indicates that "there is a high possibility of a foreign substance being present" or "there is a foreign substance," the RX transmits a packet for requesting a restriction on power transmission to the TX.

For example, the packet is a packet for requesting a process of setting a GP value to a small value or RP1 or RP2 for requesting a CAL process of the power loss method again. Alternatively, the packet is a packet for requesting a CAL process of the waveform attenuation method or a CAL process of the coupling state index measurement method again. Alternatively, the packet is an EPT packet for requesting the stop of power transmission.

Alternatively, the TX executes a foreign substance detection process based on one or more of the Q-value measurement method, the power loss method, and the waveform attenuation method and notifies the RX of a determination result. When the determination result indicates that "there is a high possibility of a foreign substance being present" or "there is a foreign substance," the RX acquires a temperature detection value of the RX, executes a foreign substance detection process, and notifies the TX of a determination result.

When the determination result indicates that "there is a high possibility of a foreign substance being present" or "there is a foreign substance," the RX transmits a packet for requesting the restriction on power transmission to the TX. For example, the packet is a packet for requesting a process of setting a GP value to a small value or RP1 or RP2 for requesting a CAL process of the power loss method again.

Alternatively, the packet is a packet for requesting a CAL process of the waveform attenuation method or a CAL process of the coupling state index measurement method again. Alternatively, the packet is an EPT packet for requesting the stop of power transmission.

In the above-described example, an operation in which the TX or the RX performs a foreign substance detection process based on temperature and a foreign substance detection process based on one or more of the Q-value measurement method, the power loss method, and the waveform attenuation method at different timings has been described.

The TX or the RX may perform a foreign substance detection process based on the temperature and a foreign substance detection process based on one or more of the Q-value measurement method, the power loss method, and the waveform attenuation method at the same timing. When the RX designates the timing, the RX notifies the TX of a timing when a predetermined packet is transmitted. When the TX designates the timing, the TX notifies the RX of a timing when a predetermined packet is transmitted.

For example, when the TX or the RX receives the above-described predetermined packet, the TX or the RX executes a foreign substance detection process based on the temperature and a foreign substance detection process based on the power loss method. Alternatively, when the TX or the RX receives the above-described predetermined packet, the TX or the RX executes a foreign substance detection process based on the temperature and a foreign substance detection process based on the waveform attenuation method.

Alternatively, when the TX or the RX has received the above-described predetermined packet, the TX or the RX executes a foreign substance detection process based on the temperature, a foreign substance detection process based on the power loss method, and a foreign substance detection based on the waveform attenuation method.

In the above-described example, the operations of the TX and the RX when the TX and the RX recognize that the state is the weak coupling state have been described. An operation of a case where the state changes and the coupling state between the power transmission antenna and the power reception antenna changes from the weak coupling state to the strong coupling state will be described.

The TX and the RX calculate (measure) the coupling state index by the coupling state index measurement method, and compare the calculated coupling state index with the set threshold. Also, when the TX and the RX have recognized that the state is the strong coupling state, control is performed so that the foreign substance detection process based on the temperature of the TX or the RX is not executed.

Alternatively, in the power transfer phase, the TX or the RX calculates (measures) the coupling state index by the coupling state index measurement method at a predetermined timing and compares the calculated coupling state index with the set threshold to determine the coupling state.

The predetermined timing occurs at prescribed predetermined intervals or occurs when the TX receives a predetermined packet from the RX. Alternatively, the predetermined timing occurs when the RX receives a predetermined packet from the TX. The TX or the RX controls the foreign substance detection process based on the temperature of the TX or the RX by the above-described method in accordance with a determination result.

Next, a third method for suppressing a decrease in the accuracy of detection of a foreign substance located between the TX and the RX will be described. As described above, there are a foreign substance detection method based on a Q-value measurement method, a power loss method, a waveform attenuation method, and the coupling state between the power transmission antenna and the power reception antenna and a foreign substance detection method based on the temperature of the TX or the RX. In the case of either one method, foreign substance determination is made by setting a predetermined threshold.

For example, it is assumed that there is no foreign substance between the TX and the RX and that there is no position shift between the power transmission antenna and the power reception antenna. In this state, the Q-value, power loss, waveform attenuation index, coupling state index, and temperature measured to execute each foreign substance detection method are likely to be different between the weak coupling state and the strong coupling state.

That is, it is necessary to perform control so that the determination threshold in foreign substance detection is different between the weak coupling state and the strong coupling state. When the state is recognized as the weak coupling state, the TX and the RX set the determination threshold to the first threshold. When the state is recognized as the strong coupling state, the TX and the RX set the determination threshold to the second threshold.

That is, when the state is recognized as the weak coupling state, the TX and the RX perform a CAL process based on the power loss method in the state. Alternatively, the threshold is set by a method of setting the threshold for the waveform attenuation index. Alternatively, the threshold is set by a threshold setting method in the measurement of the coupling state index.

Moreover, when the state is recognized as the strong coupling state, the TX and the RX perform a CAL process of the power loss method in the state. Alternatively, the threshold is set by a method of setting the threshold for the waveform attenuation index. Alternatively, the threshold is set by a threshold setting method in the measurement of the coupling state index.

Moreover, when the CAL process of the power loss method is executed, foreign substance detection processes based on methods of one or more of a foreign substance detection process based on the temperature, a foreign substance detection process based on the waveform attenuation method, and a foreign substance detection process based on the coupling state may be performed at the same timing.

Moreover, when the threshold for the waveform attenuation index is set, foreign substance detection processes based on methods of one or more of a foreign substance detection process based on the power loss method, a foreign substance detection process based on the temperature, and a foreign substance detection process based on the coupling state may be performed at the same timing.

Moreover, when the threshold is set in the measurement of the coupling state index, foreign substance detection processes based on methods of one or more of a foreign substance detection process based on the power loss method, a foreign substance detection process based on the temperature, and a foreign substance detection process based on the waveform attenuation method may be performed at the same timing. When the threshold is set, the accuracy of the threshold to be set is improved by performing a foreign substance detection process.

When the RX designates the timing, the RX provides a notification of the timing by transmitting a predetermined packet to the TX. When the TX designates the timing, the TX provides a notification of the timing by transmitting a predetermined packet to the RX.

In the power transfer phase, the TX or the RX calculates (measures) a coupling state index by a coupling state index measurement method at a predetermined timing. The predetermined timing occurs at prescribed predetermined intervals or occurs when the TX receives a predetermined packet from the RX.

Alternatively, the predetermined timing occurs when the RX receives a predetermined packet from the TX. The TX or the RX compares the calculated coupling state index with the set threshold to determine the coupling state. The TX or the RX sets a determination threshold by the above-described method in accordance with a determination result. It is possible to more appropriately determine the possibility of the presence or absence of a foreign substance by setting a determination threshold in accordance with the coupling state.

When the possibility of the presence of a foreign substance is detected by the foreign substance detection method that has been performed, the TX or the RX performs a first notification process for the user. The first notification process is a notification process of prompting the user to remove a foreign substance located between the power transmission antenna and the power transmission antenna or on the power transmission antenna. This can be implemented, for example, by using the UI unit 202 of the RX to perform various types of outputs to the user.

The various types of outputs are operations such as the screen display of a liquid crystal panel, flashing and color changes of light emitting diodes (LEDs), audio outputs from speakers, and vibrations of the RX body by a vibration motor. When the foreign substance is removed through a notification provided to the user, the possibility of more appropriate power transmission from the TX to the RX increases. Alternatively, the TX has a component (the UI unit 110) similar to the UI unit 202 of the RX and provides a notification for prompting the user to remove the foreign substance on the TX to the user.

Moreover, one factor that weakens the coupling between the power transmission antenna and the power reception antenna is a position shift between the power transmission antenna and the power reception antenna. For example, when the measurement of the coupling state index between the power transmission antenna and the power reception antenna is performed and a measurement value is less than a predetermined threshold, the RX performs a second notification process for the user.

The second notification process is a notification process of prompting the user to rearrange the RX on the TX. This can be implemented by using the UI unit of the RX (or the TX) to perform various types of outputs to the user. The various types of outputs are as described above. When the RX on the TX is located at an optimal position according to the notification for the user, the possibility of power transmission to be appropriately performed from the TX to the RX increases.

Alternatively, the TX has a constituent element similar to the UI unit of the RX and provides a notification for prompting the user to rearrange the RX on the TX. The first notification process and the second notification process are executed so that the user can be identified. For example, control is performed so that the flashing and color changes of the LEDs, the audio outputs from the speakers, or the vibration pattern of the RX body based on the vibration motor or the like differ according to each notification process.

Moreover, the TX and the RX include a protection function for protecting each circuit provided in the TX and the RX. When the physical quantity in each circuit is greater than or equal to a limit value, the protection function is used to transmit a packet for requesting a restriction on the power transmission to the TX. The packet is, for example, a packet for issuing a request for setting the GP value to a small value or RP1 or RP2 for requesting a CAL process based on the power loss method again.

Alternatively, the packet is a packet for requesting a CAL process of the waveform attenuation method or a CAL process of the coupling state index measurement method again. Alternatively, the packet is an EPT packet for requesting the stop of power transmission. Alternatively, the protection function is used to stop (shut down) the operation of the TX or the RX when the physical quantity in each circuit is greater than or equal to the limit value.

The limit value of the physical quantity allowed in each circuit is likely to be different between the weak coupling state and the strong coupling state. In other words, it is necessary to perform control so that the limit value of the physical quantity of each circuit is different between the weak coupling state and the strong coupling state. Here, examples of physical quantities of circuits are shown below.

- Inverter input voltage
- Inverter input current
- Power supplied to the inverter
- Inverter output voltage
- Inverter output current
- Power output from the inverter
- Rectification-unit-specific output voltage
- Rectification-unit-specific output current
- Power supplied to the rectification unit
- Power output from the rectification unit
- Voltage applied to the power transmission antenna
- Current flowing through the power transmission antenna
- Power supplied to the power transmission antenna
- Voltage applied to the power reception antenna
- Current flowing through the power reception antenna
- Power received by the power reception antenna
- Voltage applied to the load (the charging unit or the battery)
- Current flowing through the load (the charging unit or the battery)
- Power supplied to the load (the charging unit or the battery)

When the state is recognized as the weak coupling state, the TX and the RX set the limit value to a third limit value. When the state is recognized as the strong coupling state, the TX and the RX set the limit value to a fourth limit value. In the power transfer phase, the TX or the RX calculates (measures) the coupling state index by the coupling state index measurement method at a predetermined timing.

The predetermined timing occurs at prescribed predetermined intervals or occurs when the TX receives a predetermined packet from the RX. Alternatively, the predetermined timing occurs when the RX receives a predetermined packet from the TX. The TX or the RX compares the calculated coupling state index with the set threshold to determine the coupling state.

The TX or the RX sets a limit value by the above-described method in accordance with the determination result. By setting the limit value of the physical quantity in each circuit in accordance with the coupling state, it is possible to more appropriately protect circuits of the TX and the RX.

According to the present embodiment, when the electromagnetic coupling between the power transmission antenna and the power reception antenna is weak, more appropriate control can be performed to implement wireless power transmission from the power transmission device to the power reception device. Control based on the above-described method in the present embodiment is performed by the TX and the RX when the state is recognized as the weak coupling state.

In the present embodiment, an operation of a case where the state changes and the coupling state between the power transmission antenna and the power reception antenna changes from the weak coupling state to the strong coupling state has also been described. An operation in the present embodiment can also be applied as a control in the case of the strong coupling state implemented in S2504, S2607, S2706, S2806, and the like in the second embodiment. Each method shown in the present embodiment may be performed independently or a plurality of methods may be implemented.

[Application fields of present disclosure]

Some (and possibly all) of the constituent elements in the above-described embodiment may be replaced with other constituent elements that perform other similar functions or may omitted and other constituent elements may be added. Moreover, the present disclosure is not limited to the WPC standard, but can be applied to various standards.

Moreover, the power transmission device and the power reception device may be, for example, an image input device such as an imaging device (a still camera, a video camera, or the like) or a scanner, or an image output device such as a printer, a copier, or a projector. Moreover, the power transmission device and the power reception device may be a storage device such as a hard disk device or a memory device or an information processing device such as a personal computer (PC), a smartphone, or a tablet device.

Moreover, the power reception device of the present disclosure may be an information terminal device. For example, the information terminal device has a display unit (display) to which power received from the power reception antenna is supplied and which displays information to the user. The power received from the power reception antenna is stored in the power storage unit (battery), and power is supplied to the display unit from the battery.

**In** this case, the power reception device may include a communication unit that communicates with other devices different from the power transmission device. The communication unit may support communication standards such as NFC communication and the fifth-generation mobile communication system (5G).

Moreover, the power reception device of the present disclosure may be a vehicle such as an automobile. For example, an automobile that is a power reception device may receive power from a charger (a power transmission device) via a power transmission antenna installed in a parking lot. Moreover, the automobile that is a power reception device may receive power from a charger (a power transmission device) via a power transmission antenna embedded in the road.

Such an automobile supplies the received power to the battery. The power of the battery may be supplied to a driving unit (a motor or an electric unit) that drives the wheel or may be used to drive a sensor used for driving assistance or a communication unit that communicates with an external device. That is, in this case, the power reception device may include a battery, a motor, or a sensor driven using the received power in addition to wheels, and a communication unit that communicates with a device other than a power transmission device.

Furthermore, the power reception device may have a housing unit that accommodates a person. For example, the sensor includes a sensor used to measure a distance between vehicles or a distance from another obstacle or the like. The communication unit, for example, may support a global positioning system or a global positioning satellite (GPS).

Moreover, the communication unit may support a communication standard such as a fifth-generation mobile communication system (5G). The vehicle may be a bicycle or a motorcycle. Moreover, the power reception device of the present disclosure may be an electric tool, a home appliance, or the like. These devices, which are power reception devices, may include a motor driven by the reception power stored in the battery in addition to the battery.

Moreover, these devices may have a notification means for providing a notification of the remaining battery level and the like. Moreover, these devices may have a communication unit configured to communicate with other devices different from the power transmission device. The communication unit may support communication standards such as NFC and the fifth-generation mobile communication system (5G).

Moreover, the power transmission device of the present disclosure may be an on-board charger that transmits power to a portable information terminal device such as a smartphone or tablet that supports wireless power transmission in an automobile. Such an on-board charger may be provided in any number of places in the vehicle.

For example, the on-board charger may be installed on the console of the automobile, on the instrument panel (instrument panel, dashboard), in a position between the seats of passengers, on the ceiling, or on the door. However, it is better not to install it in a place that will interfere with driving.

Although the power transmission device has been described in the example of an on-board charger, such a charger is not limited to one arranged in a vehicle, but may be installed in a transport device such as a train, an aircraft, or a watercraft. The charger in this case may also be installed at a position between the seats of passengers, on the ceiling, or on the door.

Moreover, a vehicle such as an automobile equipped with an on-board charger may be a power transmission device. In this case, the power transmission device includes a wheel and a battery, and the power of the battery is used to supply power to the power reception device by the power transmission circuit unit and the power transmission antenna.

[Other embodiments]

The present disclosure can also be implemented by a process in which a program for implementing one or more functions of the above-described embodiments is supplied to a system or device via a network or storage medium and one or more processors in the computer of the system or device read and execute the program. Moreover, the present disclosure can also be implemented by a circuit (e.g., an ASIC) that implements one or more functions.

Moreover, some of the processes described in the present disclosure with reference to the flowchart may be implemented by hardware. For example, it is only necessary to automatically generate a dedicated circuit on the FPGA from a program for implementing each step by using a predetermined compiler. **In** addition, a gate array circuit may be formed as in an FPGA and implemented as hardware.

Embodiments of the present disclosure include the following configurations, methods, and programs.

(Configuration 1) A power transmission device including: a power transmission means configured to wirelessly transmit power to a power reception device via a power transmission antenna; a detection means configured to detect an object by outputting signals under a plurality of different conditions with the power transmission means; and a control means configured to control the power transmission means, wherein the control means changes a process of controlling the power transmission means when the detection means detects the power reception device and electromagnetic coupling between the power transmission antenna and a power reception antenna of the power reception device is weaker than electromagnetic coupling in a predetermined state.

(Configuration 2) The power transmission device according to configuration 1, wherein the control means performs control for detecting an object using first signals under a plurality of different conditions output from the power transmission antenna with the detection means and activating the power reception device with a second signal output from the power transmission antenna.

(Configuration 3) The power transmission device according to configuration 2, wherein the control means outputs a plurality of first signals with different power values from the power transmission antenna and decides power of the second signal by recognizing an electromagnetic coupling state between the power transmission antenna and the power reception antenna corresponding to power of the first signal by which the object can be detected.

(Configuration 4) The power transmission device according to configuration 2 or 3, wherein, when no object has been detected by the first signal, the control means outputs a plurality of second signals with different power values from the power transmission antenna and recognizes an electromagnetic coupling state between the power transmission antenna and the power reception antenna corresponding to power of the second signal by which the power reception device can be detected.

(Configuration 5) The power transmission device according to configuration 4, wherein the control means recognizes whether a state of the electromagnetic coupling between the power transmission antenna and the power reception antenna is a first state in which the electromagnetic coupling is weaker than the electromagnetic coupling in the predetermined state or a second state different from the first state and decides power of the second signal when the state is recognized as the first state as power higher than power of the second signal when the state is recognized as the second state.

(Configuration 6) The power transmission device according to any one of configurations 2 to 5, wherein the control means performs control for changing power of the second signal in accordance with a voltage value of the second signal received by the power reception device when a signal of a response to the second signal has been received from the power reception device.

(Configuration 7) A power transmission device including: a power transmission means configured to wirelessly transmit power to a power reception device via a power transmission antenna; a detection means configured to detect an object by outputting a signal through the power transmission means; a recognition means configured to recognize the power reception device detected by the detection means and recognize whether a state of electromagnetic coupling between the power transmission antenna and a power reception antenna of the power reception device is a first state in which the electromagnetic coupling is weaker than electromagnetic coupling in a predetermined state or a second state different from the first state; and a control means configured to control the power transmission means, wherein the control means changes a process of controlling the power transmission means in accordance with a state recognized by the recognition means.

(Configuration 8) The power transmission device according to configuration 7, wherein the control means controls the power transmission means so that power output via the power transmission antenna when the recognition means recognizes that the state is the first state becomes power higher than when the recognition means recognizes that the state is the second state.

(Configuration 9) The power transmission device according to configuration 7 or 8, including a communication means configured to communicate with the power reception device, wherein the recognition means acquires information indicating that there is a possibility of the first state from the power reception device through the communication means.

(Configuration 10) The power transmission device according to any one of configurations 7 to 9, wherein the recognition means performs a state determination process by comparing a result of measuring a coupling state index indicating an electromagnetic coupling state between the power transmission antenna and the power reception antenna with a threshold and recognizes that the state is the first state when the result of measuring the coupling state index is outside a range of the threshold.

(Configuration 11) The power transmission device according to any one of configurations 7 to 10, wherein the recognition means recognizes the first state when a value of power received by the power reception device or a voltage value of the received power is less than a threshold.

(Configuration 12) The power transmission device according to any one of configurations 7 to 11, wherein the control means performs a control process in which an object is detected by the detection means using a first signal output from the power transmission antenna and the power reception device detected by a second signal output from the power transmission antenna is activated.

(Configuration 13) The power transmission device according to configuration 12, wherein the control means performs control for periodically changing power of the first or second signal, and wherein the recognition means recognizes that the state is the first state when an object has been detected only by the first or second signal of maximum power.

(Configuration 14) The power transmission device according to configuration 12 or 13, wherein the control means performs control for changing a threshold for use in determining detection of an object in correspondence with the first signal, and wherein the recognition means recognizes that the state is the first state when an object has been detected by the first signal corresponding to a minimum threshold.

(Configuration 15) The power transmission device according to any one of configurations 12 to 14, wherein the control means measures or calculates an electrical physical quantity when first signals with the same power are output from the power transmission antenna, and wherein the recognition means recognizes that the state is the first state when a variation in the physical quantity is within a range based on a threshold.

(Configuration 16) A power transmission device including: a power transmission means configured to wirelessly transmit power to a power reception device via a power transmission antenna; a detection means configured to detect an object by outputting a signal with the power transmission means; and a control means configured to perform control for the power transmission means corresponding to an electromagnetic coupling state between the power transmission antenna and a power reception antenna of the power reception device, wherein, when electromagnetic coupling between the power transmission antenna and the power reception antenna is weaker than electromagnetic coupling in a predetermined state, the control means performs one or more types of control among first control for suppressing noise leaking from the power transmission antenna and the power reception antenna to surroundings, second control for suppressing instability in communication between the power transmission device and the power reception device, and third control for suppressing deterioration in accuracy of detection of an object other than the power reception device.

(Configuration 17) The power transmission device according to configuration 16, wherein the control means performs control for lowering transmission power in the first control as compared to when the electromagnetic coupling between the power transmission antenna and the power reception antenna is stronger than the electromagnetic coupling in the predetermined state.

(Configuration 18) The power transmission device according to configuration 16 or 17, wherein the control means performs control for changing a frequency band for use in power transmission or control for switching to a noise suppression circuit corresponding to the frequency band in the first control.

(Configuration 19) The power transmission device according to any one of configurations 16 to 18, wherein the control means performs control for changing a modulation parameter or a modulation scheme for use in communication with the power reception device in the first control.

(Configuration 20) The power transmission device according to any one of configurations 16 to 19, wherein the control means performs control for switching the power transmission antenna from a first power transmission antenna to a second power transmission antenna having a different size among a plurality of power transmission antennas in the first control.

(Configuration 21) The power transmission device according to any one of configurations 16 to 20, wherein the control means performs control for changing a circuit so that a quality factor of a power-transmission-related circuit including the power transmission antenna is larger in the first control.

(Configuration 22) The power transmission device according to any one of configurations 16 to 21, wherein the control means performs control for changing a modulation parameter for use in communication with the power reception device or control for changing a communication scheme related to communication with the power reception device in the second control.

(Configuration 23) The power transmission device according to any one of configurations 16 to 22, wherein the control means performs control for detecting an object different from the power reception device by comparing a result of measuring a coupling state index indicating an electromagnetic coupling state between the power transmission antenna and the power reception antenna with a threshold in the third control.

(Configuration 24) The power transmission device according to any one of configurations 16 to 23, wherein the control means performs control for detecting an object different from the power reception device by comparing a detection value of a temperature or a temperature rise rate of the power transmission device or the power reception device with a threshold in the third control.

(Configuration 25) The power transmission device according to configuration 23 or 24, wherein the control means determines whether there is the object by setting the threshold to a first threshold in a first state in which the electromagnetic coupling between the power transmission antenna and the power reception antenna is weaker than the electromagnetic coupling in the predetermined state and setting the threshold to a second threshold in a second state in which the electromagnetic coupling between the power transmission antenna and the power reception antenna is stronger than the electromagnetic coupling in the predetermined state.

(Method 1) A control method to be executed by a power transmission device capable of transmitting power to a power reception device through wireless power transmission, the control method for the power transmission device including: a power transmission step of performing power transmission for the power reception device via a power transmission antenna in a power transmission means; a detection step of detecting an object by outputting signals under a plurality of different conditions in the power transmission means; and a control step of controlling the power transmission means in the control means, wherein, in the control step, the control means changes a process of controlling the power transmission means when the power reception device is detected in the detection step and electromagnetic coupling between the power transmission antenna and a power reception antenna of the power reception device is weaker than electromagnetic coupling in a predetermined state.

(Method 2) A control method to be executed by a power transmission device capable of transmitting power to a power reception device through wireless power transmission, the control method for the power transmission device including: a power transmission step of performing power transmission for the power reception device via a power transmission antenna in a power transmission means; a detection step of detecting an object by outputting a signal in the power transmission means; a recognition step of recognizing the power reception device detected in the detection step and recognize whether a state of electromagnetic coupling between the power transmission antenna and a power reception antenna of the power reception device is a first state in which the electromagnetic coupling is weaker than electromagnetic coupling in a predetermined state or a second state different from the first state in a recognition means; and a control step of controlling the power transmission means in a control means, wherein, in the control step, the control means changes a process of controlling the power transmission means in accordance with a state recognized by the recognition means.

(Method 3) A control method to be executed by a power transmission device capable of transmitting power to a power reception device through wireless power transmission, the control method for the power transmission device including: a power transmission step of performing power transmission for the power reception device via a power transmission antenna in a power transmission means; a detection step of detecting an object by outputting a signal in the power transmission means; and a control step of performing control for the power transmission means corresponding to an electromagnetic coupling state between the power transmission antenna and a power reception antenna of the power reception device in a control means, wherein, in the control step, when electromagnetic coupling between the power transmission antenna and the power reception antenna is weaker than electromagnetic coupling in a predetermined state, the control means performs one or more types of control among first control for suppressing noise leaking from the power transmission antenna and the power reception antenna to surroundings, second control for suppressing instability in communication between the power transmission device and the power reception device, and third control for suppressing deterioration in accuracy of detection of an object other than the power reception device.

(Storage medium 1) A storage medium storing a computer program for causing a computer to execute: a power transmission step of performing power transmission for a power reception device via a power transmission antenna in a power transmission means; a detection step of detecting an object by outputting signals under a plurality of different conditions in the power transmission means; and a control step of controlling the power transmission means with the control means, wherein, in the control step, the control means changes a process of controlling the power transmission means when the power reception device is detected in the detection step and electromagnetic coupling between the power transmission antenna and a power reception antenna of the power reception device is weaker than electromagnetic coupling in a predetermined state.

(Storage medium 2) A storage medium storing a computer program for causing a computer to execute: a power transmission step of performing power transmission for a power reception device via a power transmission antenna in a power transmission means; a detection step of detecting an object by outputting a signal in the power transmission means; a recognition step of recognizing the power reception device detected in the detection step and recognize whether a state of electromagnetic coupling between the power transmission antenna and a power reception antenna of the power reception device is a first state in which the electromagnetic coupling is weaker than electromagnetic coupling in a predetermined state or a second state different from the first state in a recognition means; and a control step of controlling the power transmission means in a control means, wherein, in the control step, the control means changes a process of controlling the power transmission means in accordance with a state recognized by the recognition means.

(Storage medium 3) A storage medium storing a computer program for causing a computer to execute: a power transmission step of performing power transmission for a power reception device via a power transmission antenna in a power transmission means; a detection step of detecting an object by outputting a signal in the power transmission means; and a control step of performing control for the power transmission means corresponding to an electromagnetic coupling state between the power transmission antenna and a power reception antenna of the power reception device in a control means, wherein, in the control step, when electromagnetic coupling between the power transmission antenna and the power reception antenna is weaker than electromagnetic coupling in a predetermined state, the control means performs one or more types of control among first control for suppressing noise leaking from the power transmission antenna and the power reception antenna to surroundings, second control for suppressing instability in communication between the power transmission device and the power reception device, and third control for suppressing deterioration in accuracy of detection of an object other than the power reception device.

Cross-reference to Related Application

This application claims the benefit of Japanese Patent Application No. 2022-150646 filed on September 21, 2022, the entire contents of which are hereby incorporated herein by reference.

## Claims

1. A power transmission device comprising:

    a power transmission means configured to wirelessly transmit power to a power reception device via a power transmission antenna;
    a detection means configured to detect an object by outputting signals under a plurality of different conditions with the power transmission means; and
    a control means configured to control the power transmission means,
    wherein the control means changes a process of controlling the power transmission means when the detection means detects the power reception device and electromagnetic coupling between the power transmission antenna and a power reception antenna of the power reception device is weaker than electromagnetic coupling in a predetermined state.

2. The power transmission device according to claim 1, wherein the control means performs control for detecting an object using first signals under a plurality of different conditions output from the power transmission antenna with the detection means and activating the power reception device with a second signal output from the power transmission antenna.

3. The power transmission device according to claim 2, wherein the control means outputs a plurality of first signals with different power values from the power transmission antenna and decides power of the second signal by recognizing an electromagnetic coupling state between the power transmission antenna and the power reception antenna corresponding to power of the first signal by which the object can be detected.

4. The power transmission device according to claim 2, wherein, when no object has been detected by the first signal, the control means outputs a plurality of second signals with different power values from the power transmission antenna and recognizes an electromagnetic coupling state between the power transmission antenna and the power reception antenna corresponding to power of the second signal by which the power reception device can be detected.

5. The power transmission device according to claim 4, wherein the control means recognizes whether a state of the electromagnetic coupling between the power transmission antenna and the power reception antenna is a first state in which the electromagnetic coupling is weaker than the electromagnetic coupling in the predetermined state or a second state different from the first state and decides power of the second signal when the state is recognized as the first state as power higher than power of the second signal when the state is recognized as the second state.

6. The power transmission device according to claim 2, wherein the control means performs control for changing power of the second signal in accordance with a voltage value of the second signal received by the power reception device when a signal of a response to the second signal has been received from the power reception device.

7. A power transmission device comprising:

    a power transmission means configured to wirelessly transmit power to a power reception device via a power transmission antenna;
    a detection means configured to detect an object by outputting a signal through the power transmission means;
    a recognition means configured to recognize the power reception device detected by the detection means and recognize whether a state of electromagnetic coupling between the power transmission antenna and a power reception antenna of the power reception device is a first state in which the electromagnetic coupling is weaker than electromagnetic coupling in a predetermined state or a second state different from the first state; and
    a control means configured to control the power transmission means,
    wherein the control means changes a process of controlling the power transmission means in accordance with a state recognized by the recognition means.

**8.** The power transmission device according to claim 7, wherein the control means controls the power transmission means so that power output via the power transmission antenna when the recognition means recognizes that the state is the first state becomes power higher than when the recognition means recognizes that the state is the second state.

**9.** The power transmission device according to claim 7, comprising a communication means configured to communicate with the power reception device, wherein the recognition means acquires information indicating that there is a possibility of the first state from the power reception device through the communication means.

**10.** The power transmission device according to claim 7, wherein the recognition means performs a state determination process by comparing a result of measuring a coupling state index indicating an electromagnetic coupling state between the power transmission antenna and the power reception antenna with a threshold and recognizes that the state is the first state when the result of measuring the coupling state index is outside a range of the threshold.

**11.** The power transmission device according to claim 7, wherein the recognition means recognizes the first state when a value of power received by the power reception device or a voltage value of the received power is less than a threshold.

**12.** The power transmission device according to claim 7, wherein the control means performs a control process in which an object is detected by the detection means using a first signal output from the power transmission antenna and the power reception device detected by a second signal output from the power transmission antenna is activated.

**13.** The power transmission device according to claim 12,

wherein the control means performs control for periodically changing power of the first or second signal, and
wherein the recognition means recognizes that the state is the first state when an object has been detected only by the first or second signal of maximum power.

**14.** The power transmission device according to claim 12,

wherein the control means performs control for changing a threshold for use in determining detection of an object in correspondence with the first signal, and
wherein the recognition means recognizes that the state is the first state when an object has been detected by the first signal corresponding to a minimum threshold.

**15.** The power transmission device according to claim 12,

wherein the control means measures or calculates an electrical physical quantity when first signals with the same power are output from the power transmission antenna, and
wherein the recognition means recognizes that the state is the first state when a variation in the physical quantity is within a range based on a threshold.

**16.** A power transmission device comprising:

a power transmission means configured to wirelessly transmit power to a power reception device via a power transmission antenna;
a detection means configured to detect an object by outputting a signal with the power transmission means; and
a control means configured to perform control for the power transmission means corresponding to an electromagnetic coupling state between the power transmission antenna and a power reception antenna of the power reception device,
wherein, when electromagnetic coupling between the power transmission antenna and the power reception antenna is weaker than electromagnetic coupling in a predetermined state, the control means performs one or more types of control among first control for suppressing noise leaking from the power transmission antenna and the power reception antenna to surroundings, second control for suppressing instability in communication between the power transmission device and the power reception device, and third control for suppressing deterioration in accuracy of detection of an object other than the power reception device.

**17.** The power transmission device according to claim 16, wherein the control means performs control for lowering transmission power in the first control as compared to when the electromagnetic coupling between the power transmission antenna and the power reception antenna is stronger than the electromagnetic coupling in the predetermined state.

**18.** The power transmission device according to claim 16, wherein the control means performs control for changing a frequency band for use in power transmission or control for switching to a noise suppression circuit corresponding to the frequency band in the first control.

**19.** The power transmission device according to claim 16, wherein the control means performs control for changing a modulation parameter or a modulation scheme for use in communication with the power reception device in the first control.

**20.** The power transmission device according to claim 16, wherein the control means performs control for switching the power transmission antenna from a first power transmission antenna to a second power transmission antenna having a different size among a plurality of power transmission antennas in the first control.

**21.** The power transmission device according to claim 16, wherein the control means performs control for changing a circuit so that a quality factor of a power-transmission-related circuit including the power transmission antenna is larger in the first control.

**22.** The power transmission device according to claim 16, wherein the control means performs control for changing a modulation parameter for use in communication with the power reception device or control for changing a communication scheme related to communication with the power reception device in the second control.

**23.** The power transmission device according to claim 16, wherein the control means performs control for detecting an object different from the power reception device by comparing a result of measuring a coupling state index indicating an electromagnetic coupling state between the power transmission antenna and the power reception antenna with a threshold in the third control.

**24.** The power transmission device according to claim 16, wherein the control means performs control for detecting an object different from the power reception device by comparing a detection value of a temperature or a temperature rise rate of the power transmission device or the power reception device with a threshold in the third control.

**25.** The power transmission device according to claim 23, wherein the control means determines whether there is the object by setting the threshold to a first threshold in a first state in which the electromagnetic coupling between the power transmission antenna and the power reception antenna is weaker than the electromagnetic coupling in the predetermined state and setting the threshold to a second threshold in a second state in which the electromagnetic coupling between the power transmission antenna and the power reception antenna is stronger than the electromagnetic coupling in the predetermined state.

**26.** A control method to be executed by a power transmission device capable of transmitting power to a power reception device through wireless power transmission, the control method for the power transmission device comprising:

a power transmission step of performing power transmission for the power reception device via a power transmission antenna in a power transmission means;
a detection step of detecting an object by outputting signals under a plurality of different conditions in the power transmission means; and
a control step of controlling the power transmission means in the control means,
wherein, in the control step, the control means changes a process of controlling the power transmission means when the power reception device is detected in the detection step and electromagnetic coupling between the power transmission antenna and a power reception antenna of the power reception device is weaker than electromagnetic coupling in a predetermined state.

**27.** A control method to be executed by a power transmission device capable of transmitting power to a power reception device through wireless power transmission, the control method for the power transmission device comprising:

a power transmission step of performing power transmission for the power reception device via a power transmission antenna in a power transmission means;
a detection step of detecting an object by outputting a signal in the power transmission means;
a recognition step of recognizing the power reception device detected in the detection step and recognize whether a state of electromagnetic coupling between the power transmission antenna and a power reception antenna of the power reception device is a first state in which the electromagnetic coupling is weaker than electromagnetic coupling in a predetermined state or a second state different from the first state in a recognition means; and
a control step of controlling the power transmission means in a control means,
wherein, in the control step, the control means changes a process of controlling the power transmission means in accordance with a state recognized by the recognition means.

**28.** A control method to be executed by a power transmission device capable of transmitting power to a power reception device through wireless power transmission, the control method for the power transmission device comprising:

a power transmission step of performing power transmission for the power reception device via a power transmission antenna in a power transmission means;
a detection step of detecting an object by outputting a signal in the power transmission means; and
a control step of performing control for the power transmission means corresponding to an electromagnetic coupling state between the power transmission antenna and a power reception antenna of the power reception device in a control means,
wherein, in the control step, when electromagnetic coupling between the power transmission antenna and the power reception antenna is weaker than electromagnetic coupling in a predetermined state, the control means performs one or more types of control among first control for suppressing noise leaking from the power transmission antenna and the power reception antenna to surroundings, second control for suppressing instability in communication between the power transmission device and the power reception device, and third control for suppressing deterioration in accuracy of detection of an object other than the power reception device.

**29.** A storage medium storing a computer program for causing a computer to execute:

a power transmission step of performing power transmission for a power reception device via a power transmission antenna in a power transmission means;
a detection step of detecting an object by outputting signals under a plurality of different conditions in the power transmission means; and
a control step of controlling the power transmission means in the control means,
wherein, in the control step, the control means changes a process of controlling the power transmission means when the power reception device is detected in the detection step and electromagnetic coupling between the power transmission antenna and a power reception antenna of the power reception device is weaker than electromagnetic coupling in a predetermined state.

**30.** A storage medium storing a computer program for causing a computer to execute:

a power transmission step of performing power transmission for a power reception device via a power transmission antenna in a power transmission means;
a detection step of detecting an object by outputting a signal in the power transmission means;
a recognition step of recognizing the power reception device detected in the detection step and recognize whether a state of electromagnetic coupling between the power transmission antenna and a power reception antenna of the power reception device is a first state in which the electromagnetic coupling is weaker than electromagnetic coupling in a predetermined state or a second state different from the first state in a recognition means; and
a control step of controlling the power transmission means in a control means,
wherein, in the control step, the control means changes a process of controlling the power transmission means in accordance with a state recognized by the recognition means.

**31.** A storage medium storing a computer program for causing a computer to execute:

a power transmission step of performing power transmission for a power reception device via a power transmission antenna in a power transmission means;
a detection step of detecting an object by outputting a signal in the power transmission means; and
a control step of performing control for the power transmission means corresponding to an electromagnetic coupling state between the power transmission antenna and a power reception antenna of the power reception device in a control means,
wherein, in the control step, when electromagnetic coupling between the power transmission antenna and the power reception antenna is weaker than electromagnetic coupling in a predetermined state, the control means performs one or more types of control among first control for suppressing noise leaking from the power transmission antenna and the power reception antenna to surroundings, second control for suppressing instability in communication between the power transmission device and the power reception device, and third control for suppressing deterioration in accuracy of detection of an object other than the power reception device.

FIG. 1

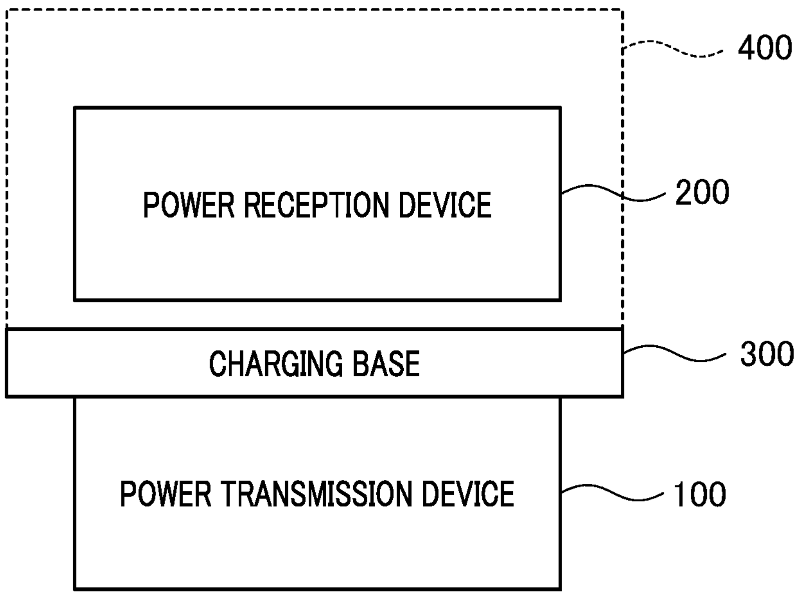
400
POWER RECEPTION DEVICE
200
CHARGING BASE
300
POWER TRANSMISSION DEVICE
100

FIG. 2

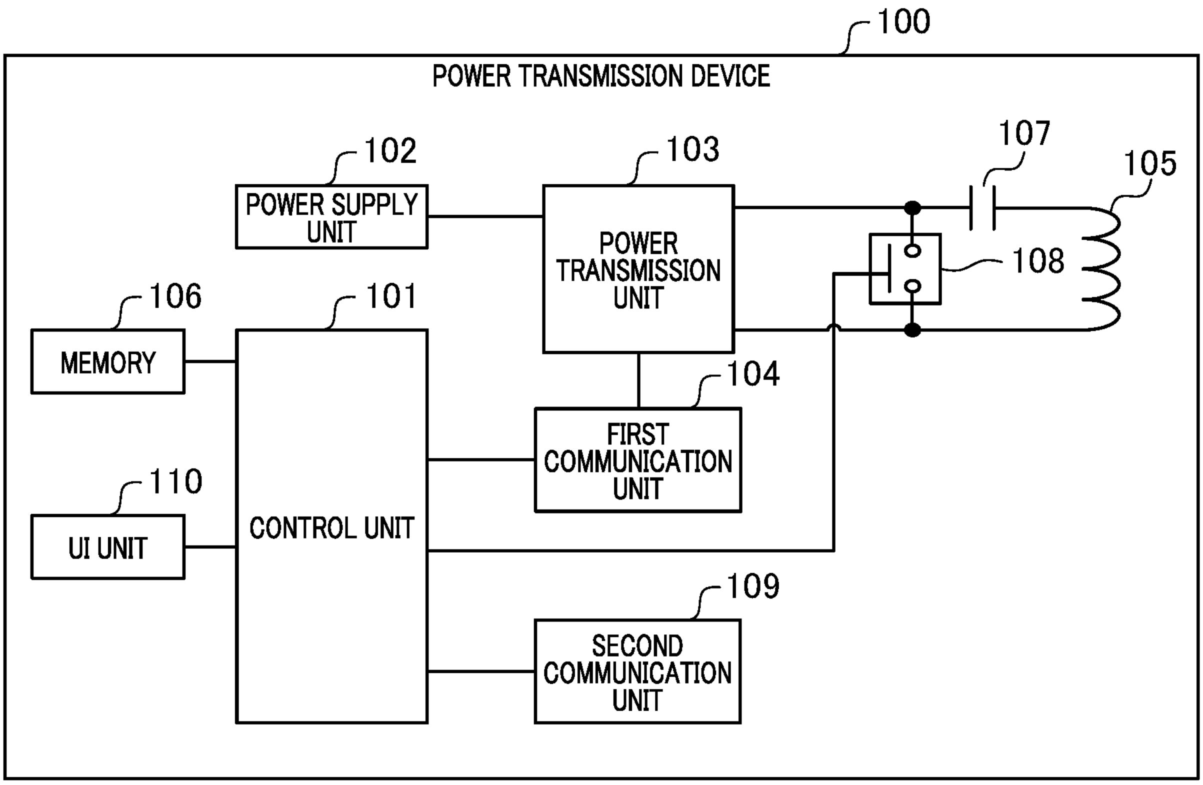
100
POWER TRANSMISSION DEVICE
102
POWER SUPPLY UNIT
103
POWER TRANSMISSION UNIT
107
105
108
106
MEMORY
101
CONTROL UNIT
104
FIRST COMMUNICATION UNIT
110
UI UNIT
109
SECOND COMMUNICATION UNIT

FIG. 3

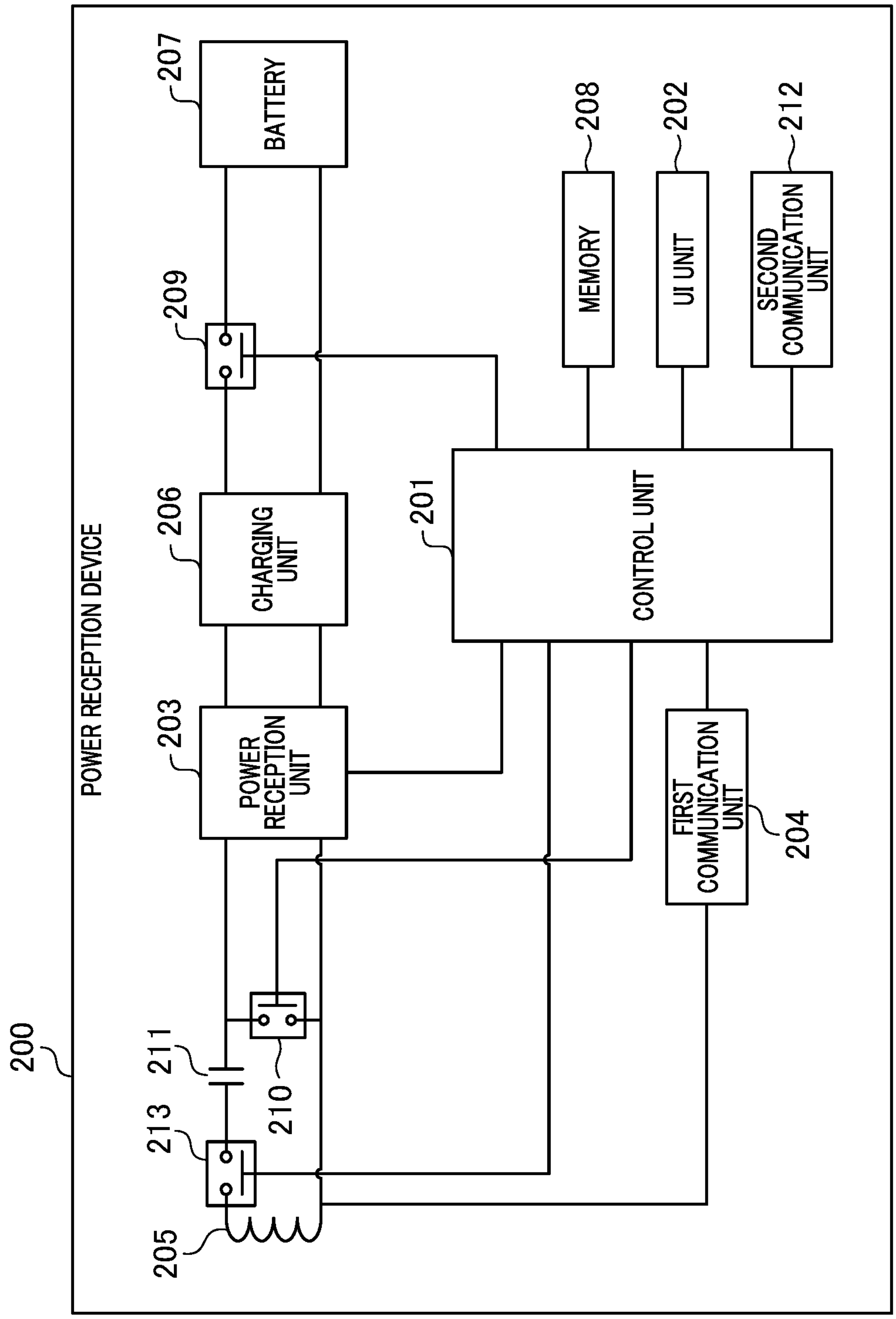
200
POWER RECEPTION DEVICE
207
BATTERY
209
206
CHARGING UNIT
203
POWER RECEPTION UNIT
201
CONTROL UNIT
208
MEMORY
202
UI UNIT
212
SECOND COMMUNICATION UNIT
FIRST COMMUNICATION UNIT
204
211
210
213
205

FIG. 4

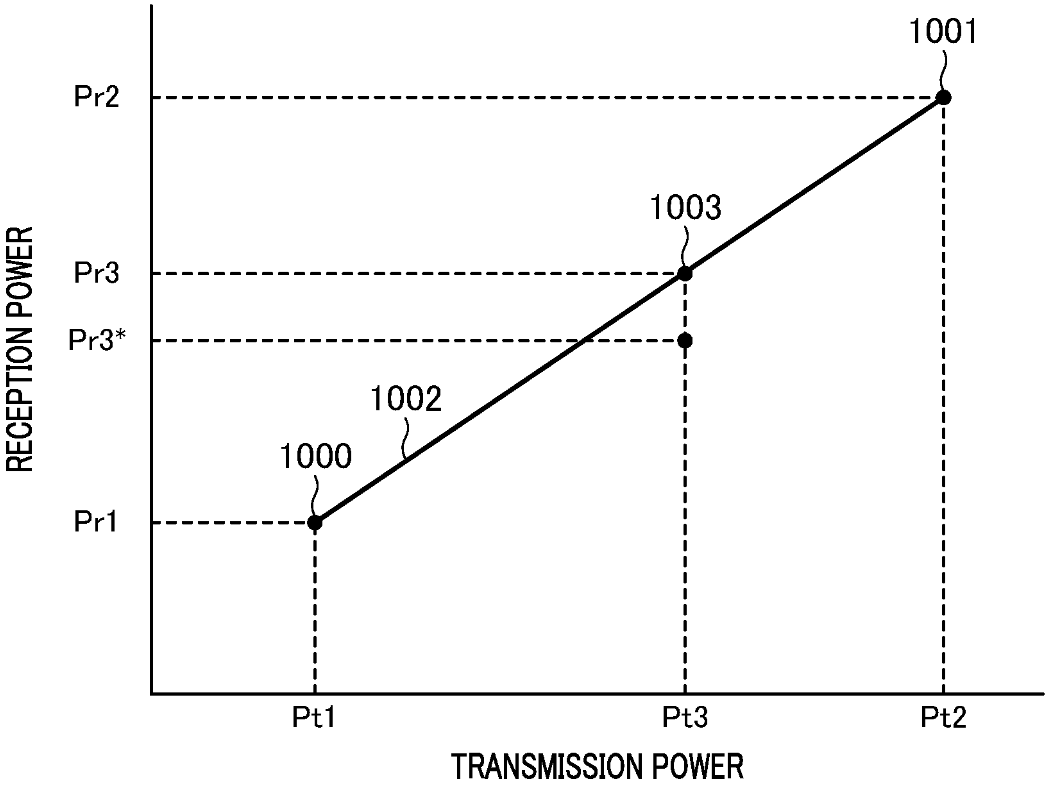
Pr2
Pr3
Pr3*
Pr1
RECEPTION POWER
1001
1003
1002
1000
Pt1
Pt3
Pt2
TRANSMISSION POWER

FIG. 5A

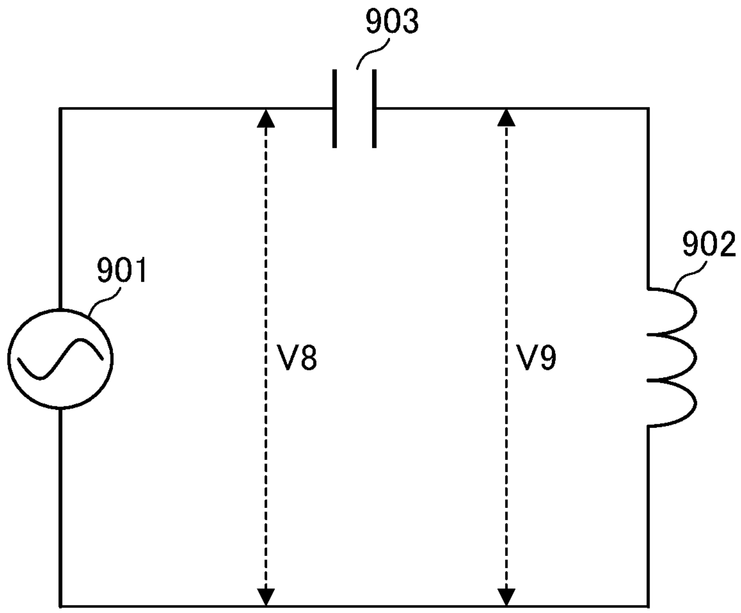
903
902
901
V8
V9

FIG. 5B

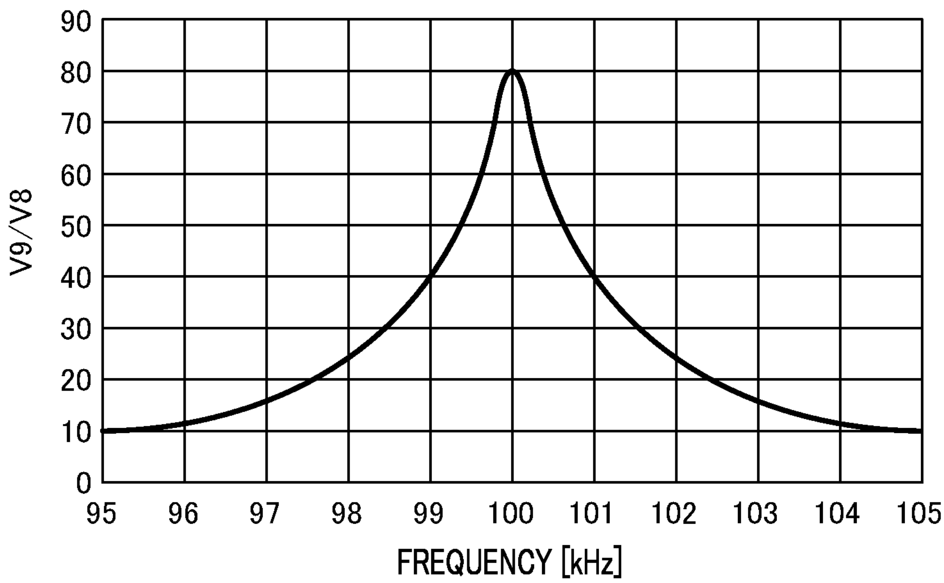
90
80
70
60
50
40
30
20
10
0
V9/V8
95
96
97
98
99
100
101
102
103
104
105
FREQUENCY [kHz]

FIG. 6

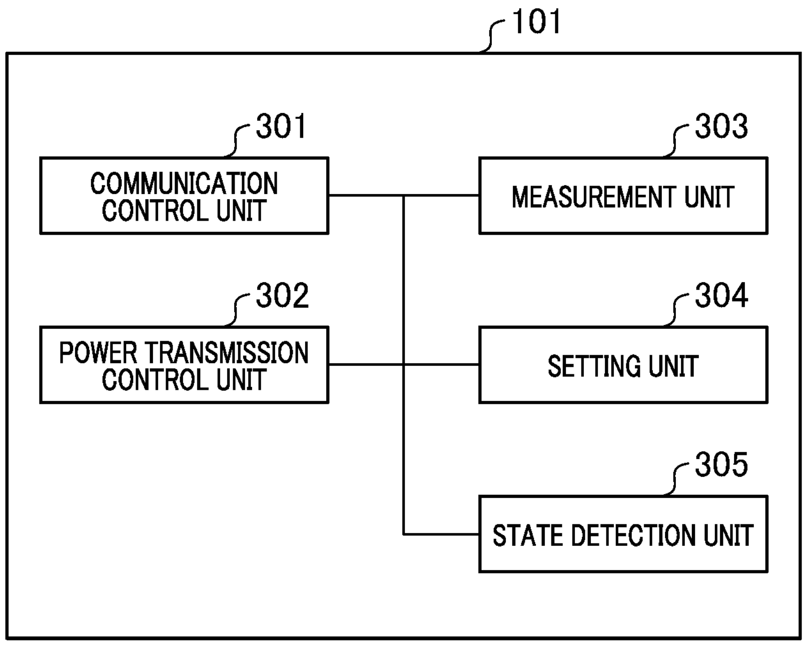
101
301
COMMUNICATION CONTROL UNIT
302
POWER TRANSMISSION CONTROL UNIT
303
MEASUREMENT UNIT
304
SETTING UNIT
305
STATE DETECTION UNIT

FIG. 7

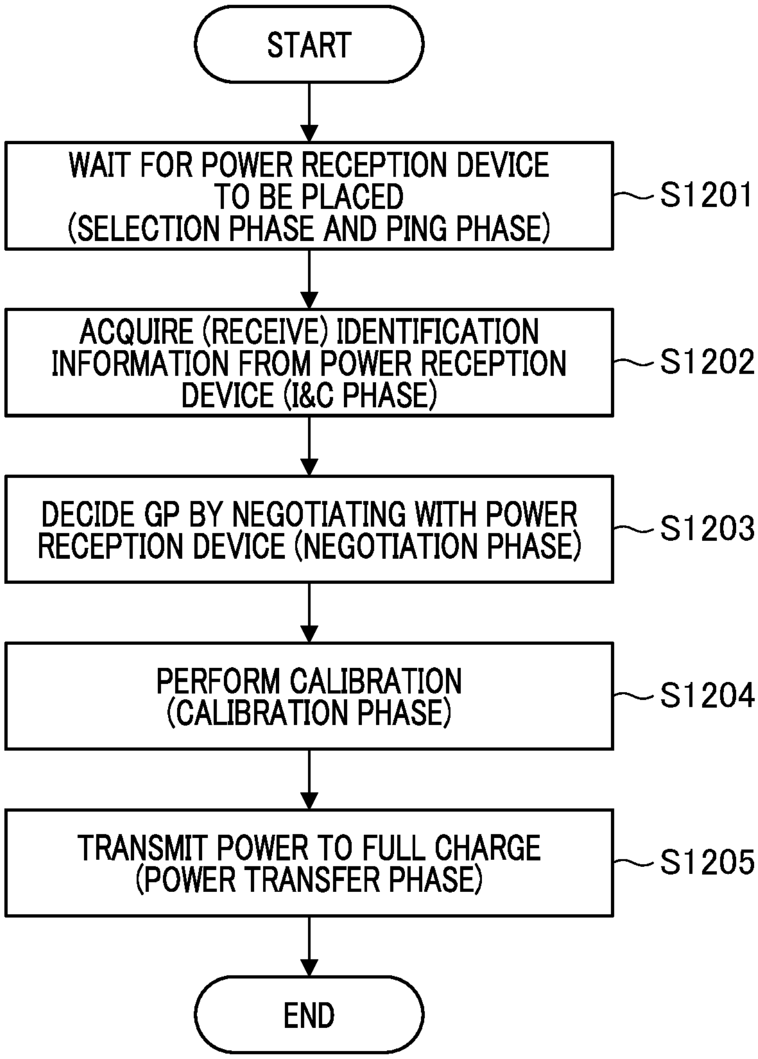
START
WAIT FOR POWER RECEPTION DEVICE TO BE PLACED (SELECTION PHASE AND PING PHASE)
S1201
ACQUIRE (RECEIVE) IDENTIFICATION INFORMATION FROM POWER RECEPTION DEVICE (I&C PHASE)
S1202
DECIDE GP BY NEGOTIATING WITH POWER RECEPTION DEVICE (NEGOTIATION PHASE)
S1203
PERFORM CALIBRATION (CALIBRATION PHASE)
S1204
TRANSMIT POWER TO FULL CHARGE (POWER TRANSFER PHASE)
S1205
END

FIG. 8

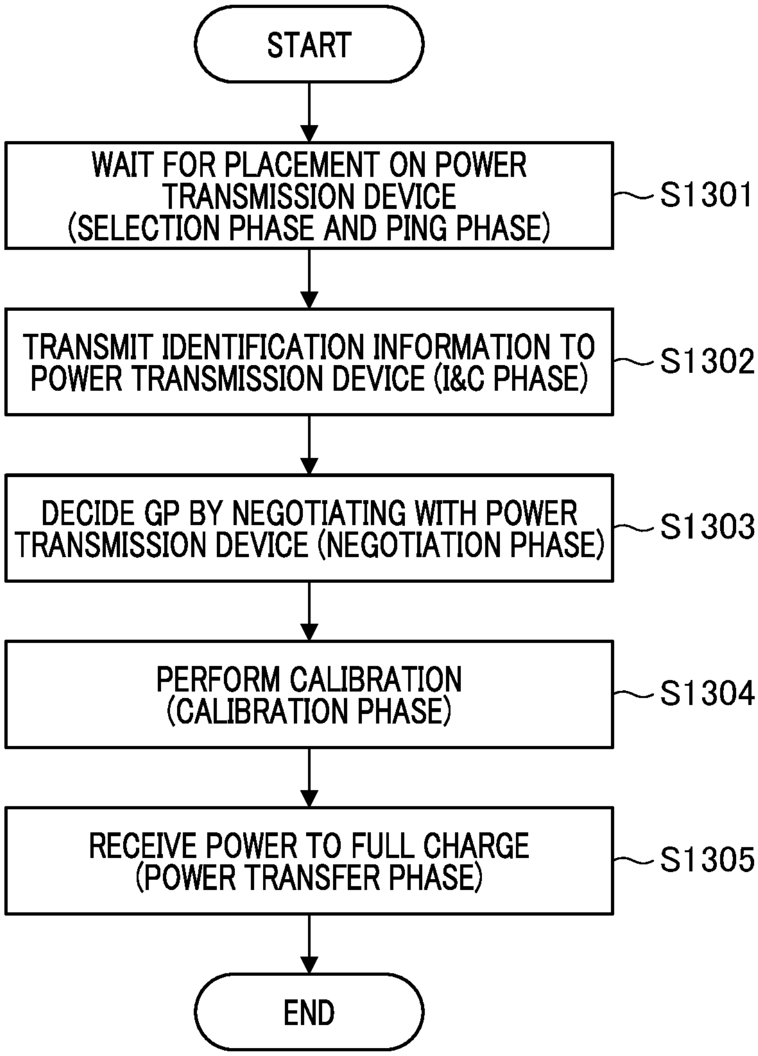
START
WAIT FOR PLACEMENT ON POWER TRANSMISSION DEVICE (SELECTION PHASE AND PING PHASE)
S1301
TRANSMIT IDENTIFICATION INFORMATION TO POWER TRANSMISSION DEVICE (I&C PHASE)
S1302
DECIDE GP BY NEGOTIATING WITH POWER TRANSMISSION DEVICE (NEGOTIATION PHASE)
S1303
PERFORM CALIBRATION (CALIBRATION PHASE)
S1304
RECEIVE POWER TO FULL CHARGE (POWER TRANSFER PHASE)
S1305
END

FIG. 9

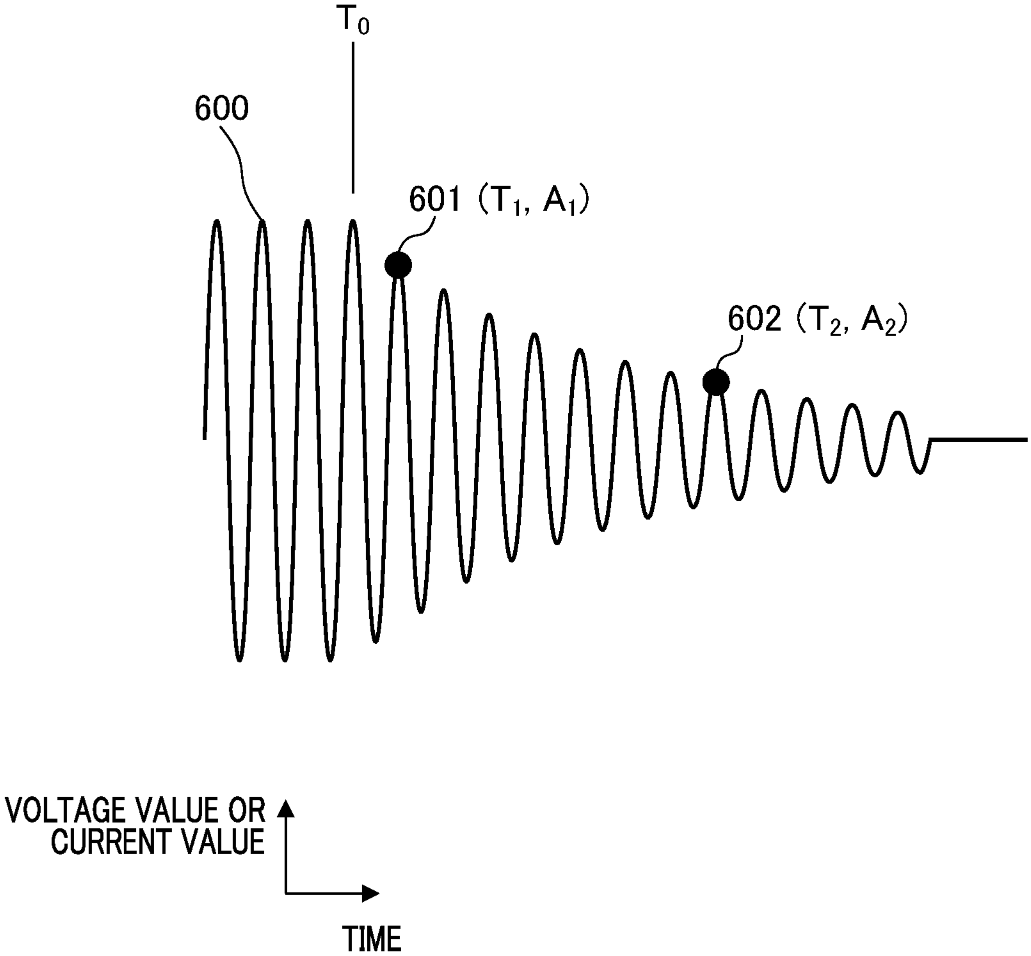

FIG. 10

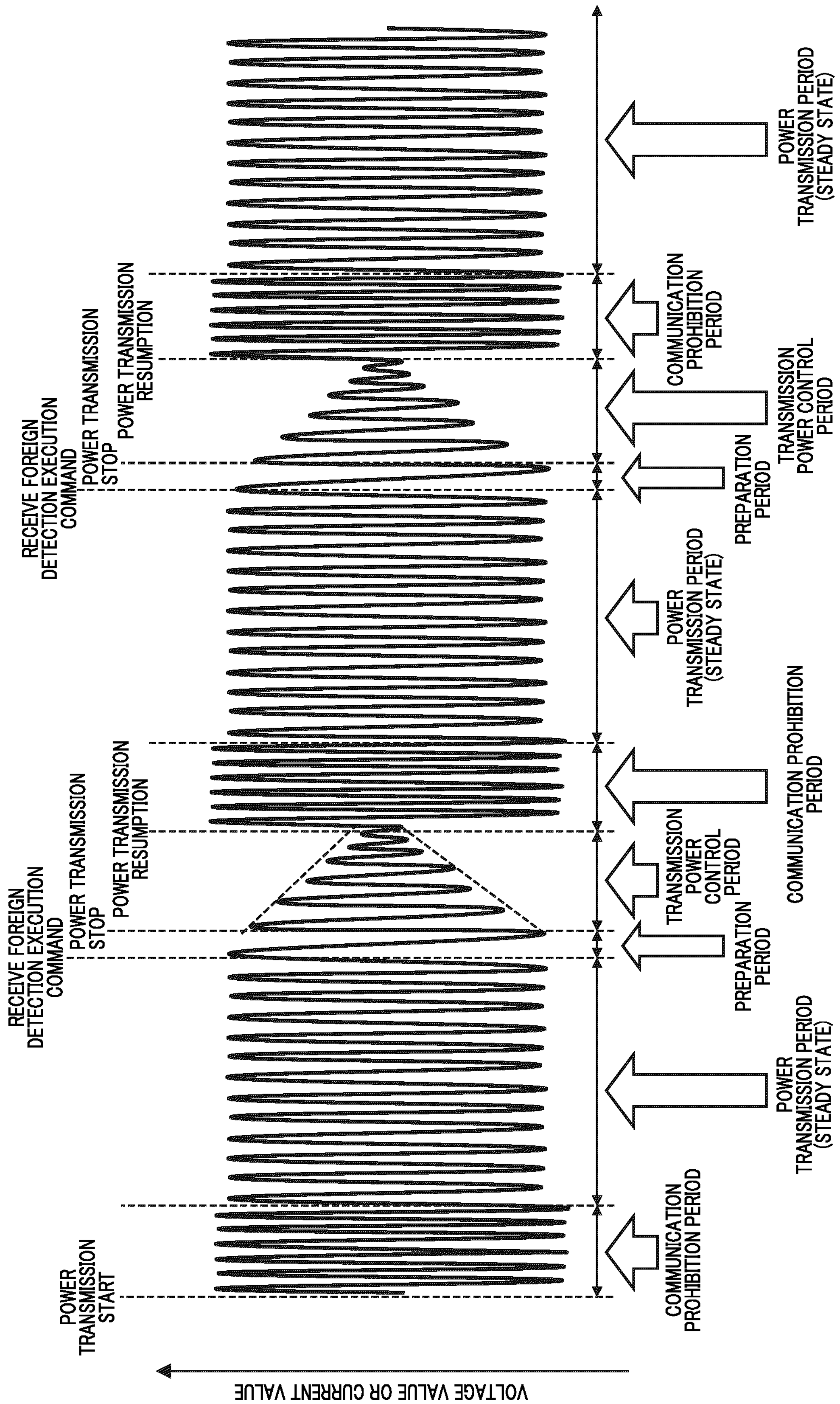

VOLTAGE VALUE OR CURRENT VALUE
POWER TRANSMISSION START
RECEIVE FOREIGN DETECTION EXECUTION COMMAND
POWER TRANSMISSION STOP
POWER TRANSMISSION RESUMPTION
RECEIVE FOREIGN DETECTION EXECUTION COMMAND
POWER TRANSMISSION STOP
POWER TRANSMISSION RESUMPTION
COMMUNICATION PROHIBITION PERIOD
POWER TRANSMISSION PERIOD (STEADY STATE)
PREPARATION PERIOD
TRANSMISSION POWER CONTROL PERIOD
COMMUNICATION PROHIBITION PERIOD
POWER TRANSMISSION PERIOD (STEADY STATE)
PREPARATION PERIOD
TRANSMISSION POWER CONTROL PERIOD
COMMUNICATION PROHIBITION PERIOD
POWER TRANSMISSION PERIOD (STEADY STATE)

FIG. 11

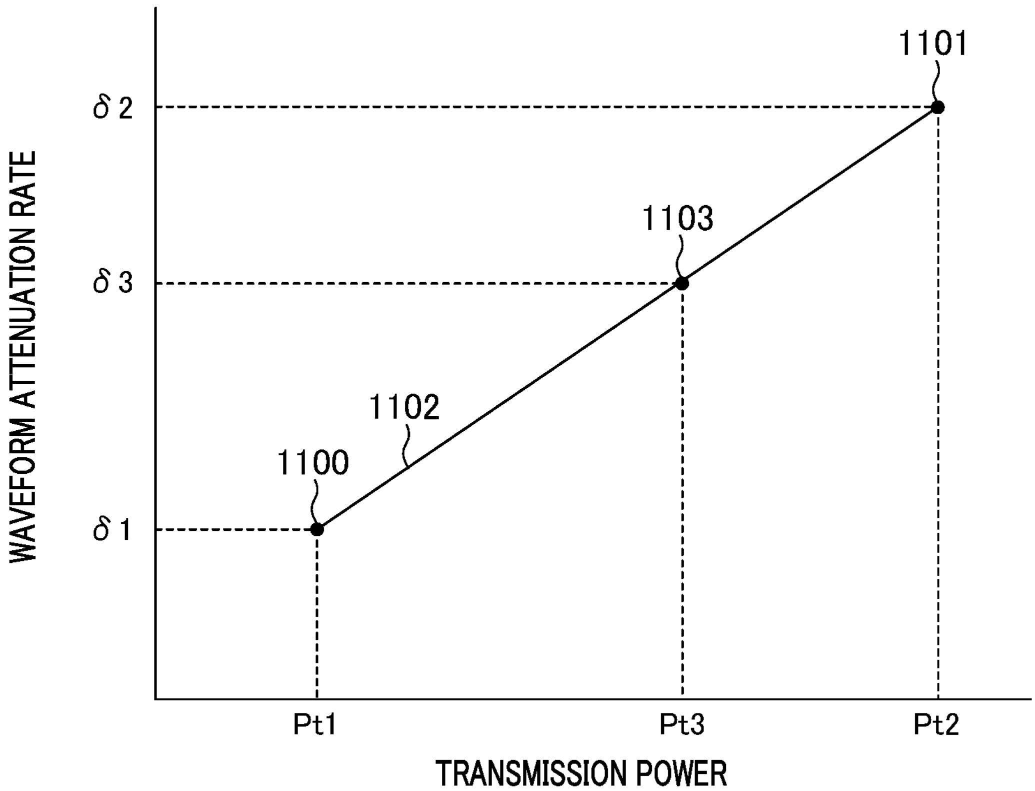
WAVEFORM ATTENUATION RATE
δ 2
δ 3
δ 1
1101
1103
1102
1100
Pt1
Pt3
Pt2
TRANSMISSION POWER

FIG. 12A

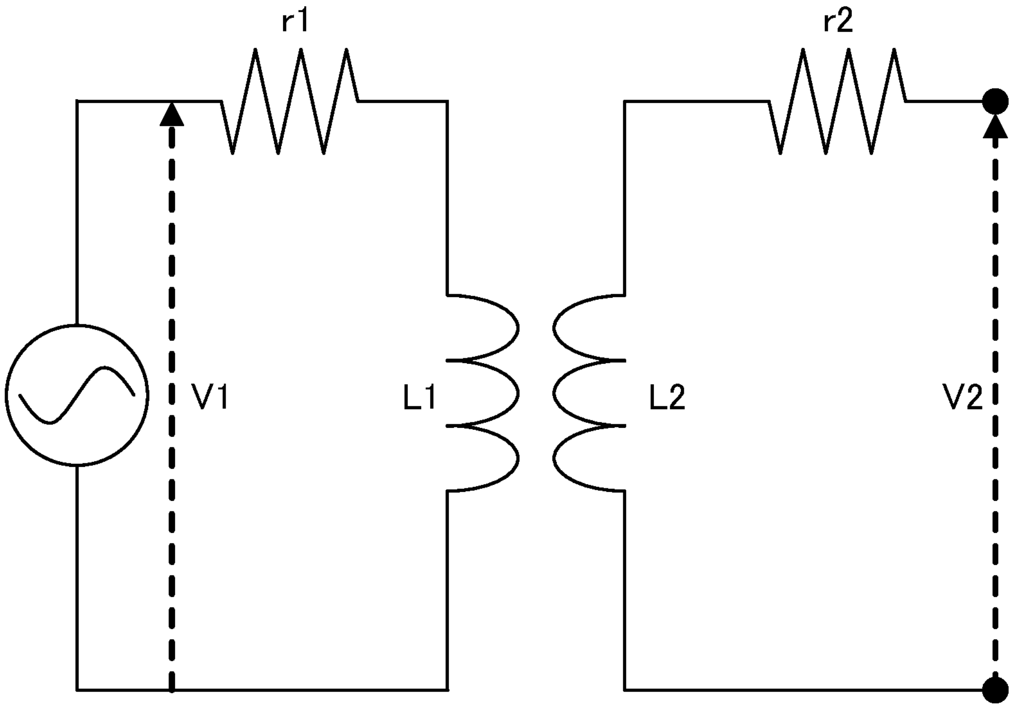


FIG. 12B

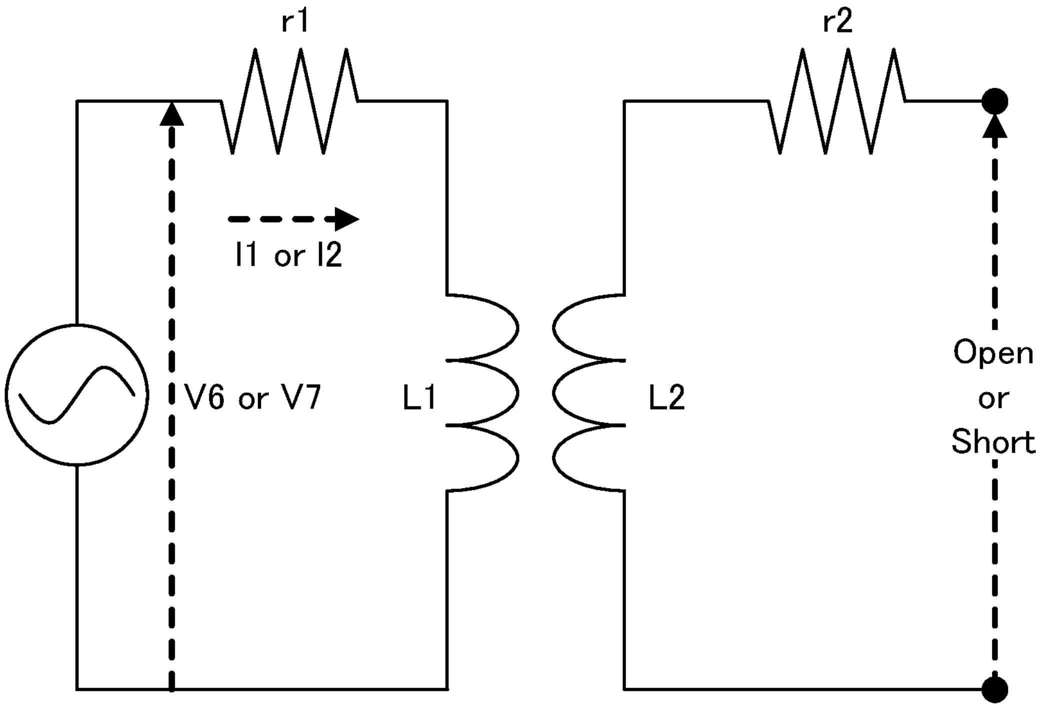

FIG. 13

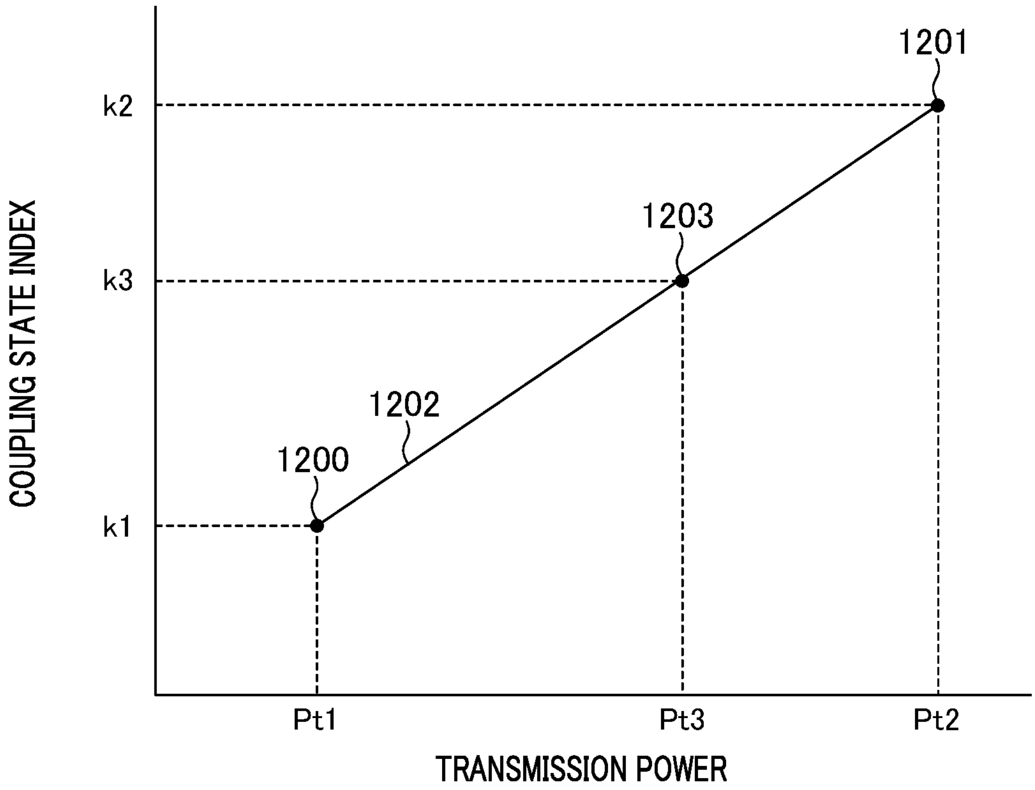
1201
k2
1203
k3
1202
1200
k1
COUPLING STATE INDEX
Pt1
Pt3
Pt2
TRANSMISSION POWER

FIG. 14A

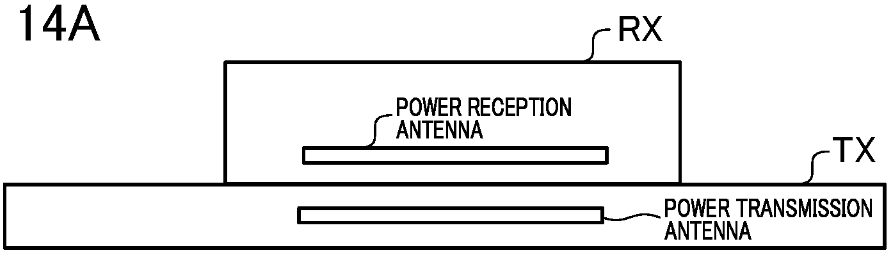


FIG. 14B

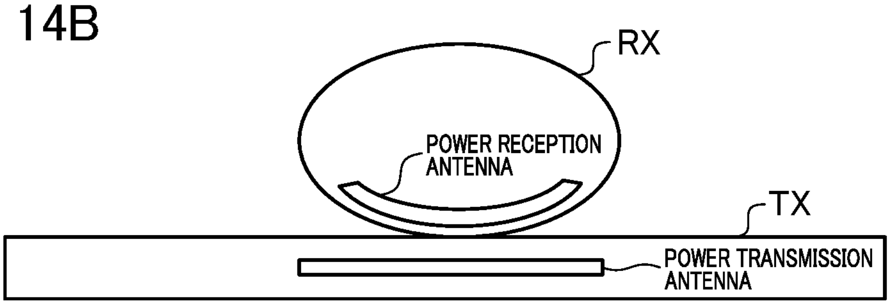


FIG. 14C

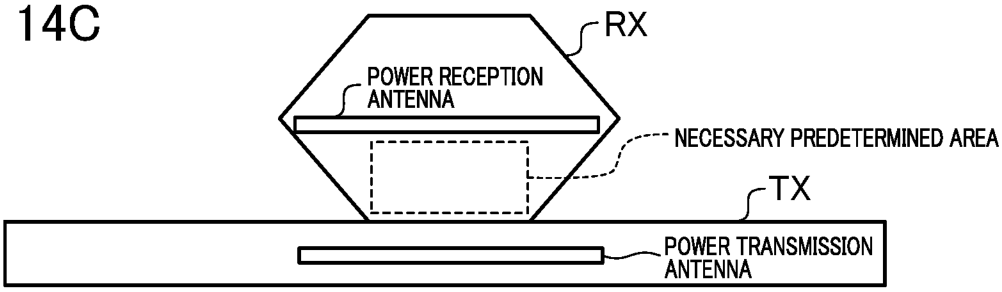


FIG. 14D

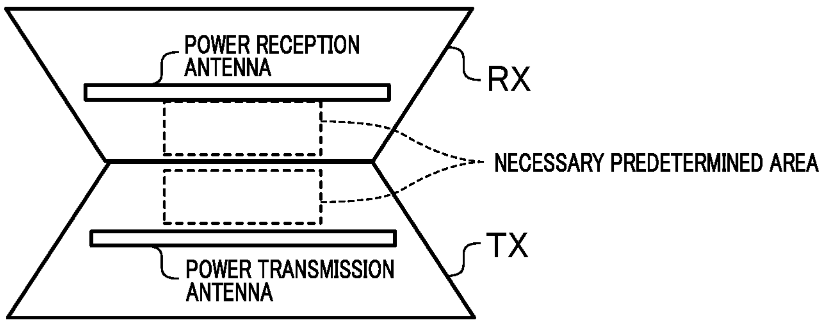

FIG. 15A

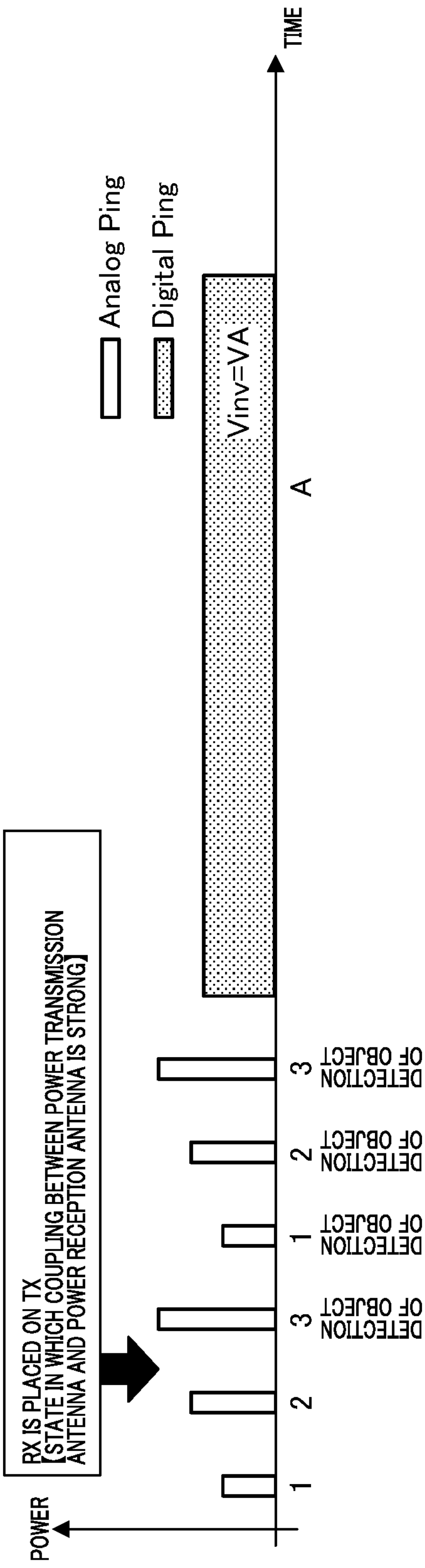


FIG. 15B

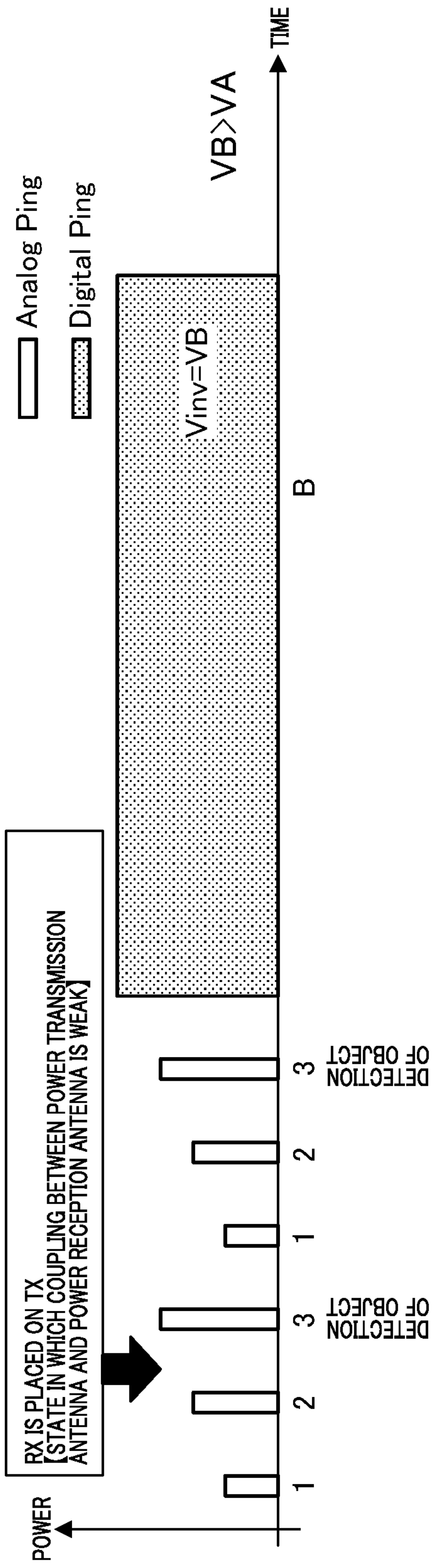

FIG. 16

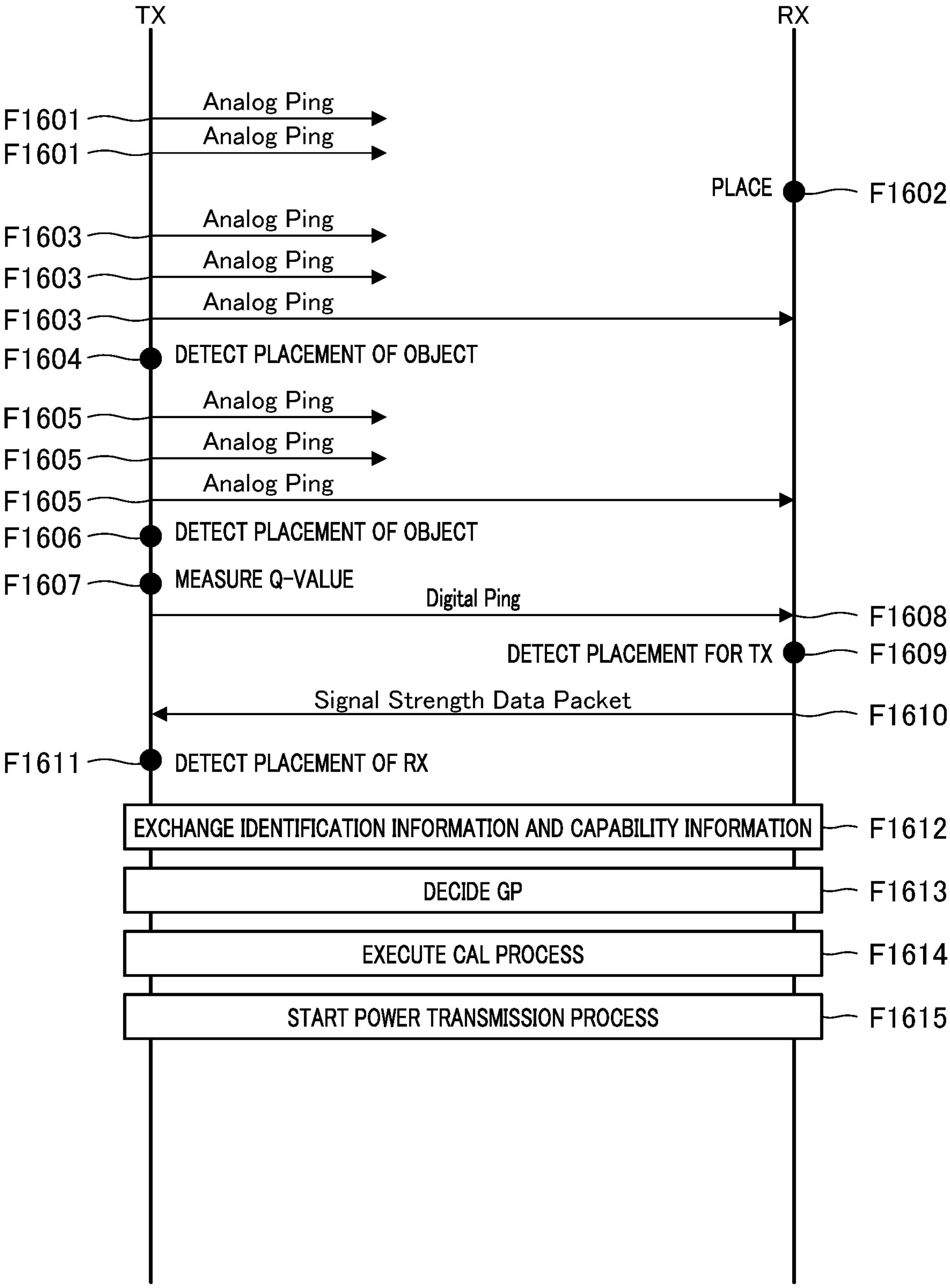
TX
RX
F1601
Analog Ping
F1601
Analog Ping
PLACE
F1602
F1603
Analog Ping
F1603
Analog Ping
F1603
Analog Ping
F1604
DETECT PLACEMENT OF OBJECT
F1605
Analog Ping
F1605
Analog Ping
F1605
Analog Ping
F1606
DETECT PLACEMENT OF OBJECT
F1607
MEASURE Q-VALUE
Digital Ping
F1608
DETECT PLACEMENT FOR TX
F1609
Signal Strength Data Packet
F1610
F1611
DETECT PLACEMENT OF RX
EXCHANGE IDENTIFICATION INFORMATION AND CAPABILITY INFORMATION
F1612
DECIDE GP
F1613
EXECUTE CAL PROCESS
F1614
START POWER TRANSMISSION PROCESS
F1615

FIG. 17

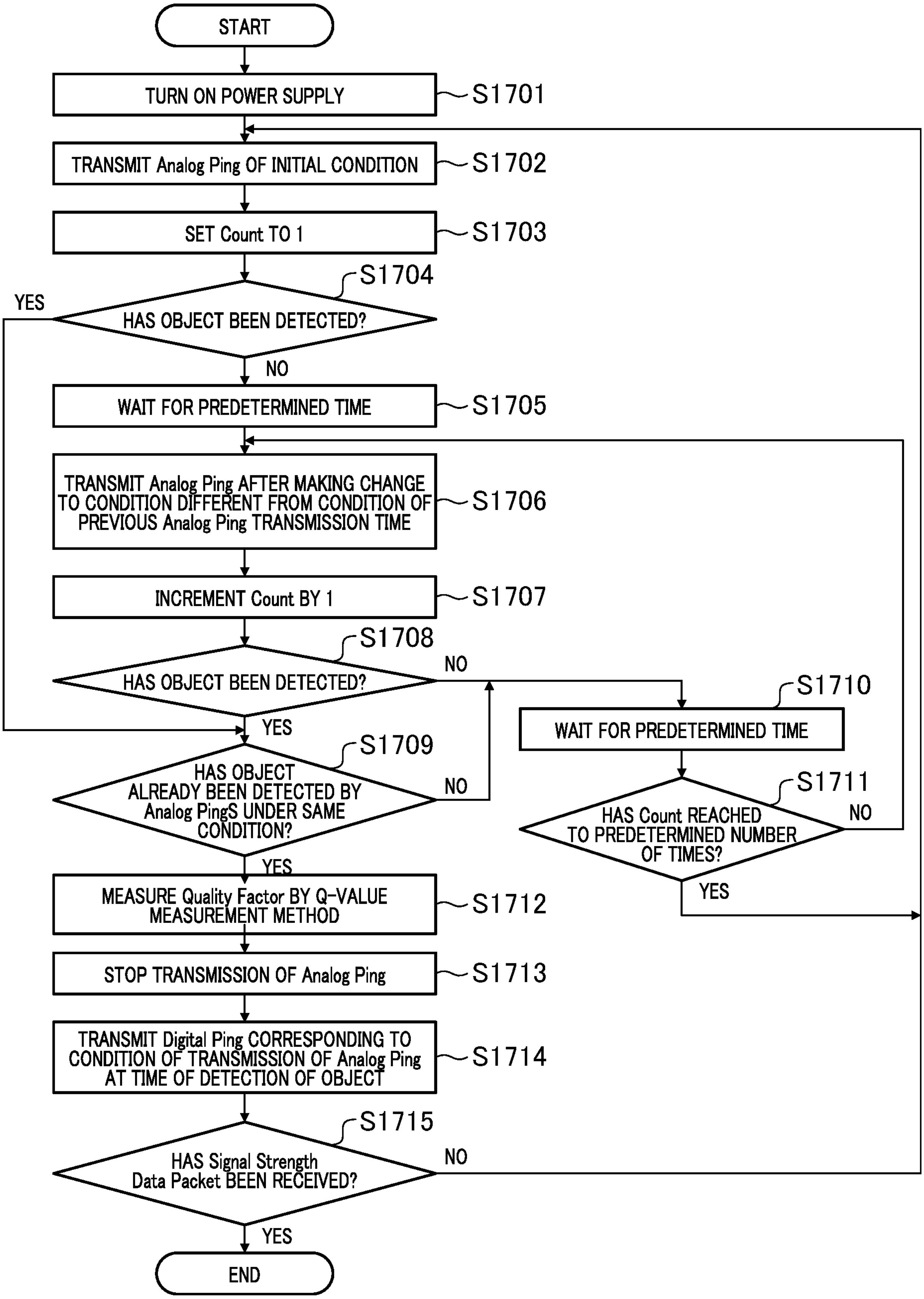
START
TURN ON POWER SUPPLY
S1701
TRANSMIT Analog Ping OF INITIAL CONDITION
S1702
SET Count TO 1
S1703
S1704
HAS OBJECT BEEN DETECTED?
YES
NO
WAIT FOR PREDETERMINED TIME
S1705
TRANSMIT Analog Ping AFTER MAKING CHANGE TO CONDITION DIFFERENT FROM CONDITION OF PREVIOUS Analog Ping TRANSMISSION TIME
S1706
INCREMENT Count BY 1
S1707
S1708
HAS OBJECT BEEN DETECTED?
NO
YES
S1710
WAIT FOR PREDETERMINED TIME
S1709
HAS OBJECT ALREADY BEEN DETECTED BY Analog PingS UNDER SAME CONDITION?
NO
S1711
HAS Count REACHED TO PREDETERMINED NUMBER OF TIMES?
NO
YES
YES
MEASURE Quality Factor BY Q-VALUE MEASUREMENT METHOD
S1712
STOP TRANSMISSION OF Analog Ping
S1713
TRANSMIT Digital Ping CORRESPONDING TO CONDITION OF TRANSMISSION OF Analog Ping AT TIME OF DETECTION OF OBJECT
S1714
S1715
HAS Signal Strength Data Packet BEEN RECEIVED?
NO
YES
END

FIG. 18A

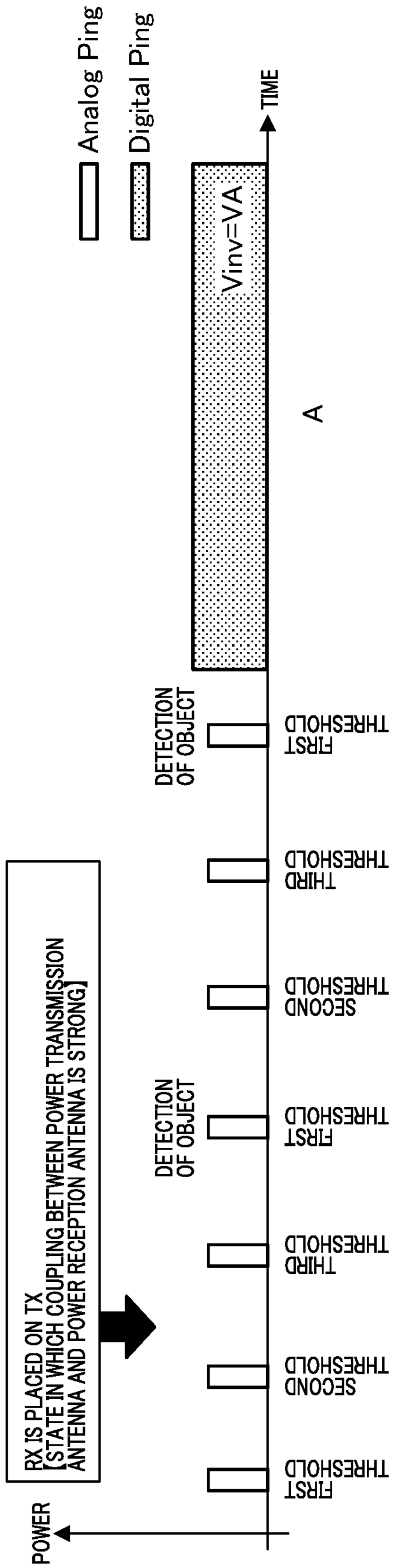


FIG. 18B

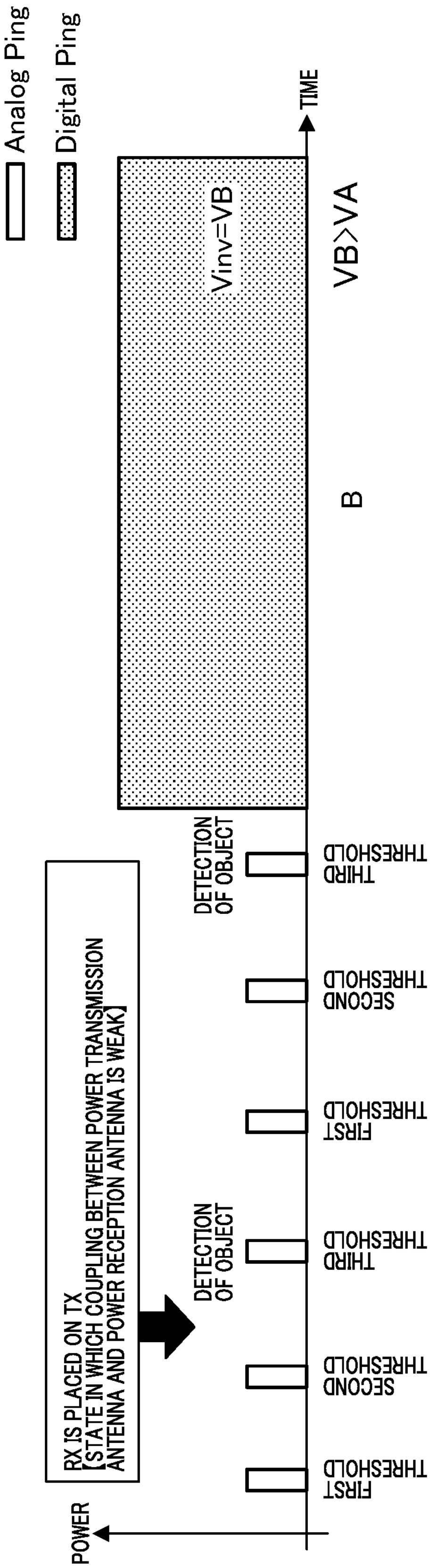

FIG. 19A

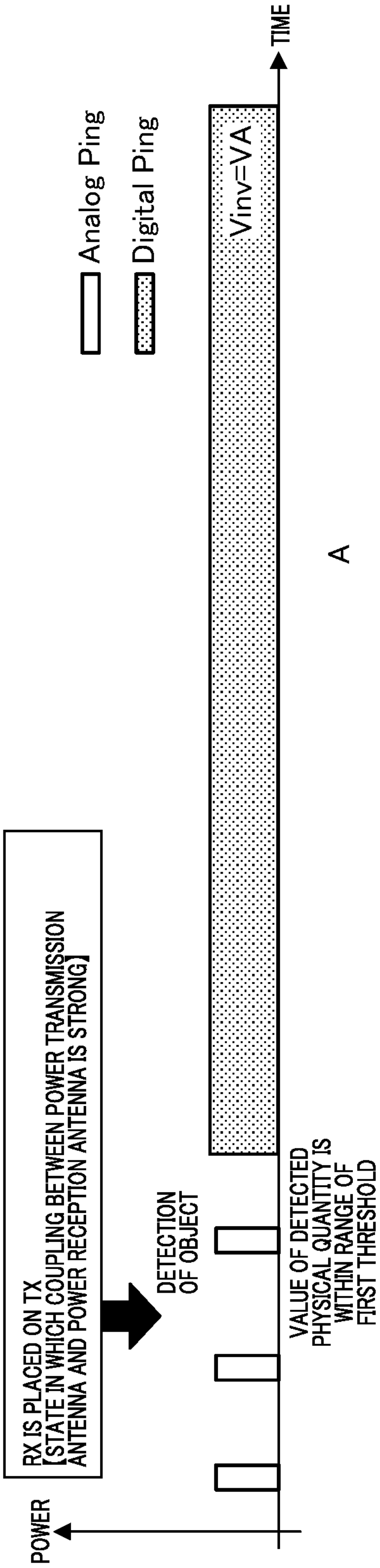


FIG. 19B

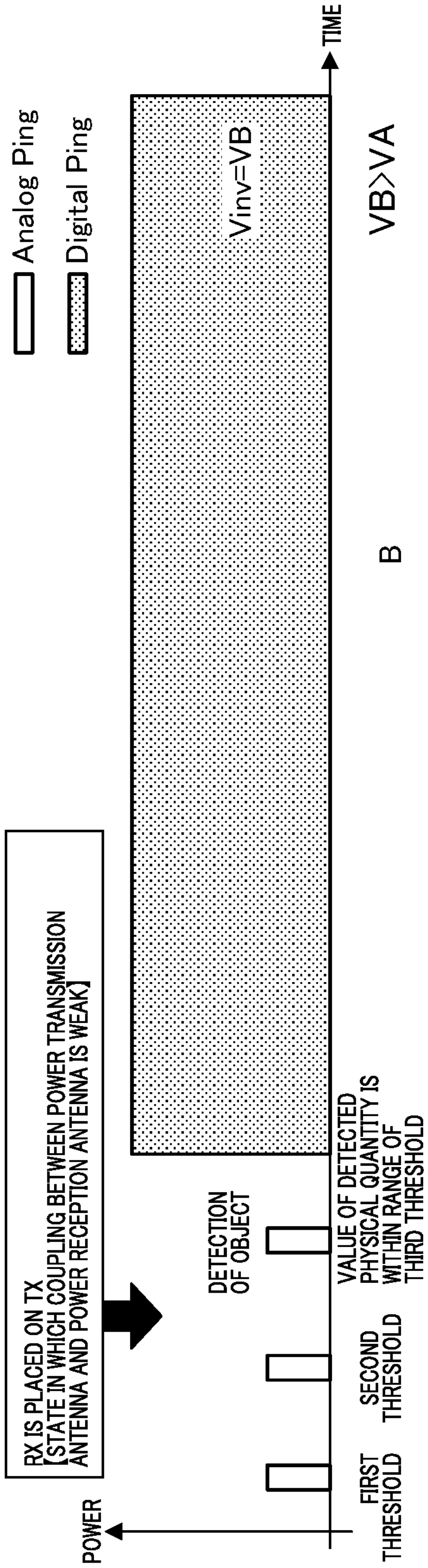

FIG. 20

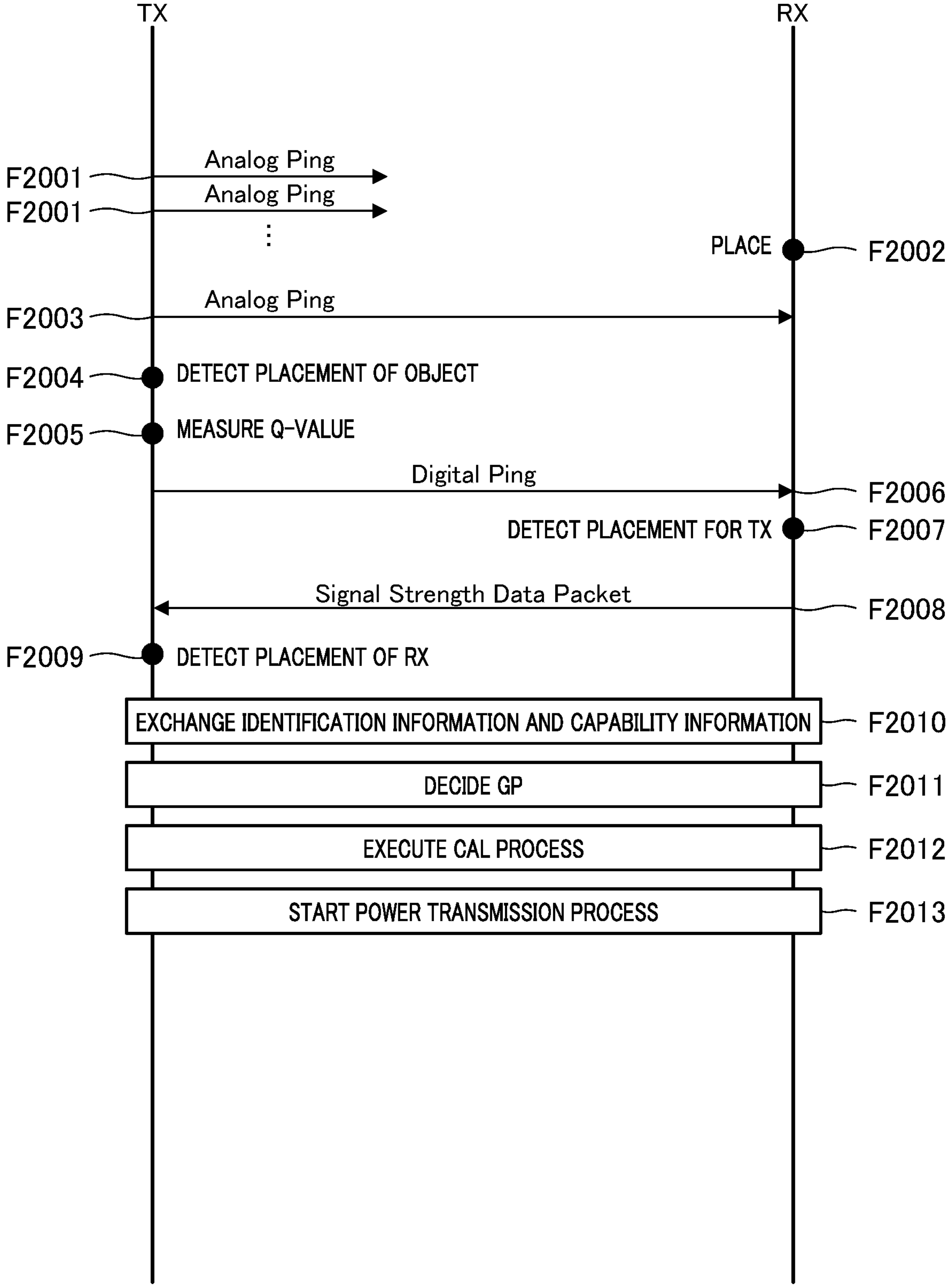
TX
RX
F2001
Analog Ping
F2001
Analog Ping
PLACE
F2002
F2003
Analog Ping
F2004
DETECT PLACEMENT OF OBJECT
F2005
MEASURE Q-VALUE
Digital Ping
F2006
DETECT PLACEMENT FOR TX
F2007
Signal Strength Data Packet
F2008
F2009
DETECT PLACEMENT OF RX
EXCHANGE IDENTIFICATION INFORMATION AND CAPABILITY INFORMATION
F2010
DECIDE GP
F2011
EXECUTE CAL PROCESS
F2012
START POWER TRANSMISSION PROCESS
F2013

FIG. 21

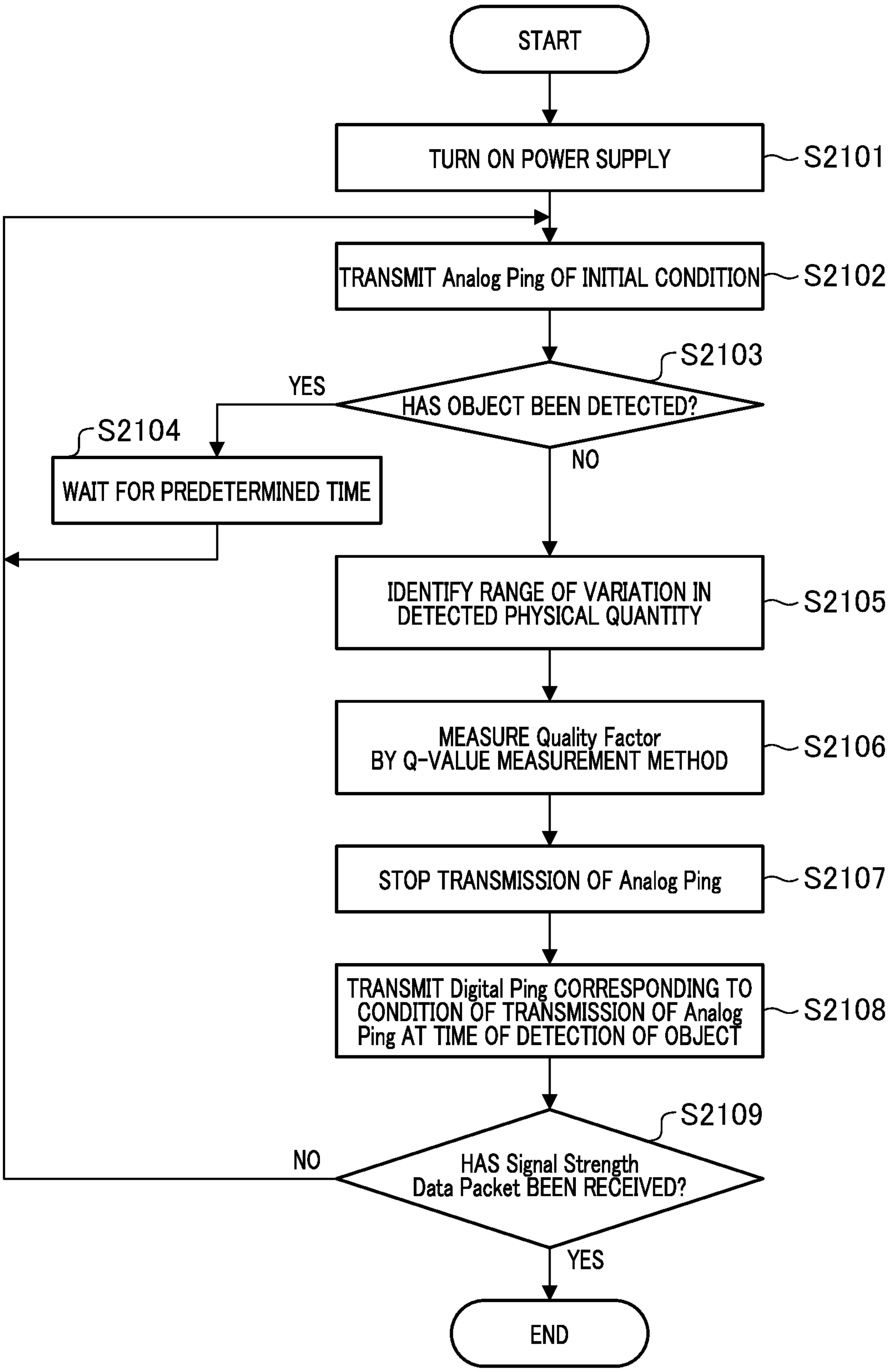
START
TURN ON POWER SUPPLY
S2101
TRANSMIT Analog Ping OF INITIAL CONDITION
S2102
S2103
HAS OBJECT BEEN DETECTED?
YES
NO
S2104
WAIT FOR PREDETERMINED TIME
IDENTIFY RANGE OF VARIATION IN DETECTED PHYSICAL QUANTITY
S2105
MEASURE Quality Factor BY Q-VALUE MEASUREMENT METHOD
S2106
STOP TRANSMISSION OF Analog Ping
S2107
TRANSMIT Digital Ping CORRESPONDING TO CONDITION OF TRANSMISSION OF Analog Ping AT TIME OF DETECTION OF OBJECT
S2108
S2109
HAS Signal Strength Data Packet BEEN RECEIVED?
NO
YES
END

FIG. 22A

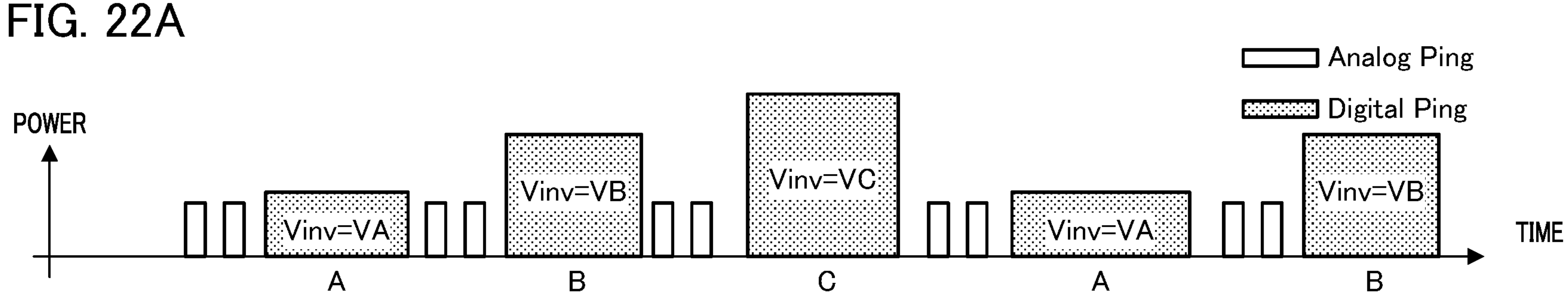


FIG. 22B

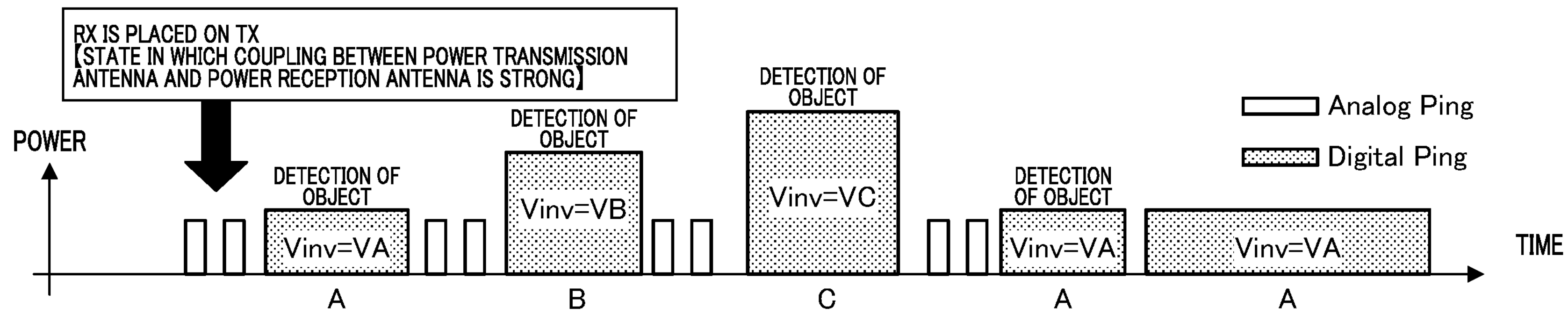


FIG. 22C

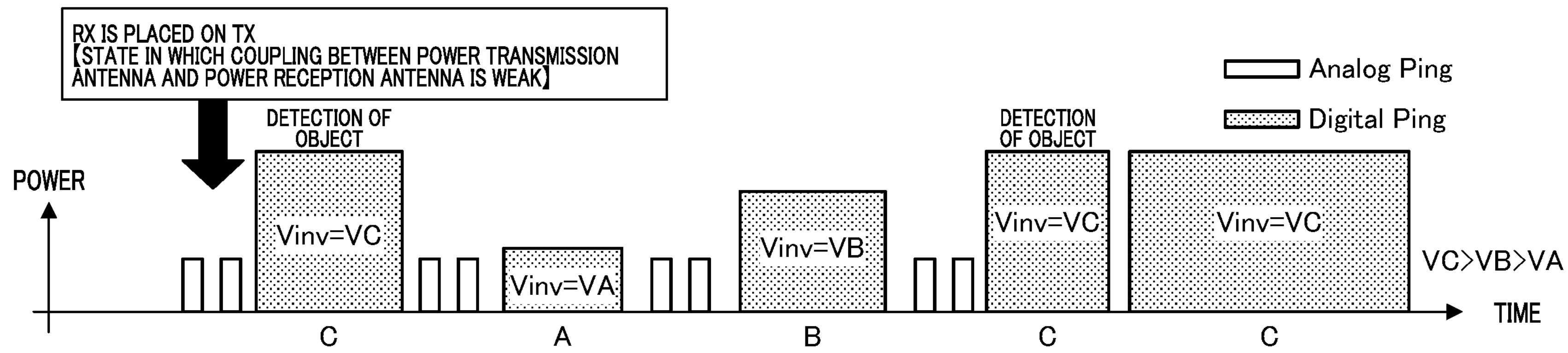

FIG. 23

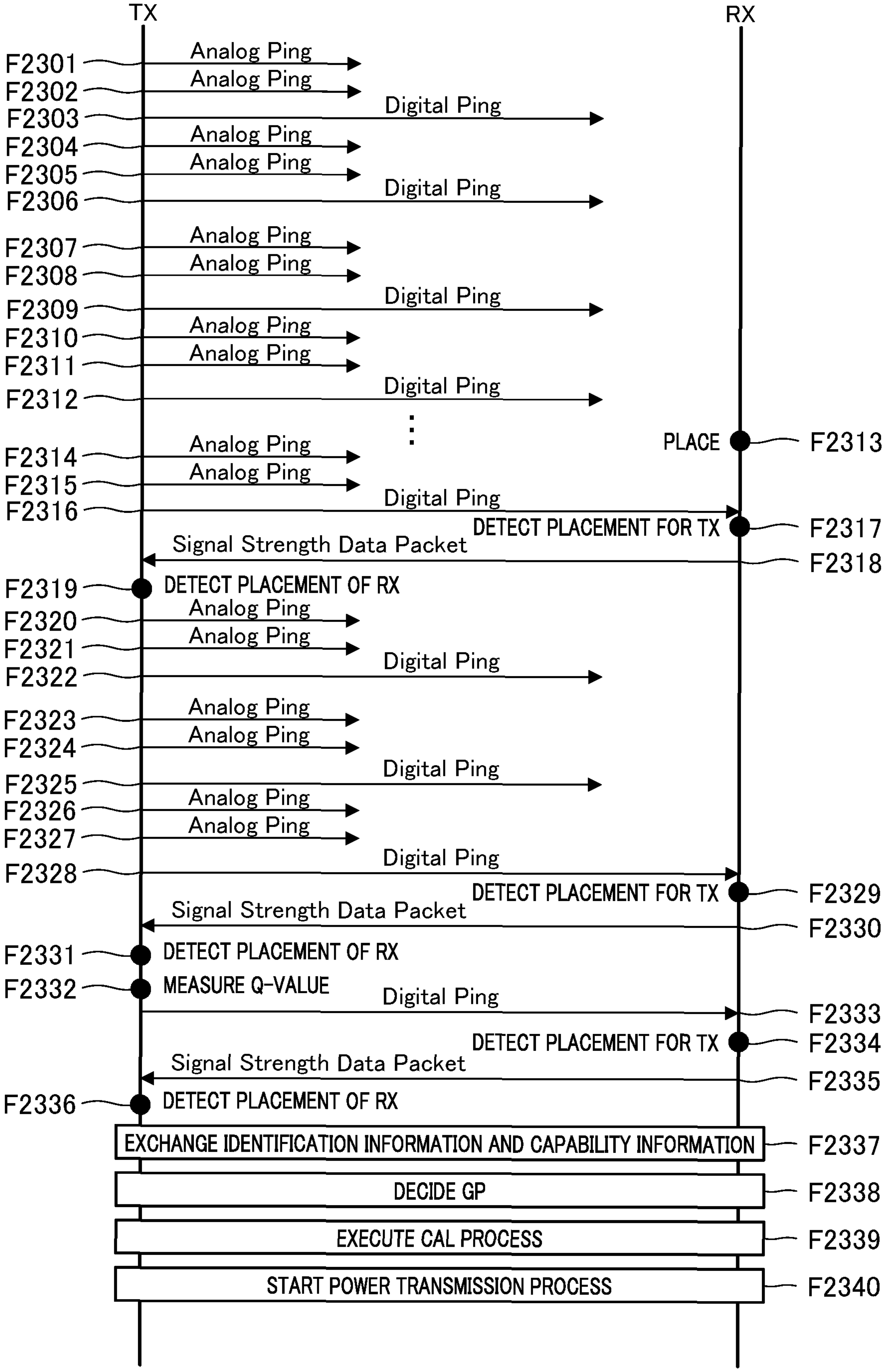
TX
RX
F2301
Analog Ping
F2302
Analog Ping
F2303
Digital Ping
F2304
Analog Ping
F2305
Analog Ping
F2306
Digital Ping
F2307
Analog Ping
F2308
Analog Ping
F2309
Digital Ping
F2310
Analog Ping
F2311
Analog Ping
F2312
Digital Ping
PLACE
F2313
F2314
Analog Ping
F2315
Analog Ping
F2316
Digital Ping
DETECT PLACEMENT FOR TX
F2317
Signal Strength Data Packet
F2318
F2319
DETECT PLACEMENT OF RX
F2320
Analog Ping
F2321
Analog Ping
F2322
Digital Ping
F2323
Analog Ping
F2324
Analog Ping
F2325
Digital Ping
F2326
Analog Ping
F2327
Analog Ping
F2328
Digital Ping
DETECT PLACEMENT FOR TX
F2329
Signal Strength Data Packet
F2330
F2331
DETECT PLACEMENT OF RX
F2332
MEASURE Q-VALUE
Digital Ping
F2333
DETECT PLACEMENT FOR TX
F2334
Signal Strength Data Packet
F2335
F2336
DETECT PLACEMENT OF RX
EXCHANGE IDENTIFICATION INFORMATION AND CAPABILITY INFORMATION
F2337
DECIDE GP
F2338
EXECUTE CAL PROCESS
F2339
START POWER TRANSMISSION PROCESS
F2340

FIG. 24

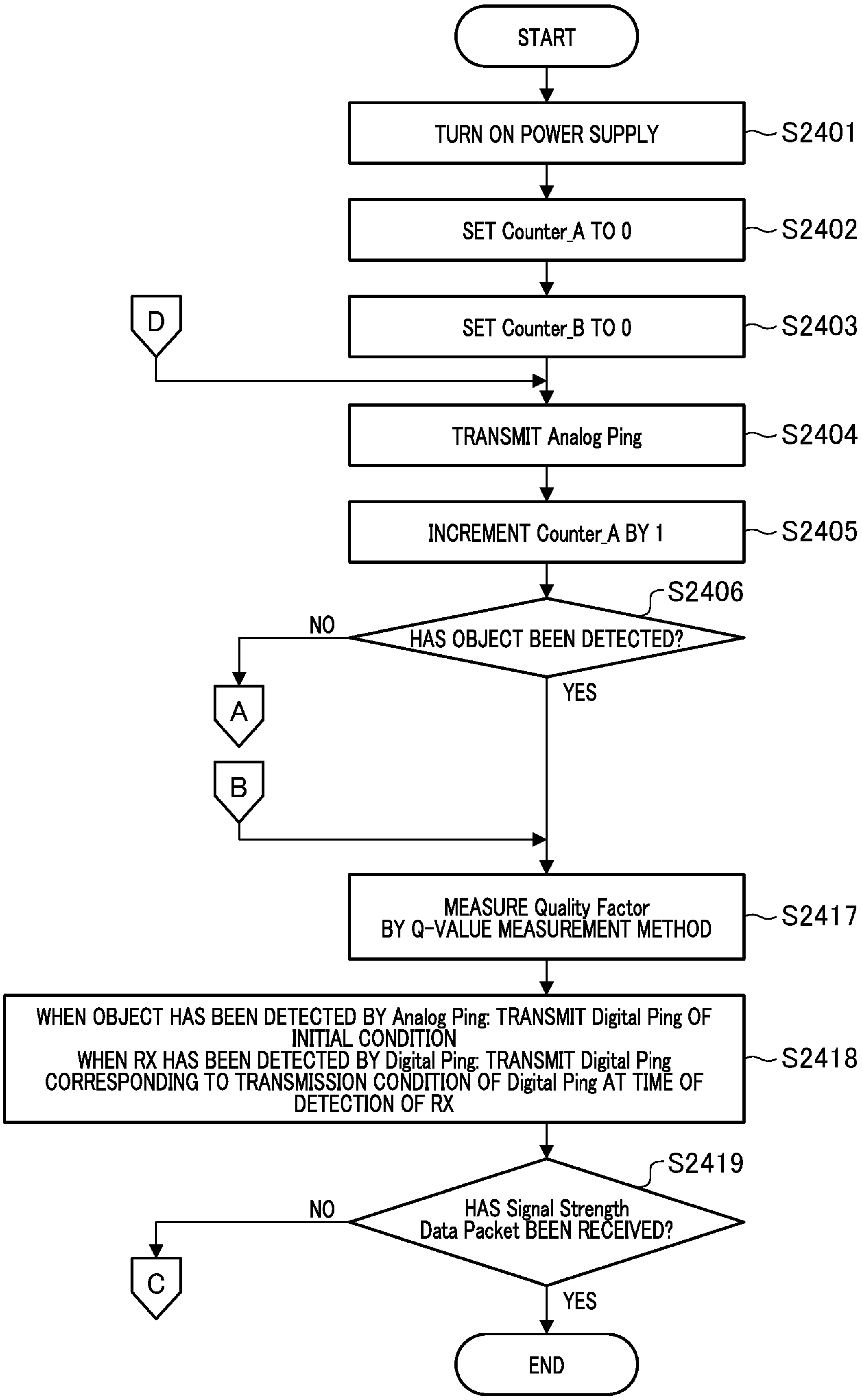
START
TURN ON POWER SUPPLY
S2401
SET Counter_A TO 0
S2402
D
SET Counter_B TO 0
S2403
TRANSMIT Analog Ping
S2404
INCREMENT Counter_A BY 1
S2405
S2406
NO
HAS OBJECT BEEN DETECTED?
YES
A
B
MEASURE Quality Factor
BY Q-VALUE MEASUREMENT METHOD
S2417
WHEN OBJECT HAS BEEN DETECTED BY Analog Ping: TRANSMIT Digital Ping OF INITIAL CONDITION
WHEN RX HAS BEEN DETECTED BY Digital Ping: TRANSMIT Digital Ping CORRESPONDING TO TRANSMISSION CONDITION OF Digital Ping AT TIME OF DETECTION OF RX
S2418
S2419
NO
HAS Signal Strength
Data Packet BEEN RECEIVED?
C
YES
END

FIG. 25

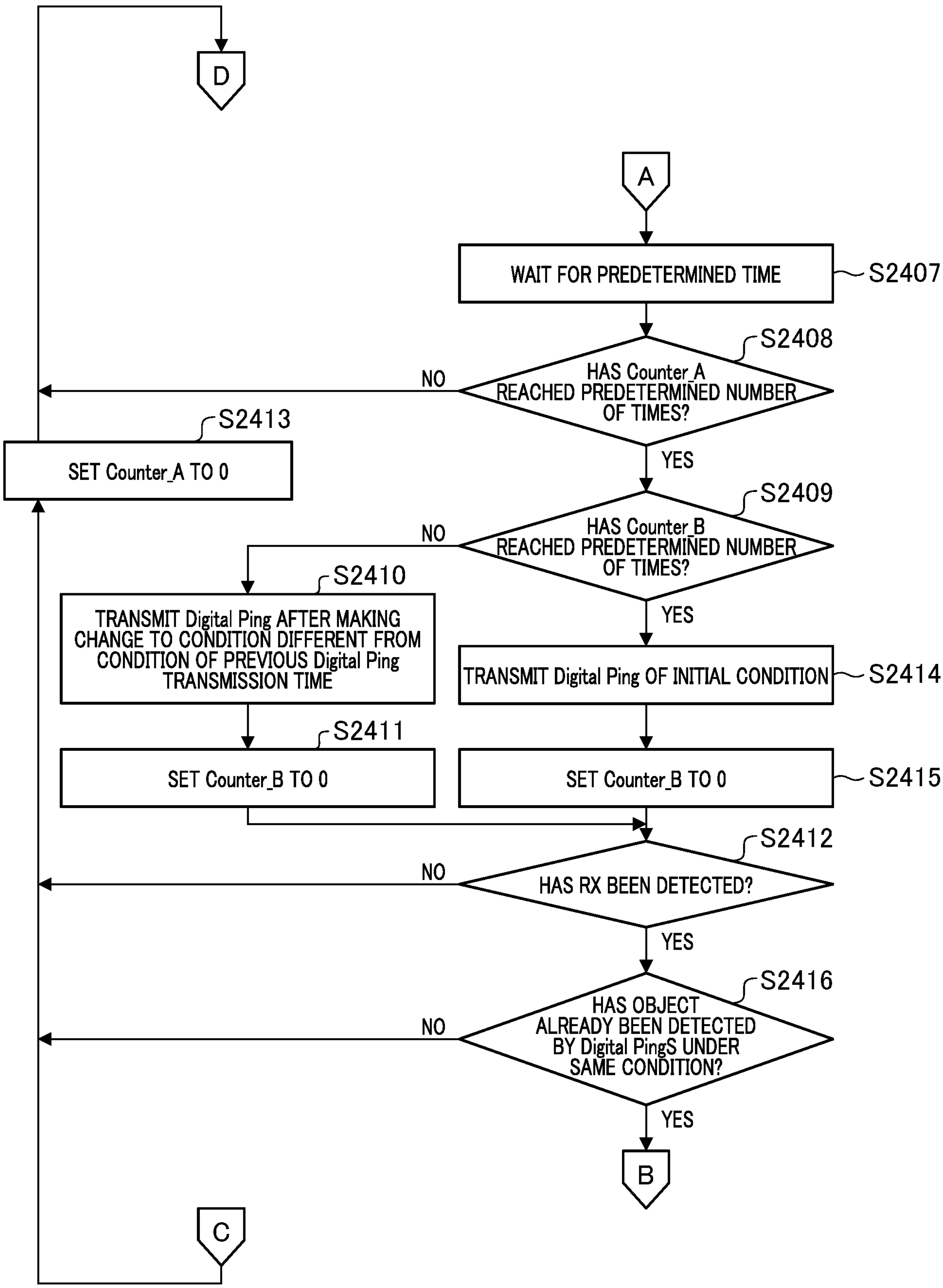
D
A
WAIT FOR PREDETERMINED TIME
S2407
HAS Counter_A REACHED PREDETERMINED NUMBER OF TIMES?
S2408
NO
YES
SET Counter_A TO 0
S2413
HAS Counter_B REACHED PREDETERMINED NUMBER OF TIMES?
S2409
NO
YES
TRANSMIT Digital Ping AFTER MAKING CHANGE TO CONDITION DIFFERENT FROM CONDITION OF PREVIOUS Digital Ping TRANSMISSION TIME
S2410
TRANSMIT Digital Ping OF INITIAL CONDITION
S2414
SET Counter_B TO 0
S2411
SET Counter_B TO 0
S2415
HAS RX BEEN DETECTED?
S2412
NO
YES
HAS OBJECT ALREADY BEEN DETECTED BY Digital PingS UNDER SAME CONDITION?
S2416
NO
YES
B
C

FIG. 26

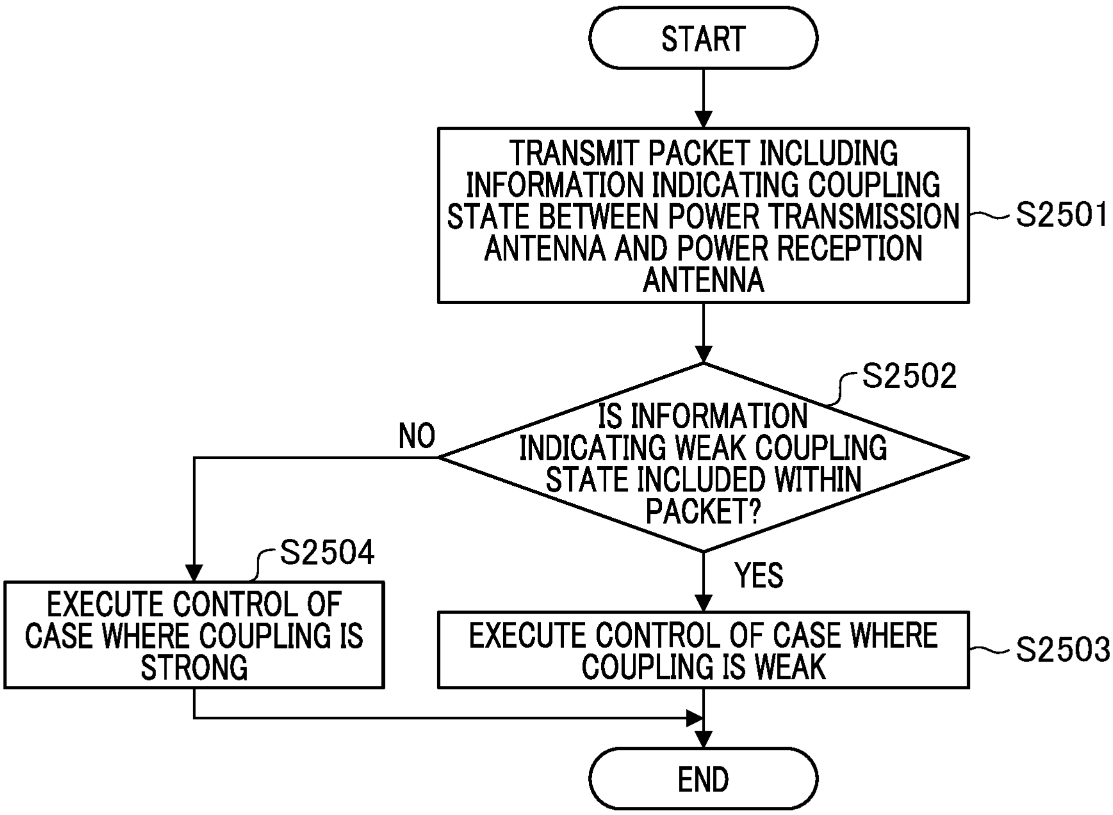
START
TRANSMIT PACKET INCLUDING INFORMATION INDICATING COUPLING STATE BETWEEN POWER TRANSMISSION ANTENNA AND POWER RECEPTION ANTENNA
S2501
S2502
IS INFORMATION INDICATING WEAK COUPLING STATE INCLUDED WITHIN PACKET?
NO
YES
S2504
EXECUTE CONTROL OF CASE WHERE COUPLING IS STRONG
EXECUTE CONTROL OF CASE WHERE COUPLING IS WEAK
S2503
END

FIG. 27

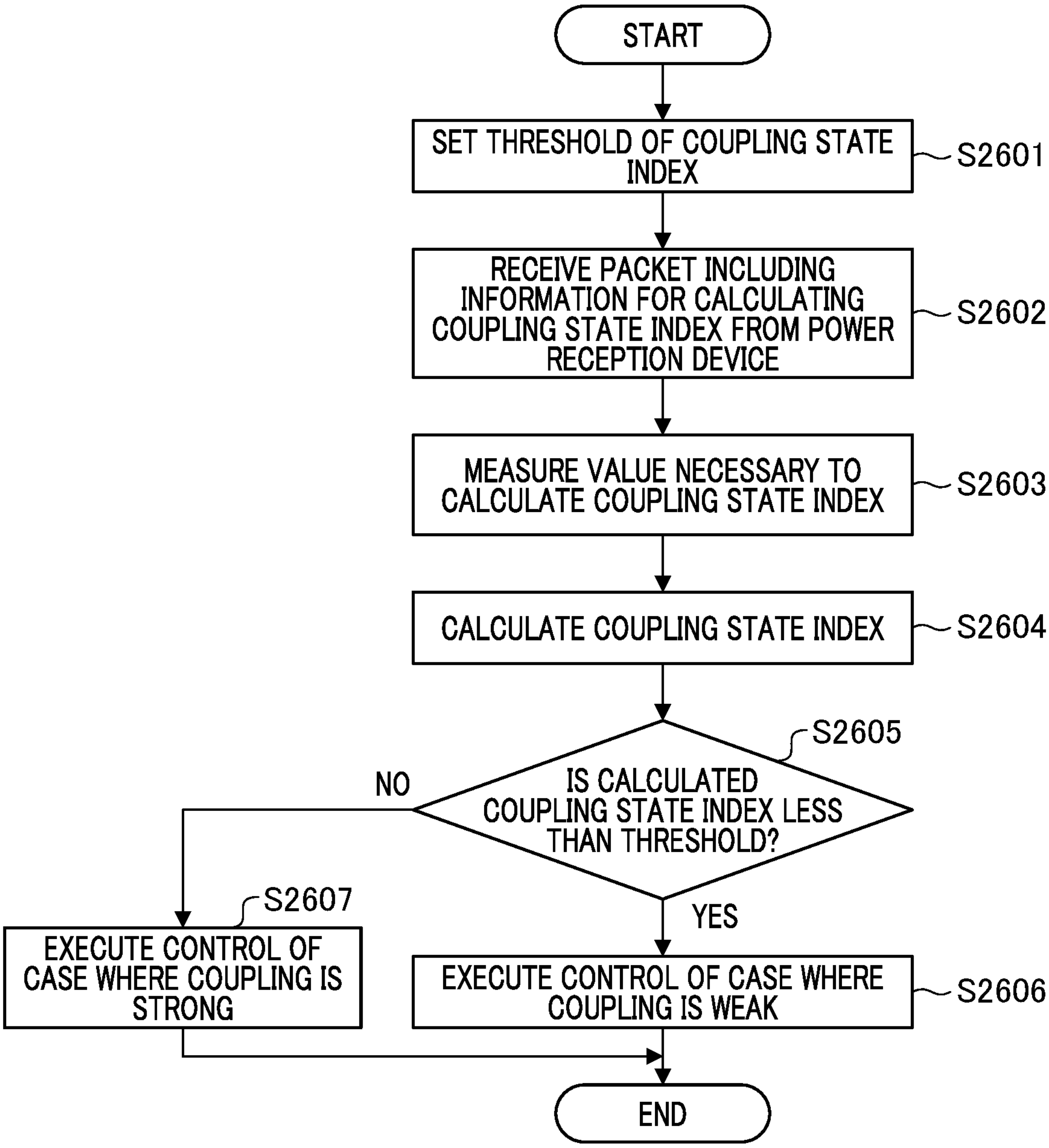
START
SET THRESHOLD OF COUPLING STATE INDEX
S2601
RECEIVE PACKET INCLUDING INFORMATION FOR CALCULATING COUPLING STATE INDEX FROM POWER RECEPTION DEVICE
S2602
MEASURE VALUE NECESSARY TO CALCULATE COUPLING STATE INDEX
S2603
CALCULATE COUPLING STATE INDEX
S2604
S2605
IS CALCULATED COUPLING STATE INDEX LESS THAN THRESHOLD?
NO
YES
S2607
EXECUTE CONTROL OF CASE WHERE COUPLING IS STRONG
EXECUTE CONTROL OF CASE WHERE COUPLING IS WEAK
S2606
END

FIG. 28

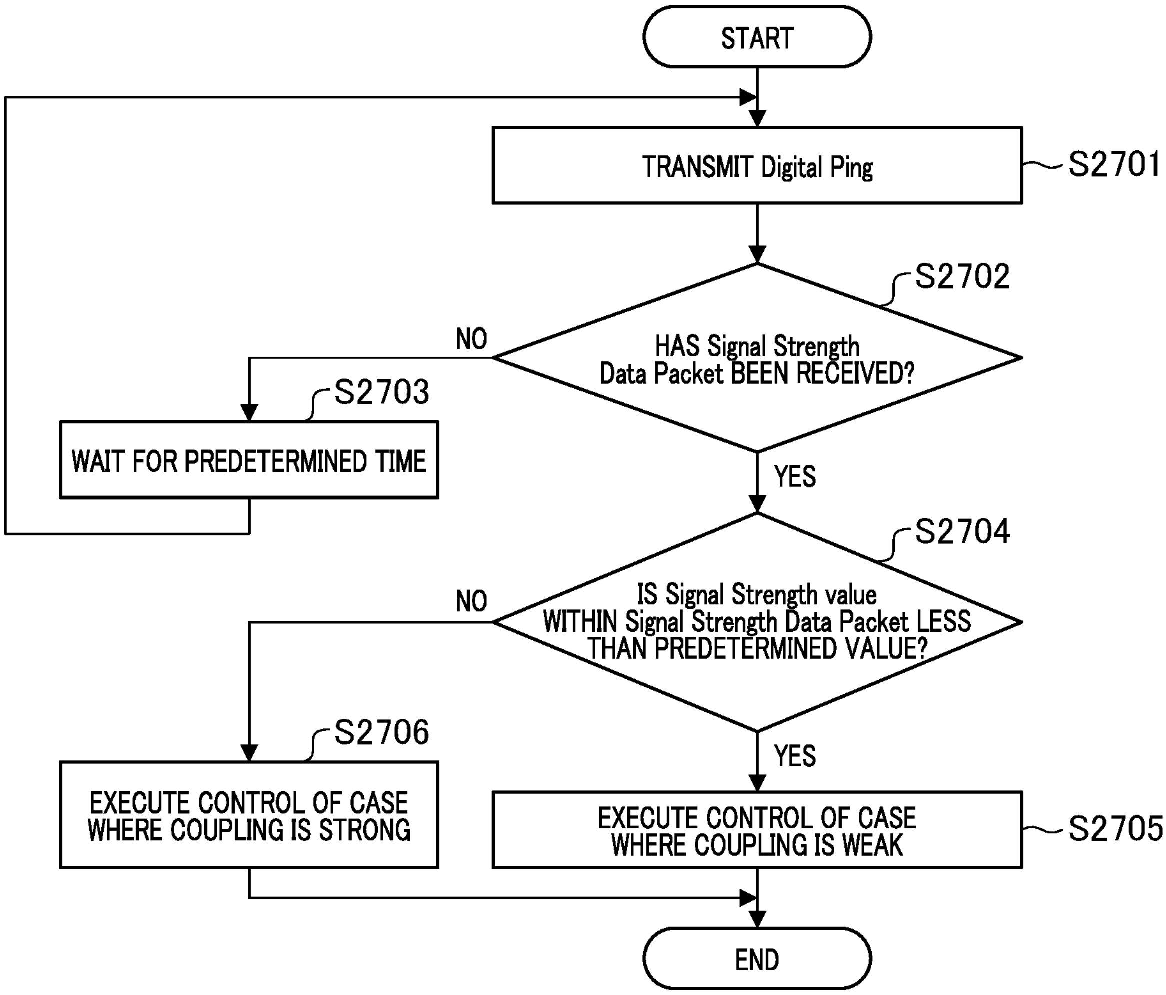
START
TRANSMIT Digital Ping
S2701
HAS Signal Strength Data Packet BEEN RECEIVED?
S2702
NO
WAIT FOR PREDETERMINED TIME
S2703
YES
IS Signal Strength value WITHIN Signal Strength Data Packet LESS THAN PREDETERMINED VALUE?
S2704
NO
EXECUTE CONTROL OF CASE WHERE COUPLING IS STRONG
S2706
YES
EXECUTE CONTROL OF CASE WHERE COUPLING IS WEAK
S2705
END

FIG. 29

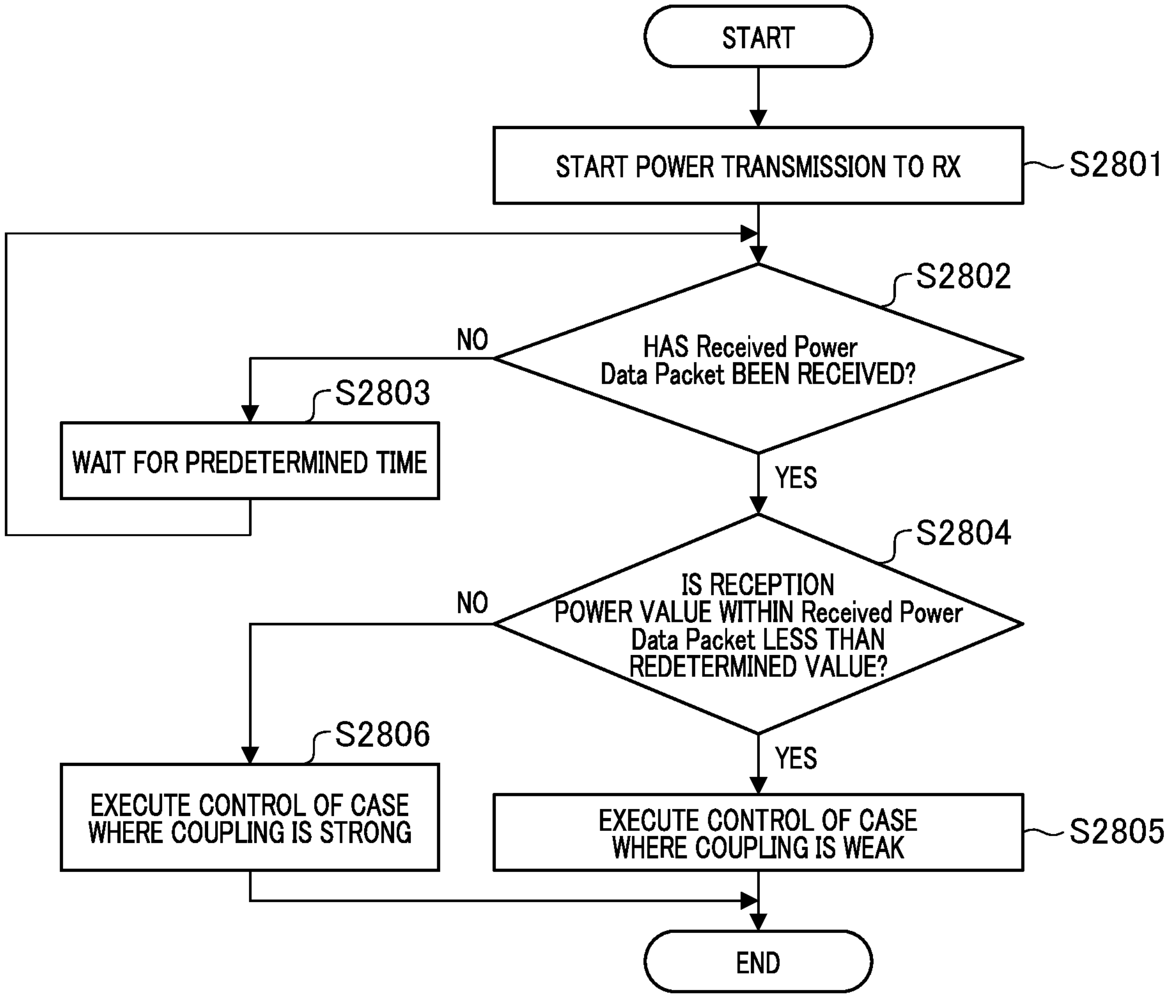
START
START POWER TRANSMISSION TO RX
S2801
S2802
HAS Received Power
Data Packet BEEN RECEIVED?
NO
S2803
WAIT FOR PREDETERMINED TIME
YES
S2804
IS RECEPTION
POWER VALUE WITHIN Received Power
Data Packet LESS THAN
REDETERMINED VALUE?
NO
S2806
EXECUTE CONTROL OF CASE
WHERE COUPLING IS STRONG
YES
EXECUTE CONTROL OF CASE
WHERE COUPLING IS WEAK
S2805
END

**INTERNATIONAL SEARCH REPORT**

International application No.
**PCT/JP2023/027832**

**A. CLASSIFICATION OF SUBJECT MATTER**

***H02J 50/10***(2016.01)i; ***H02J 50/80***(2016.01)i
FI: H02J50/80; H02J50/10

According to International Patent Classification (IPC) or to both national classification and IPC

**B. FIELDS SEARCHED**

Minimum documentation searched (classification system followed by classification symbols)

H02J50/10; H02J50/80

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2018-078700 A (ROHM CO., LTD.) 17 May 2018 (2018-05-17) paragraphs [0001]-[0104], fig. 1-7 | 1-6, 26, 29 |
| X | JP 2021-151124 A (CANON INC.) 27 September 2021 (2021-09-27) paragraphs [0001]-[0117], fig. 1-6 | 7-12, 15, 27, 30 |
| Y | | 1-6, 26, 29 |
| A | | 13-14, 16-25, 28, 31 |
| A | US 2018/0097403 A1 (HANRIM POSTECH CO., LTD.) 05 April 2018 (2018-04-05) entire text, all drawings | 1-31 |
| A | JP 2009-268310 A (SONY CORP.) 12 November 2009 (2009-11-12) entire text, all drawings | 1-31 |
| A | JP 2015-089267 A (FUNAI ELECTRIC CO., LTD.) 07 May 2015 (2015-05-07) entire text, all drawings | 1-31 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 October 2023** | **17 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/027832**

| Patent document cited in search report | Publication date (day/month/year) | Patent family member(s) | Publication date (day/month/year) |
|---|---|---|---|
| JP 2018-078700 A | 17 May 2018 | US 2018/0131243 A1<br>paragraphs [0001]-[0127], fig. 1-7 | |
| JP 2021-151124 A | 27 September 2021 | US 2021/0296941 A1<br>paragraphs [0001]-[0132], fig. 1-6 | |
| US 2018/0097403 A1 | 05 April 2018 | WO 2016/153280 A1<br>entire text, all drawings<br>KR 10-2016-0114490 A | |
| JP 2009-268310 A | 12 November 2009 | US 2009/0271047 A1<br>entire text, all drawings | |
| JP 2015-089267 A | 07 May 2015 | US 2015/0115731 A1<br>entire text, all drawings<br>EP 2868492 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017038509 A
- JP 2022150646 A